(19)

Europäisches
Patentamt

European
Patent Office

Office européen
des brevets

(11) **EP 4 478 621 A1**

(12) **EUROPEAN PATENT APPLICATION**
published in accordance with Art. 153(4) EPC

(43) Date of publication:
**18.12.2024 Bulletin 2024/51**

(21) Application number: **23762857.3**

(22) Date of filing: **28.02.2023**

(51) International Patent Classification (IPC):
**H04B 7/0456** (2017.01)

(52) Cooperative Patent Classification (CPC):
**H04B 7/0456; H04B 7/06**

(86) International application number:
**PCT/CN2023/078647**

(87) International publication number:
**WO 2023/165458 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.03.2022 CN 202210196169**

(71) Applicant: **Huawei Technologies Co., Ltd.
Shenzhen, Guangdong 518129 (CN)**

(72) Inventors:
• LI, Ting
  **Shenzhen, Guangdong 518129 (CN)**
• WANG, Xiaohan
  **Shenzhen, Guangdong 518129 (CN)**
• JIN, Huangping
  **Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **CHANNEL STATE INFORMATION FEEDBACK METHOD AND COMMUNICATION APPARATUS**

(57)     This application provides a channel state information feedback method and a communication apparatus. The method includes: A first apparatus generates indication information, and sends the indication information. The indication information is used to determine at least two precoding submatrices. Different precoding submatrices correspond to different port groups, and the different port groups may correspond to different stations. According to the channel state information feedback method provided in this application, the first apparatus may indicate the information for determining the at least two precoding submatrices, so that coherent joint transmission can be performed between a plurality of stations.

FIG. 3

## Description

This application claims priority to Chinese Patent Application No. 202210196169.3, filed with the China National Intellectual Property Administration on March 1, 2022 and entitled "CHANNEL STATE INFORMATION FEEDBACK METHOD AND COMMUNICATION APPARATUS", which is incorporated herein by reference in its entirety.

## TECHNICAL FIELD

This application relates to the communication field, and more specifically, to a channel state information feedback method and a communication apparatus.

## BACKGROUND

In a massive multiple-input multiple-output (massive multiple-input multiple-output, massive MIMO) technology, before sending data to a user, a network device may precode the data to reduce interference between a plurality of users and interference between a plurality of signal flows of a same user, to improve signal quality and improve spectrum utilization. A precoding matrix used by the network device to precode the data may be obtained from channel state information fed back by user equipment. To improve user experience, a multi-station coordination manner may be used, that is, a plurality of network devices may serve a same user. In this scenario, how the user equipment feeds back channel state information to enable coherent joint transmission between a plurality of stations is a problem that needs to be resolved currently.

## SUMMARY

This application provides a channel state information feedback method and a communication apparatus, to enable coherent joint transmission between a plurality of stations.

According to a first aspect, a channel state information feedback method is provided. The method may be performed by a first apparatus. The first apparatus may be a terminal device, or may be a part (for example, a chip or a chip system) configured in the terminal device. This is not limited in this application. The method includes: The first apparatus generates first indication information. The first indication information indicates a precoding matrix. The precoding matrix includes a first precoding submatrix and a second precoding submatrix. The first precoding submatrix corresponds to a first port group, and the second precoding submatrix corresponds to a second port group. The first apparatus sends the first indication information.

Based on the foregoing solution, the first apparatus can enable coherent joint transmission between a plurality of stations by indicating at least two precoding submatrices. Different precoding submatrices correspond to different port groups, and the different port groups may correspond to different stations.

With reference to the first aspect, in some implementations of the first aspect, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M1 frequency domain basis vectors, and the T2 linear combination coefficients are used to determine the second precoding submatrix. L1, M1, T1, L2, and T2 are all positive integers.

Based on the foregoing solution, the first apparatus jointly indicates basis vectors and linear combination coefficients that correspond to different port groups, so that signaling overheads for feeding back channel state information can be reduced. In addition, the different port groups may correspond to different quantities of basis vectors (including spatial domain basis vectors) and different quantities of linear combination coefficients. Such non-uniform overhead allocation manner can improve overall feedback precision of the precoding matrix.

With reference to the first aspect, in some implementations of the first aspect, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

Based on the foregoing solution, the first apparatus jointly indicates basis vectors and linear combination coefficients that correspond to different port groups, so that signaling overheads for feeding back channel state information can be reduced. In addition, the different port groups may correspond to different quantities of basis vectors (including spatial domain basis vectors and frequency domain basis vectors) and different quantities of linear combination coefficients. Such non-uniform overhead allocation manner can improve overall feedback precision of the precoding matrix.

With reference to the first aspect, in some implementations of the first aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

Based on the foregoing solution, the first apparatus selects a part of the linear combination coefficients for reporting, and the first port group and the second port group share a same group of frequency domain basis vectors, so that signaling overheads for feeding back channel state information can be reduced.

With reference to the first aspect, in some implementations of the first aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

Based on the foregoing solution, the first apparatus selects a part of the linear combination coefficients for reporting, so that signaling overheads for feeding back channel state information can be reduced.

With reference to the first aspect, in some implementations of the first aspect, the first apparatus sends second indication information. The second indication information indicates at least one of the following: values of L1, L2, M1, T1, and T2.

Based on the foregoing solution, the first apparatus feeds back quantities of basis vectors corresponding to different port groups and/or quantities of linear combination coefficients corresponding to the different port groups, to help a receive end of the second indication information identify the basis vectors and/or the linear combination coefficients that correspond to the different port groups and that are indicated by the first indication information.

With reference to the first aspect, in some implementations of the first aspect, the second indication information further indicates a value of M2.

Based on the foregoing solution, when the first port group and the second port group correspond to different frequency domain basis vectors, the first apparatus further indicates the value of M2 to help a receive end of the second indication information identify frequency domain basis vectors that correspond to different port groups and that are indicated by the first indication information.

With reference to the first aspect, in some implementations of the first aspect, before the first apparatus sends the second indication information, the first apparatus receives third indication information. The third indication information indicates at least one of the following: a quantity L of spatial domain basis vectors, a quantity M of frequency domain basis vectors, and a quantity T of linear combination coefficients, where L, M, and T are all positive integers.

Based on the foregoing solution, the third indication information indicates a maximum quantity of basis vectors that is fed back by the first apparatus and/or a maximum quantity of linear combination coefficients that is fed back by the first apparatus. The first apparatus can flexibly allocate, based on the quantity of basis vectors and/or the quantity of linear combination coefficients that are/is indicated by the third indication information, a quantity of basis vectors corresponding to each port group and/or a quantity of linear combination coefficients corresponding to each port group, so that the first apparatus has more freedom to allocate feedback overheads, and overall feedback precision of the precoding matrix is improved.

With reference to the first aspect, in some implementations of the first aspect, the first apparatus receives fourth indication information. The fourth indication information indicates a quantity of bits in a bitmap. The quantity of bits in the bitmap indicates a maximum quantity of bits occupied by a linear combination coefficient bitmap corresponding to at least one precoding submatrix included in the precoding matrix.

Based on the foregoing solution, the maximum quantity that is of bits occupied by the linear combination coefficient bitmap and that is indicated by the fourth indication information can limit a quantity that is of bits of a linear combination coefficient bitmap and that needs to be fed back by the first apparatus, to limit feedback overheads of channel state information.

With reference to the first aspect, in some implementations of the first aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

It should be understood that the plurality of port groups may be port groups corresponding to all apparatuses for coherent joint transmission, or may be port groups corresponding to a plurality of precoding submatrices included in the precoding matrix indicated by the first indication information. The first apparatus may flexibly allocate, based on the maximum average quantity/maximum total quantity of basis vectors corresponding to the plurality of port groups that is indicated by the third indication information and/or the maximum average quantity/maximum total quantity of linear combination coefficients corresponding to the plurality of port groups that is indicated by the third indication information, a quantity of basis vectors corresponding to each port group and/or a quantity of linear combination coefficients corresponding to each port group, so that the first apparatus has more freedom to allocate feedback overheads, and overall feedback precision of the precoding matrix is improved.

With reference to the first aspect, in some implementations of the first aspect, the first indication information includes third information indicating the T1 linear combination coefficients and the T2 linear combination coefficients. The third information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

Based on the foregoing solution, the first apparatus jointly reports the amplitude information of the linear combination coefficients of the plurality of port groups in a differential form, so that an energy difference between channel information of different port groups can be reflected, and coherent joint transmission is enabled, to avoid losses of relative information between channels.

With reference to the first aspect, in some implementations of the first aspect, the first indication information includes fourth information indicating the T1 linear combination coefficients and the T2 linear combination coefficients. The fourth information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

Based on the foregoing solution, the first apparatus jointly reports the amplitude information of the linear combination coefficients of the plurality of port groups in a differential form, so that an energy difference between channel information of different port groups can be reflected, and coherent joint transmission is enabled, to avoid losses of relative information between channels.

According to a second aspect, a channel state information feedback method is provided. The method may be performed by a first apparatus. The first apparatus may be a terminal device, or may be a part (for example, a chip or a chip system) configured in the terminal device. This is not limited in this application. The method includes: The first apparatus receives third indication information. The third indication information indicates at least one of the following: a quantity L of spatial domain basis vectors, a quantity M of frequency domain basis vectors, and a quantity T of linear combination coefficients. The quantity L of spatial domain basis vectors, the quantity M of frequency domain basis vectors, and the quantity T of linear combination coefficients correspond to at least two port groups. The first apparatus determines first indication information based on the third indication information. The first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M1 frequency domain basis vectors, and the T2 linear combination coefficients are used to determine a second precoding submatrix. The first precoding submatrix corresponds to a first port group, and the second precoding submatrix corresponds to a second port group. L, M, T, L1, M1, T1, L2, and T2 are all positive integers.

Based on the foregoing solution, the third indication information indicates a maximum quantity of basis vectors that is fed back by the first apparatus and/or a maximum quantity of linear combination coefficients that is fed back by the first apparatus. The first apparatus can flexibly allocate, based on the quantity of basis vectors and/or the quantity of linear combination coefficients that are/is indicated by the third indication information, a quantity of basis vectors corresponding to each port group and/or a quantity of linear combination coefficients corresponding to each port group, so that the first apparatus has more freedom to allocate feedback overheads, and overall feedback precision of a precoding matrix is improved. Different port groups correspond to different precoding submatrices, and the different port groups may correspond to different stations.

With reference to the second aspect, in some implementations of the second aspect, the first apparatus determines first indication information based on the third indication information. The first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M2 frequency domain basis vectors, and the T2 linear combination coefficients are used to determine a second precoding submatrix. L1, M1, T1, L2, M2, and T2 are all positive integers.

With reference to the second aspect, in some implementations of the second aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

With reference to the second aspect, in some implementations of the second aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

With reference to the second aspect, in some implementations of the second aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

It should be understood that the plurality of port groups may be port groups corresponding to all apparatuses for coherent joint transmission, or may be port groups corresponding to a plurality of precoding submatrices included in a precoding matrix indicated by the first indication information. The first apparatus may flexibly allocate, based on the maximum average quantity/maximum total quantity of basis vectors corresponding to the plurality of port groups that is indicated by the third indication information and/or the maximum average quantity/maximum total quantity of linear combination coefficients corresponding to the plurality of port groups that is indicated by the third indication information, a quantity of basis vectors corresponding to each port group and/or a quantity of linear combination coefficients corresponding to each port group, so that the first apparatus has more freedom to allocate feedback overheads, and overall feedback precision of a precoding matrix is improved.

According to a third aspect, a channel state information feedback method is provided. The method may be performed by a second apparatus. The method includes: The second apparatus receives first indication information. The first indication information indicates a precoding matrix. The precoding matrix includes a first precoding submatrix and a second precoding submatrix. The first precoding submatrix corresponds to a first port group, and the second precoding submatrix corresponds to a second port group. The second apparatus determines the precoding matrix based on the first indication information.

Based on the foregoing solution, the first indication information enables coherent joint transmission between a plurality of stations by indicating at least two precoding submatrices. Different precoding submatrices correspond to different port groups, and the different port groups may correspond to different stations.

With reference to the third aspect, in some implementations of the third aspect, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M1 frequency domain basis vectors, and the T2 linear combination coefficients are used to determine the second precoding submatrix. L1, M1, T1, L2, and T2 are all positive integers.

Based on the foregoing solution, the first indication information jointly indicates basis vectors and linear combination coefficients that correspond to different port groups, so that signaling overheads for feeding back channel state information can be reduced. In addition, the different port groups may correspond to different quantities of basis vectors (including spatial domain basis vectors) and different quantities of linear combination coefficients. Such non-uniform overhead allocation manner can improve overall feedback precision of the precoding matrix.

With reference to the third aspect, in some implementations of the third aspect, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

Based on the foregoing solution, the first indication information jointly indicates basis vectors and linear combination coefficients that correspond to different port groups, so that signaling overheads for feeding back channel state information can be reduced. In addition, the different port groups may correspond to different quantities of basis vectors (including spatial domain basis vectors and frequency domain basis vectors) and different quantities of linear combination coefficients. Such non-uniform overhead allocation manner can improve overall feedback precision of the precoding matrix.

With reference to the third aspect, in some implementations of the third aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

Based on the foregoing solution, the first indication information indicates a part of the linear combination coefficients, and the first port group and the second port group share a same group of frequency domain basis vectors, so that signaling overheads for feeding back channel state information can be reduced.

With reference to the third aspect, in some implementations of the third aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

Based on the foregoing solution, the first indication information indicates a part of the linear combination coefficients, so that signaling overheads for feeding back channel state information can be reduced.

With reference to the third aspect, in some implementations of the third aspect, the second apparatus receives second indication information. The second indication information indicates at least one of the following: values of L1, L2, M1, T1, and T2.

Based on the foregoing solution, the second indication information indicates quantities of basis vectors corresponding to different port groups and quantities of linear combination coefficients corresponding to the different port groups, to help the second apparatus identify the basis vectors and the linear combination coefficients that correspond to the different port groups and that are indicated by the first indication information.

With reference to the third aspect, in some implementations of the third aspect, the second indication information further indicates a value of M2.

Based on the foregoing solution, when the first port group and the second port group correspond to different frequency domain basis vectors, the second indication information indicates the value of M2 to help the second apparatus identify frequency domain basis vectors that correspond to different port groups and that are indicated by the first indication information.

With reference to the third aspect, in some implementations of the third aspect, before the second apparatus receives the second indication information, the second apparatus sends third indication information. The third indication information indicates at least one of the following: a quantity L of spatial domain basis vectors, a quantity M of frequency domain basis vectors, and a quantity T of linear combination coefficients, where L, M, and T are all positive integers.

Based on the foregoing solution, the second apparatus indicates a quantity of basis vectors and/or the quantity of linear combination coefficients by using the third indication information. A receive end of the third indication information can flexibly allocate, based on the quantity of basis vectors and/or the quantity of linear combination coefficients, a quantity of basis vectors corresponding to each port group and/or a quantity of linear combination coefficients corresponding to each port group, so that the receive end of the third indication information has more freedom to allocate feedback overheads, and overall feedback precision of the precoding matrix is improved.

With reference to the third aspect, in some implementations of the third aspect, the second apparatus sends fourth indication information. The fourth indication information indicates a quantity of bits in a bitmap. The quantity of bits in the bitmap indicates a maximum quantity of bits occupied by a linear combination coefficient bitmap corresponding to at least one precoding submatrix included in the precoding matrix.

Based on the foregoing solution, the maximum quantity that is of bits occupied by the linear combination coefficient bitmap and that is indicated by the fourth indication information can limit a quantity of bits of a linear combination coefficient bitmap that needs to be fed back, to limit feedback overheads of channel state information.

With reference to the third aspect, in some implementations of the third aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

It should be understood that the plurality of port groups may be port groups corresponding to all apparatuses for coherent joint transmission, or may be port groups corresponding to a plurality of precoding submatrices included in the precoding matrix indicated by the first indication information. A receive end of the third indication information may flexibly allocate, based on the maximum average quantity/maximum total quantity of basis vectors corresponding to the plurality of port groups that is indicated by the third indication information and/or the maximum average quantity/maximum total quantity of linear combination coefficients corresponding to the plurality of port groups that is indicated by the third indication information, a quantity of basis vectors corresponding to each port group and/or a quantity of linear combination coefficients corresponding to each port group, so that freedom for allocating feedback overheads is improved, and overall feedback precision of the precoding matrix is improved.

With reference to the third aspect, in some implementations of the third aspect, the first indication information includes third information indicating the T1 linear combination coefficients and the T2 linear combination coefficients. The third information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

With reference to the third aspect, in some implementations of the third aspect, the first indication information includes fourth information indicating the T1 linear combination coefficients and the T2 linear combination coefficients. The fourth information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

Based on the foregoing solution, the first indication information jointly reports the amplitude information of the linear combination coefficients of the plurality of port groups in a differential form, so that an energy difference between channel information of different port groups can be reflected, and coherent joint transmission is enabled, to avoid losses of relative information between channels.

According to a fourth aspect, a channel state information feedback method is provided. The method may be performed by a second apparatus. The method includes: The second apparatus sends third indication information. The third indication information indicates at least one of the following: a quantity $L$ of spatial domain basis vectors, a quantity $M$ of frequency domain basis vectors, and a quantity $T$ of linear combination coefficients. The quantity $L$ of spatial domain basis vectors, the quantity $M$ of frequency domain basis vectors, and the quantity $T$ of linear combination coefficients correspond to at least two port groups. The third indication information is used to determine first indication information. The first indication information includes first information. The first information indicates $L1$ spatial domain basis vectors, $M1$ frequency domain basis vectors, $T1$ linear combination coefficients, $L2$ spatial domain basis vectors, and $T2$ linear combination coefficients. One linear combination coefficient corresponds to one spatial domain basis vector and one frequency domain basis vector. The $L1$ spatial domain basis vectors, the $M1$ frequency domain basis vectors, and the $T1$ linear combination coefficients are used to determine a first precoding submatrix. The $L2$ spatial domain basis vectors, the $M1$ frequency domain basis vectors, and the $T2$ linear combination coefficients are used to determine a second precoding submatrix. $L$, $M$, $T$, $L1$, $M1$, $T1$, $L2$, and $T2$ are all positive integers.

Based on the foregoing solution, the second apparatus indicates a maximum quantity of basis vectors that is fed back and/or a maximum quantity of linear combination coefficients that is fed back. A receive end of the third indication information can flexibly allocate, based on the quantity of basis vectors and/or the quantity of linear combination coefficients that are/is indicated by the third indication information, a quantity of basis vectors corresponding to each port group and/or a quantity of linear combination coefficients corresponding to each port group, so that the receive end of the third indication information has more freedom to allocate feedback overheads, and overall feedback precision of a precoding matrix is improved. Different port groups correspond to different precoding submatrices, and the different port groups may correspond to different stations.

With reference to the fourth aspect, in some implementations of the fourth aspect, the third indication information is used to determine first indication information. The first indication information includes second information. The second information indicates $L1$ spatial domain basis vectors, $M1$ frequency domain basis vectors, $T1$ linear combination coefficients, $L2$ spatial domain basis vectors, $M2$ frequency domain basis vectors, and $T2$ linear combination coefficients. One linear combination coefficient corresponds to one spatial domain basis vector and one frequency domain basis vector. The $L1$ spatial domain basis vectors, the $M1$ frequency domain basis vectors, and the $T1$ linear combination coefficients are used to determine a first precoding submatrix. The $L2$ spatial domain basis vectors, the $M2$ frequency domain basis vectors, and the $T2$ linear combination coefficients are used to determine a second precoding submatrix. $L1$, $M1$, $T1$, $L2$, $M2$, and $T2$ are all positive integers.

With reference to the fourth aspect, in some implementations of the fourth aspect, the $T1$ linear combination coefficients are linear combination coefficients in $K1$ linear combination coefficients, and $T1$ is less than or equal to $K1$. The $K1$ linear combination coefficients correspond to the $L1$ spatial domain basis vectors and the $M1$ frequency domain basis vectors, and $K1=2L1*M1$. The $T2$ linear combination coefficients are linear combination coefficients in $K2$ linear combination coefficients, and $T2$ is less than or equal to $K2$. The $K2$ linear combination coefficients correspond to the $L2$ spatial domain basis vectors and the $M1$ frequency domain basis vectors, and $K2=2L2*M1$.

With reference to the fourth aspect, in some implementations of the fourth aspect, the $T1$ linear combination coefficients are linear combination coefficients in $K1$ linear combination coefficients, and $T1$ is less than or equal to $K1$. The $K1$ linear combination coefficients correspond to the $L1$ spatial domain basis vectors and the $M1$ frequency domain basis vectors, and $K1=2L1*M1$. The $T2$ linear combination coefficients are linear combination coefficients in $K3$ linear combination coefficients, and $T2$ is less than or equal to $K3$. The $K3$ linear combination coefficients correspond to the $L2$ spatial domain basis vectors and the $M2$ frequency domain basis vectors, and $K3=2L2*M2$.

With reference to the fourth aspect, in some implementations of the fourth aspect, the quantity $L$ of spatial domain basis vectors is a maximum average quantity or a maximum total quantity of spatial domain basis vectors corresponding to a plurality of port groups, and the plurality of port groups include the first port group and the second port group. When $L$ is the maximum average quantity, $L1+L2<2L$; or when $L$ is the maximum total quantity, $L1+L2\leq L$. The quantity $M$ of frequency domain basis vectors is a maximum average quantity or a maximum total quantity of frequency domain basis vectors corresponding to the plurality of port groups. When $M$ is the maximum average quantity, $M1+M2\leq 2M$; or when $M$ is the maximum total quantity, $M1+M2\leq M$. The quantity $T$ of linear combination coefficients is a maximum average quantity or a maximum total quantity of linear combination coefficients corresponding to the plurality of port groups. When $T$ is the maximum average quantity, $T1+T2\leq 2T$; or when $T$ is the maximum total quantity, $T1+T2\leq T$.

It should be understood that the plurality of port groups may be port groups corresponding to all apparatuses for coherent joint transmission, or may be port groups corresponding to a plurality of precoding submatrices included in the precoding matrix indicated by the first indication information. A receive end of the third indication information may flexibly allocate, based on the maximum average quantity/maximum total quantity of basis vectors corresponding to the plurality of port groups that is indicated by the third indication information and/or the maximum average quantity/maximum total quantity of linear combination coefficients corresponding to the plurality of port groups that is indicated by the third indication information, a quantity of basis vectors corresponding to each port group and/or a quantity of linear combination coefficients corresponding to each port group, so that freedom for allocating feedback overheads is improved, and overall feedback precision of a precoding matrix is improved.

According to a fifth aspect, a channel state information feedback method is provided. The method may be performed by a first apparatus. The first apparatus may be a terminal device, or may be a part (for example, a chip or a chip system) configured in the terminal device. This is not limited in this application. The method includes: The first apparatus generates fifth indication information. The fifth indication information is determined based on received precoded reference signals of port groups. The port groups include a first port group and a second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair. One angle-delay pair includes one angle vector and one delay vector. A precoded reference signal of the first port group or the second port group is obtained by precoding a reference signal based on an angle-delay pair. P1, P2, Q1, Q2, X1, and X2 are all positive integers, Q1≤P1, and Q2≤P2. The first apparatus sends the fifth indication information.

If single polarization is considered, P1 is a quantity of ports in one polarization direction of the first port group, P2 is a quantity of ports in the polarization direction of the second port group, Q1 is a quantity of ports selected in the polarization direction of the first port group, and Q2 is a quantity of ports selected in the polarization direction of the second port group. If dual-polarization is considered, P1 is a quantity of ports in two polarization directions of the first port group, P2 is a quantity of ports in the two polarization directions of the second port group, Q1 is a quantity of ports selected in the two polarization directions of the first port group, and Q2 is a quantity of ports selected in the two polarization directions of the second port group. In addition, for each port group, in different polarization directions, quantities of ports selected by the first apparatus may be the same or may be different, and sequence numbers of the ports selected by the first apparatus may be the same or may be different.

Based on the foregoing solution, a receive end of the fifth indication information can determine at least two precoding submatrices based on content indicated by the fifth indication information and an angle-delay pair used when the reference signal is precoded, so that coherent joint transmission can be performed between a plurality of stations. Different precoding submatrices correspond to different port groups, and the different port groups may correspond to different stations.

With reference to the fifth aspect, in some implementations of the fifth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

Based on the foregoing solution, the first apparatus jointly indicates frequency domain basis vectors, selected ports, and angle-delay pair coefficients that correspond to different port groups, so that signaling overheads for feeding back channel state information can be reduced. In addition, the different port group may correspond to different quantities of frequency domain basis vectors, different quantities of selected ports, and different quantities of angle-delay pair coefficients. Such non-uniform overhead allocation manner can improve overall feedback precision of a precoding matrix.

With reference to the fifth aspect, in some implementations of the fifth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

Based on the foregoing solution, different frequency domain basis vectors may be selected for different port groups, so that the first apparatus has more freedom to select the frequency domain basis vectors corresponding to the different port groups when determining the fifth indication information, to improve feedback precision of each precoding submatrix, and further improve overall feedback precision of a precoding matrix.

With reference to the fifth aspect, in some implementations of the fifth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

Based on the foregoing solution, the first apparatus selects a part of the angle-delay pair coefficients for reporting, and the first port group and the second port group share a same group of frequency domain basis vectors, so that signaling overheads for feeding back channel state information can be reduced.

With reference to the fifth aspect, in some implementations of the fifth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

Based on the foregoing solution, the first apparatus selects a part of the angle-delay pair coefficients for reporting, so that signaling overheads for feeding back channel state information can be reduced.

With reference to the fifth aspect, in some implementations of the fifth aspect, the first apparatus sends sixth indication information. The sixth indication information indicates at least one of the following: values of Q1, Q2, X1, and X2.

Based on the foregoing solution, the first apparatus feeds back quantities of ports corresponding to different port groups and/or quantities of angle-delay pair coefficients corresponding to the different port groups, to help a receive end of the sixth indication information identify ports and/or angle-delay pair coefficients correspondingly selected for the different port groups.

With reference to the fifth aspect, in some implementations of the fifth aspect, the sixth indication information further indicates a value of at least one of Z1 and Z2.

Based on the foregoing solution, the first apparatus may further feed back quantities of frequency domain basis vectors corresponding to different port groups, to help a receive end of the sixth indication information identify the frequency domain basis vectors corresponding to the different port groups.

With reference to the fifth aspect, in some implementations of the fifth aspect, before the first apparatus sends the sixth indication information, the first apparatus receives seventh indication information. The seventh indication information indicates at least one of the following: a quantity Q of ports, a quantity Z of frequency domain basis vectors, and a quantity X of angle-delay pair coefficients. The ports include at least one of the first ports and the second ports. Q, Z, and X are all positive integers.

Based on the foregoing solution, the seventh indication information indicates a quantity of ports that needs to be fed back by the first apparatus and/or a quantity of angle-delay pair coefficients that needs to be fed back by the first apparatus. The first apparatus can flexibly allocate, based on the quantity of ports that needs to be fed back and that is indicated by the seventh indication information and/or the quantity of angle-delay pair coefficients that needs to be fed back and that is indicated by the seventh indication information, a quantity that is of ports corresponding to each port group and that needs to be fed back and/or a quantity that is of angle-delay pair coefficients corresponding to each port group and that needs to be fed back, so that the first apparatus has more freedom to allocate feedback overheads, and overall feedback precision of a precoding matrix is improved.

With reference to the fifth aspect, in some implementations of the fifth aspect, the first apparatus receives eighth indication information. The eighth indication information indicates a quantity of bits in a bitmap. The quantity of bits in the bitmap indicates a maximum quantity of bits occupied by an angle-delay pair coefficient bitmap corresponding to at least one precoding submatrix included in a precoding matrix.

Based on the foregoing solution, the maximum quantity that is of bits occupied by the angle-delay pair coefficient bitmap and that is indicated by the eighth indication information can limit a quantity of bits of an angle-delay pair coefficient bitmap that needs to be fed back by the first apparatus, to limit feedback overheads of channel state information.

With reference to the fifth aspect, in some implementations of the fifth aspect, the quantity Q of ports is a maximum average quantity or a maximum total quantity of ports selected from a plurality of port groups, and the plurality of port groups include the first port group and the second port group. When Q is the maximum average quantity, Q1+Q2≤2Q; or when Q is the maximum total quantity, Q1+Q2≤Q. The quantity Z of frequency domain basis vectors is a maximum average quantity or a maximum total quantity of frequency domain basis vectors corresponding to the plurality of port groups. When Z is the maximum average quantity, Z1+Z2≤2Z; or when Z is the maximum total quantity, Z1+Z2≤Z. The quantity X of angle-delay pair coefficients is a maximum average quantity or a maximum total quantity of angle-delay pair coefficients corresponding to the plurality of port groups. When X is the maximum average quantity, X1+X2≤2X; or when X is the maximum total quantity, X1+X2≤X.

It should be understood that the plurality of port groups may be port groups corresponding to all apparatuses for coherent joint transmission, or may be port groups corresponding to a plurality of precoding submatrices that are determined based on the fifth indication information. The first apparatus may flexibly allocate, based on the maximum average quantity/maximum total quantity indicated by the seventh indication information, a quantity of ports corresponding to each port group, a quantity of frequency domain basis vectors corresponding to each port group, and/or a quantity of angle-delay pair coefficients corresponding to each port group, to increase freedom for allocating feedback overheads, and improve overall feedback precision of the precoding matrix.

With reference to the fifth aspect, in some implementations of the fifth aspect, the fifth indication information includes sixth information indicating the X1 angle-delay pair coefficients and the X2 angle-delay pair coefficients. The sixth information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a difference of an amplitude coefficient in each polarization direction of each port group relative to the reference amplitude coefficient.

Based on the foregoing solution, the first apparatus jointly reports the amplitude information of the angle-delay pair coefficients of the plurality of port groups in a differential form, so that an energy difference between channel information of different port groups can be reflected, and coherent joint transmission is enabled, to avoid losses of relative information between channels.

With reference to the fifth aspect, in some implementations of the fifth aspect, the fifth indication information includes seventh information indicating the X1 angle-delay pair coefficients and the X2 angle-delay pair coefficients. The seventh information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

Based on the foregoing solution, the first apparatus jointly reports the amplitude information of the angle-delay pair coefficients of the plurality of port groups in a differential form, so that an energy difference between channel information of different port groups can be reflected, and coherent joint transmission is enabled, to avoid losses of relative information between channels.

According to a sixth aspect, a channel state information feedback method is provided. The method may be performed by a first apparatus. The first apparatus may be a terminal device, or may be a part (for example, a chip or a chip system) configured in the terminal device. This is not limited in this application. The method includes: The first apparatus receives seventh indication information. The seventh indication information indicates at least one of the following: a quantity Q of ports, a quantity Z of frequency domain basis vectors, and a quantity X of angle-delay pair coefficients. The quantity Q of ports, the quantity Z of frequency domain basis vectors, and the quantity X of angle-delay pair coefficients correspond to at least two port groups. The first apparatus determines fifth indication information with reference to the seventh indication information and received precoded reference signals of port groups. The port groups include a first port group and a second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. Q, Z, X, P1, P2, Q1, Q2, X1 and X2 are all positive integers, $Q1 \leq P1$, and $Q2 \leq P2$.

Based on the foregoing solution, the seventh indication information indicates a quantity of ports that needs to be fed back by the first apparatus and/or a quantity of angle-delay pair coefficients that needs to be fed back by the first apparatus. The first apparatus can flexibly allocate, based on the quantity of ports that needs to be fed back and that is indicated by the seventh indication information and/or the quantity of angle-delay pair coefficients that needs to be fed back and that is indicated by the seventh indication information, a quantity that is of ports corresponding to each port group and that needs to be fed back and/or a quantity that is of angle-delay pair coefficients corresponding to each port group and that needs to be fed back, so that the first apparatus has more freedom to allocate feedback overheads, and overall feedback precision of a precoding matrix is improved.

With reference to the sixth aspect, in some implementations of the sixth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the sixth aspect, in some implementations of the sixth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the sixth aspect, in some implementations of the sixth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

With reference to the sixth aspect, in some implementations of the sixth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

With reference to the sixth aspect, in some implementations of the sixth aspect, the quantity Q of ports is a maximum average quantity or a maximum total quantity of ports selected from a plurality of port groups, and the plurality of port groups include the first port group and the second port group. When Q is the maximum average quantity, Q1+Q2≤2Q; or when Q is the maximum total quantity, Q1+Q2≤Q. The quantity Z of frequency domain basis vectors is a maximum average quantity or a maximum total quantity of frequency domain basis vectors corresponding to the plurality of port groups. When Z is the maximum average quantity, Z1+Z2≤2Z; or when Z is the maximum total quantity, Z1+Z2≤Z. The quantity X of angle-delay pair coefficients is a maximum average quantity or a maximum total quantity of angle-delay pair coefficients corresponding to the plurality of port groups. When X is the maximum average quantity, X1+X2≤2X; or when X is the maximum total quantity, X1+X2≤X.

According to a seventh aspect, a channel state information feedback method is provided. The method may be performed by a second apparatus. The method includes: The second apparatus receives fifth indication information. The fifth indication information includes fifth information. The fifth information indicates Q1 first ports in a first port group, Q2 second ports in a second port group, X1 angle-delay pair coefficients, and X2 angle-delay pair coefficients. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. The first port group includes P1 first ports, and the second port group includes P2 second ports. P1, P2, Q1, Q2, X1, and X2 are all positive integers, Q1≤P1, and Q2≤P2. The second apparatus determines, with reference to the Q1 first ports and the X1 angle-delay pair coefficients, a first precoding submatrix corresponding to the first port group, and determines, with reference to the Q2 second ports and the X2 angle-delay pair coefficients, a second precoding submatrix corresponding to the second port group.

Based on the foregoing solution, the second apparatus can determine at least two precoding submatrices based on content indicated by the fifth indication information and the angle-delay pair used when the reference signal is precoded, so that coherent joint transmission can be performed between a plurality of stations. Different precoding submatrices correspond to different port groups, and the different port groups may correspond to different stations.

With reference to the seventh aspect, in some implementations of the seventh aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

Based on the foregoing solution, the fifth indication information jointly indicates frequency domain basis vectors, ports, and angle-delay pair coefficients that correspond to different port groups, so that signaling overheads for feeding back channel state information can be reduced. In addition, the different port group may correspond to different quantities of frequency domain basis vectors, different quantities of ports, and different quantities of angle-delay pair coefficients. Such non-uniform overhead allocation manner can improve overall feedback precision of a precoding matrix.

With reference to the seventh aspect, in some implementations of the seventh aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

Based on the foregoing solution, different frequency domain basis vectors may be selected for different port groups, so that a transmit end of the fifth indication information has more freedom to select the frequency domain basis vectors corresponding to the different port groups when determining the fifth indication information, to improve feedback precision of each precoding submatrix, and further improve overall feedback precision of a precoding matrix.

With reference to the seventh aspect, in some implementations of the seventh aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z2.

Based on the foregoing solution, the fifth information indicates a part of the angle-delay pair coefficients, and the first port group and the second port group share a same group of frequency domain basis vectors, so that signaling overheads for feeding back channel state information can be reduced.

With reference to the seventh aspect, in some implementations of the seventh aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

Based on the foregoing solution, the fifth information indicates a part of the angle-delay pair coefficients, so that signaling overheads for feeding back channel state information can be reduced.

With reference to the seventh aspect, in some implementations of the seventh aspect, the second apparatus receives sixth indication information. The sixth indication information indicates at least one of the following: values of Q1, Q2, X1, and X2.

Based on the foregoing solution, the sixth indication information feeds back quantities of ports corresponding to different port groups and/or quantities of angle-delay pair coefficients corresponding to the different port groups, to help the second apparatus identify ports and/or angle-delay pair coefficients correspondingly selected for the different port groups.

With reference to the seventh aspect, in some implementations of the seventh aspect, the sixth indication information further indicates a value of at least one of Z 1 and Z2.

Based on the foregoing solution, the sixth indication information may further feed back quantities of frequency domain basis vectors corresponding to different port groups, to help the second apparatus identify the frequency domain basis vectors corresponding to the different port groups.

With reference to the seventh aspect, in some implementations of the seventh aspect, before the second apparatus receives the sixth indication information, the second apparatus sends seventh indication information. The seventh indication information indicates at least one of the following: a quantity Q of ports, a quantity Z of frequency domain basis vectors, and a quantity X of angle-delay pair coefficients. The ports include at least one of the first ports and the second ports. Q, Z, and X are all positive integers.

Based on the foregoing solution, the second apparatus indicates a quantity of ports that needs to be fed back and/or a quantity of angle-delay pair coefficients that needs to be fed back. Based on the quantity of ports that needs to be fed back and that is indicated by the seventh indication information and/or the quantity of angle-delay pair coefficients that needs to be fed back and that is indicated by the seventh indication information, a quantity that is of ports corresponding to each port group and that needs to be fed back and/or a quantity that is of angle-delay pair coefficients corresponding to each port group and that need to be fed back can be flexibly allocated, so that a receive end of the seventh indication information has more freedom to allocate feedback overheads, and overall feedback precision of a precoding matrix is improved.

With reference to the seventh aspect, in some implementations of the seventh aspect, the second apparatus sends eighth indication information. The eighth indication information indicates a quantity of bits in a bitmap. The quantity of bits in the bitmap indicates a maximum quantity of bits occupied by an angle-delay pair coefficient bitmap corresponding to at least one precoding submatrix included in a precoding matrix.

Based on the foregoing solution, the maximum quantity that is of bits occupied by the angle-delay pair coefficient bitmap and that is indicated by the second apparatus can limit a quantity that is of bits of an angle-delay pair coefficient bitmap and that needs to be fed back by a receive end of the eighth indication information, to limit feedback overheads of channel state information.

With reference to the seventh aspect, in some implementations of the seventh aspect, the quantity Q of ports is a maximum average quantity or a maximum total quantity of ports selected from a plurality of port groups, and the plurality of port groups include the first port group and the second port group. When Q is the maximum average quantity, Q1+Q2≤2Q; or when Q is the maximum total quantity, Q1+Q2≤Q. The quantity Z of frequency domain basis vectors is a maximum average quantity or a maximum total quantity of frequency domain basis vectors corresponding to the plurality of port groups. When Z is the maximum average quantity, Z1+Z2≤2Z; or when Z is the maximum total quantity, Z1+Z2≤Z. The quantity X of angle-delay pairs coefficients is a maximum average quantity or a maximum total quantity of angle-delay pair coefficients corresponding to the plurality of port groups. When X is the maximum average quantity, $X1+X2\leq 2X$; or when X is the maximum total quantity, $X1+X2\leq X$.

It should be understood that the plurality of port groups may be port groups corresponding to all apparatuses for coherent joint transmission, or may be port groups corresponding to a plurality of precoding submatrices that are determined based on the fifth indication information. A receive end of the seventh indication information may flexibly allocate, based on the maximum average quantity/maximum total quantity indicated by the seventh indication information, a quantity of ports corresponding to each port group, a quantity of frequency domain basis vectors corresponding to each port group, and/or a quantity of angle-delay pair coefficients corresponding to each port group, to increase freedom for allocating feedback overheads, and improve overall feedback precision of the precoding matrix.

With reference to the seventh aspect, in some implementations of the seventh aspect, the fifth indication information includes sixth information indicating the X1 angle-delay pair coefficients and the X2 angle-delay pair coefficients. The sixth information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

Based on the foregoing solution, the fifth indication information reports the amplitude information in a differential form, so that an energy difference between channel information of different port groups can be reflected, and coherent joint transmission is enabled, to avoid losses of relative information between channels.

With reference to the seventh aspect, in some implementations of the seventh aspect, the fifth indication information includes seventh information indicating the X1 angle-delay pair coefficients and the X2 angle-delay pair coefficients. The seventh information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a difference of an amplitude coefficient in each polarization direction of each port group relative to the second reference amplitude coefficient.

Based on the foregoing solution, the fifth indication information jointly reports the amplitude information of the angle-delay pair coefficient of the plurality of port groups in a differential form, so that an energy difference between channel information of different port groups can be reflected, and coherent joint transmission is enabled, to avoid losses of relative information between channels.

According to an eighth aspect, a channel state information feedback method is provided. The method may be performed by a second apparatus. The method includes: The second apparatus sends seventh indication information. The seventh indication information indicates at least one of the following: a quantity Q of ports, a quantity Z of frequency domain basis vectors, and a quantity X of angle-delay pair coefficients. The quantity Q of ports, the quantity Z of frequency domain basis vectors, and the quantity X of angle-delay pair coefficients correspond to at least two port groups. The seventh indication information and precoded reference signals sent through port groups are used to determine fifth indication information. The port groups include a first port group and a second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. Q, Z, X, P1, P2, Q1, Q2, X1 and X2 are all positive integers, $Q1\leq P1$, and $Q2\leq P2$.

Based on the foregoing solution, the second apparatus indicates a quantity of ports that needs to be fed back and/or a quantity of angle-delay pair coefficients that needs to be fed back. A receive end of the seventh indication information can flexibly allocate, based on the quantity of ports that needs to be fed back and that is indicated by the seventh indication information and/or the quantity of angle-delay pair coefficients that needs to be fed back and that is indicated by the seventh indication information, a quantity that is of ports corresponding to each port group and that needs to be fed back and/or a quantity that is of angle-delay pair coefficients corresponding to each port group and that needs to be fed back, so that the receive end of the seventh indication information has more freedom to allocate feedback overheads, and overall feedback precision of a precoding matrix is improved.

With reference to the eighth aspect, in some implementations of the eighth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the eighth aspect, in some implementations of the eighth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the eighth aspect, in some implementations of the eighth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

With reference to the eighth aspect, in some implementations of the eighth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

With reference to the eighth aspect, in some implementations of the eighth aspect, the quantity Q of ports is a maximum average quantity or a maximum total quantity of ports selected from a plurality of port groups, and the plurality of port groups include the first port group and the second port group. When Q is the maximum average quantity, $Q1+Q2\leq2Q$; or when Q is the maximum total quantity, $Q1+Q2\leq Q$. The quantity Z of frequency domain basis vectors is a maximum average quantity or a maximum total quantity of frequency domain basis vectors corresponding to the plurality of port groups. When Z is the maximum average quantity, $Z1+Z2\leq2Z$; or when Z is the maximum total quantity, $Z1+Z2\leq Z$. The quantity X of angle-delay pair coefficients is a maximum average quantity or a maximum total quantity of angle-delay pair coefficients corresponding to the plurality of port groups. When X is the maximum average quantity, $X1+X2\leq2X$; or when X is the maximum total quantity, $X1+X2\leq X$.

According to a ninth aspect, a communication apparatus is provided. The apparatus is a first apparatus. The first apparatus may be a terminal device, or may be a part (for example, a chip or a chip system) configured in the terminal device. This is not limited in this application. The apparatus includes a transceiver unit and a processing unit. The processing unit is configured to generate first indication information. The first indication information indicates a precoding matrix. The precoding matrix includes a first precoding submatrix and a second precoding submatrix. The first precoding submatrix corresponds to a first port group, and the second precoding submatrix corresponds to a second port group. The transceiver unit is configured to send the first indication information.

With reference to the ninth aspect, in some implementations of the ninth aspect, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M1 frequency domain basis vectors, and the T2 linear combination coefficients are used to determine the second precoding submatrix. L1, M1, T1, L2, and T2 are all positive integers.

With reference to the ninth aspect, in some implementations of the ninth aspect, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

With reference to the ninth aspect, in some implementations of the ninth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

With reference to the ninth aspect, in some implementations of the ninth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

With reference to the ninth aspect, in some implementations of the ninth aspect, the transceiver unit is further configured to send second indication information. The second indication information indicates at least one of the following: values of L1, L2, M1, T1, and T2.

With reference to the ninth aspect, in some implementations of the ninth aspect, the second indication information further indicates a value of M2.

With reference to the ninth aspect, in some implementations of the ninth aspect, the transceiver unit is further configured to receive third indication information. The third indication information indicates at least one of the following: a quantity L of spatial domain basis vectors, a quantity M of frequency domain basis vectors, and a quantity T of linear combination coefficients, where L, M, and T are all positive integers.

With reference to the ninth aspect, in some implementations of the ninth aspect, the transceiver unit is further configured to receive fourth indication information. The fourth indication information indicates a quantity of bits in a bitmap. The quantity of bits in the bitmap indicates a maximum quantity of bits occupied by a linear combination coefficient bitmap corresponding to at least one precoding submatrix included in the precoding matrix.

With reference to the ninth aspect, in some implementations of the ninth aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

With reference to the ninth aspect, in some implementations of the ninth aspect, the first indication information includes third information indicating the T1 linear combination coefficients and the T2 linear combination coefficients. The third information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

With reference to the ninth aspect, in some implementations of the ninth aspect, the first indication information includes fourth information indicating the T1 linear combination coefficients and the T2 linear combination coefficients. The fourth information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

According to a tenth aspect, a communication apparatus is provided. The apparatus may be a first apparatus.

The first apparatus may be a terminal device, or may be a part (for example, a chip or a chip system) configured in the terminal device. This is not limited in this application. The apparatus includes a transceiver unit and a processing unit. The transceiver unit is configured to receive third indication information. The third indication information indicates at least one of the following: a quantity L of spatial domain basis vectors, a quantity M of frequency domain basis vectors, and a quantity T of linear combination coefficients. The quantity L of spatial domain basis vectors, the quantity M of frequency domain basis vectors, and the quantity T of linear combination coefficients correspond to at least two port groups. The processing unit is configured to determine first indication information based on the third indication information. The first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M1 frequency domain basis vectors, and the T2 linear combination coefficients are used to determine a second precoding submatrix. The first precoding submatrix corresponds to a first port group, and the second precoding submatrix corresponds to a second port group. L, M, T, L1, M1, T1, L2, and T2 are all positive integers.

With reference to the tenth aspect, in some implementations of the tenth aspect, the processing unit is configured to determine the first indication information based on the third indication information. The first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

With reference to the tenth aspect, in some implementations of the tenth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

With reference to the tenth aspect, in some implementations of the tenth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

With reference to the tenth aspect, in some implementations of the tenth aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

According to an eleventh aspect, a communication apparatus is provided. The apparatus is a second apparatus. The second apparatus may be a network device, or may be a part (for example, a chip or a chip system) configured in the network device. This is not limited in this application. The apparatus includes a transceiver unit and a processing unit. The transceiver unit is configured to receive first indication information. The first indication information indicates a precoding matrix. The precoding matrix includes a first precoding submatrix and a second precoding submatrix. The first precoding submatrix corresponds to a first port group, and the second precoding submatrix corresponds to a second port group. The processing unit is configured to determine the precoding matrix based on the first indication information.

With reference to the eleventh aspect, in some implementations of the eleventh aspect, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M1 frequency domain basis vectors, and the T2 linear combination coefficients are used to determine the second precoding submatrix. L1, M1, T1, L2, and T2 are all positive integers.

With reference to the eleventh aspect, in some implementations of the eleventh aspect, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

With reference to the eleventh aspect, in some implementations of the eleventh aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

With reference to the eleventh aspect, in some implementations of the eleventh aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

With reference to the eleventh aspect, in some implementations of the eleventh aspect, the transceiver unit is further configured to receive second indication information. The second indication information indicates at least one of the following: values of L1, L2, M1, T1, and T2.

With reference to the eleventh aspect, in some implementations of the eleventh aspect, the second indication information further indicates a value of M2.

With reference to the eleventh aspect, in some implementations of the eleventh aspect, the transceiver unit is further configured to send third indication information. The third indication information indicates at least one of the following: a quantity L of spatial domain basis vectors, a quantity M of frequency domain basis vectors, and a quantity T of linear combination coefficients, where L, M, and T are all positive integers.

With reference to the eleventh aspect, in some implementations of the eleventh aspect, the transceiver unit is further configured to send fourth indication information. The fourth indication information indicates a quantity of bits in a bitmap. The quantity of bits in the bitmap indicates a maximum quantity of bits occupied by a linear combination coefficient bitmap corresponding to at least one precoding submatrix included in the precoding matrix.

With reference to the eleventh aspect, in some implementations of the eleventh aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

With reference to the eleventh aspect, in some implementations of the eleventh aspect, the first indication information includes third information indicating the T1 linear combination coefficients and the T2 linear combination coefficients. The third information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

With reference to the eleventh aspect, in some implementations of the eleventh aspect, the first indication information includes fourth information indicating the T1 linear combination coefficients and the T2 linear combination coefficients. The fourth information includes amplitude information. The amplitude information includes information indicating differential amplitude coefficients. The differential amplitude coefficients include a first reference differential amplitude coefficient, a second reference differential amplitude coefficient, and a second differential amplitude coefficient.

The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

According to a twelfth aspect, a communication apparatus is provided. The apparatus is a second apparatus. The second apparatus may be a network device, or may be a part (for example, a chip or a chip system) configured in the network device. This is not limited in this application. The apparatus includes a transceiver unit. The transceiver unit is configured to send third indication information. The third indication information indicates at least one of the following: a quantity L of spatial domain basis vectors, a quantity M of frequency domain basis vectors, and a quantity T of linear combination coefficients. The quantity L of spatial domain basis vectors, the quantity M of frequency domain basis vectors, and the quantity T of linear combination coefficients correspond to at least two port groups. The third indication information is used to determine first indication information. The first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M1 frequency domain basis vectors, and the T2 linear combination coefficients are used to determine a second precoding submatrix. L, M, T, L1, M1, T1, L2, and T2 are all positive integers.

With reference to the twelfth aspect, in some implementations of the twelfth aspect, the third indication information is used to determine the first indication information. The first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

With reference to the twelfth aspect, in some implementations of the twelfth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K2 linear combination coefficients, and T2 is less than or equal to K2. The K2 linear combination coefficients correspond to the L2 spatial domain basis vectors and the M1 frequency domain basis vectors, and K2=2L2*M1.

With reference to the twelfth aspect, in some implementations of the twelfth aspect, the T1 linear combination coefficients are linear combination coefficients in K1 linear combination coefficients, and T1 is less than or equal to K1. The K1 linear combination coefficients correspond to the L1 spatial domain basis vectors and the M1 frequency domain basis vectors, and K1=2L1*M1. The T2 linear combination coefficients are linear combination coefficients in K3 linear combination coefficients, and T2 is less than or equal to K3. The K3 linear combination coefficients correspond to the L2 spatial domain basis vectors and the M2 frequency domain basis vectors, and K3=2L2*M2.

With reference to the twelfth aspect, in some implementations of the twelfth aspect, the quantity L of spatial domain basis vectors is a maximum average quantity or a maximum total quantity of spatial domain basis vectors corresponding to a plurality of port groups, and the plurality of port groups include the first port group and the second port group. When L is the maximum average quantity, L1+L2<2L; or when L is the maximum total quantity, L1+L2≤L. The quantity M of frequency domain basis vectors is a maximum average quantity or a maximum total quantity of frequency domain basis vectors corresponding to the plurality of port groups. When M is the maximum average quantity, M1+M2≤2M; or when M is the maximum total quantity, M1+M2≤M. The quantity T of linear combination coefficients is a maximum average quantity or a maximum total quantity of linear combination coefficients corresponding to the plurality of port groups. When T is the maximum average quantity, T1+T2≤2T; or when T is the maximum total quantity, T1+T2≤T.

According to a thirteenth aspect, a communication apparatus is provided. The apparatus is a first apparatus. The first apparatus may be a terminal device, or may be a part (for example, a chip or a chip system) configured in the terminal device. This is not limited in this application. The apparatus includes a transceiver unit and a processing unit. The processing unit is configured to generate fifth indication information. The fifth indication information is determined based on received precoded reference signals of port groups. The port groups include a first port group and a second port group.

The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair. One angle-delay pair includes one angle vector and one delay vector. A precoded reference signal of the first port group or the second port group is obtained by precoding a reference signal based on an angle-delay pair. P1, P2, Q1, Q2, X1, and X2 are all positive integers, Q1≤P1, and Q2≤P2. The transceiver unit is configured to send the fifth indication information.

With reference to the thirteenth aspect, in some implementations of the thirteenth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the thirteenth aspect, in some implementations of the thirteenth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the thirteenth aspect, in some implementations of the thirteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

With reference to the thirteenth aspect, in some implementations of the thirteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

With reference to the thirteenth aspect, in some implementations of the thirteenth aspect, the first apparatus sends sixth indication information. The sixth indication information indicates at least one of the following: values of Q1, Q2, X1, and X2.

With reference to the thirteenth aspect, in some implementations of the thirteenth aspect, the sixth indication information further indicates a value of at least one of Z1 and Z2.

With reference to the thirteenth aspect, in some implementations of the thirteenth aspect, the transceiver unit is further configured to receive seventh indication information. The seventh indication information indicates at least one of the following: a quantity Q of ports, a quantity Z of frequency domain basis vectors, and a quantity X of angle-delay pair coefficients. The ports include at least one of the first ports and the second ports. Q, Z, and X are all positive integers.

With reference to the thirteenth aspect, in some implementations of the thirteenth aspect, the transceiver unit is further configured to receive eighth indication information. The eighth indication information indicates a quantity of bits in a bitmap. The quantity of bits in the bitmap indicates a maximum quantity of bits occupied by an angle-delay pair coefficient bitmap corresponding to at least one precoding submatrix included in a precoding matrix.

With reference to the thirteenth aspect, in some implementations of the thirteenth aspect, the quantity Q of ports is a maximum average quantity or a maximum total quantity of ports selected from a plurality of port groups, and the plurality of port groups include the first port group and the second port group. When Q is the maximum average quantity, Q1+Q2≤2Q; or when Q is the maximum total quantity, Q1+Q2≤Q. The quantity Z of frequency domain basis vectors is a maximum average quantity or a maximum total quantity of frequency domain basis vectors corresponding to the plurality of port groups. When Z is the maximum average quantity, Z1+Z2≤2Z; or when Z is the maximum total quantity, Z1+Z2≤Z. The quantity X of angle-delay pair coefficients is a maximum average quantity or a maximum total quantity of angle-delay pair coefficients corresponding to the plurality of port groups. When X is the maximum average quantity, X1+X2≤2X; or when X is the maximum total quantity, X1+X2≤X.

With reference to the thirteenth aspect, in some implementations of the thirteenth aspect, the fifth indication information includes sixth information indicating the X1 angle-delay pair coefficients and the X2 angle-delay pair coefficients. The sixth information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a difference of an amplitude coefficient in each polarization direction of each port group relative to the reference amplitude coefficient.

With reference to the thirteenth aspect, in some implementations of the thirteenth aspect, the fifth indication information includes seventh information indicating the X1 angle-delay pair coefficients and the X2 angle-delay pair coefficients. The seventh information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

According to a fourteenth aspect, a communication apparatus is provided. The apparatus is a first apparatus. The first apparatus may be a terminal device, or may be a part (for example, a chip or a chip system) configured in the terminal device. This is not limited in this application. The apparatus includes a transceiver unit and a processing unit. The transceiver unit is configured to receive seventh indication information. The seventh indication information indicates at least one of the following: a quantity Q of ports, a quantity Z of frequency domain basis vectors, and a quantity X of angle-delay pair coefficients. The quantity Q of ports, the quantity Z of frequency domain basis vectors, and the quantity X of angle-delay pair coefficients correspond to at least two port groups. The processing unit is configured to determine fifth indication information with reference to the seventh indication information and received precoded reference signals of port groups. The port groups include a first port group and a second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. Q, Z, X, P1, P2, Q1, Q2, X1 and X2 are all positive integers, $Q1 \leq P1$, and $Q2 \leq P2$.

With reference to the fourteenth aspect, in some implementations of the fourteenth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the fourteenth aspect, in some implementations of the fourteenth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the fourteenth aspect, in some implementations of the fourteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

With reference to the fourteenth aspect, in some implementations of the fourteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

With reference to the fourteenth aspect, in some implementations of the fourteenth aspect, the quantity Q of ports is a maximum average quantity or a maximum total quantity of ports selected from a plurality of port groups, and the plurality of port groups include the first port group and the second port group. When Q is the maximum average quantity, $Q1+Q2 \leq 2Q$; or when Q is the maximum total quantity, $Q1+Q2 \leq Q$. The quantity Z of frequency domain basis vectors is a maximum average quantity or a maximum total quantity of frequency domain basis vectors corresponding to the plurality of port groups. When Z is the maximum average quantity, $Z1+Z2 \leq 2Z$; or when Z is the maximum total quantity, $Z1+Z2 \leq Z$. The quantity X of angle-delay pair coefficients is a maximum average quantity or a maximum total quantity of angle-delay pair coefficients corresponding to the plurality of port groups. When X is the maximum average quantity, $X1+X2 \leq 2X$; or when X is the maximum total quantity, $X1+X2 \leq X$.

According to a fifteenth aspect, a communication apparatus is provided. The apparatus is a second apparatus. The second apparatus may be a network device, or may be a part (for example, a chip or a chip system) configured in the network device. This is not limited in this application. The apparatus includes a transceiver unit and a processing unit. The transceiver unit is configured to receive fifth indication information. The fifth indication information includes fifth information. The fifth information indicates Q1 first ports in a first port group, Q2 second ports in a second port group, X1 angle-delay pair coefficients, and X2 angle-delay pair coefficients. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. The first port group includes P1 first ports, and the second port group includes P2 second ports. P1, P2, Q1, Q2, X1, and X2 are all positive integers, $Q1 \leq P1$, and $Q2 \leq P2$. The processing unit is configured to: determine, with reference to the Q1 first ports and the X1 angle-delay pair coefficients, a first precoding submatrix corresponding to the first port group, and determine, with reference to the Q2 second ports and the X2 angle-delay pair coefficients, a second precoding submatrix corresponding to the second port group.

With reference to the fifteenth aspect, in some implementations of the fifteenth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the fifteenth aspect, in some implementations of the fifteenth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the fifteenth aspect, in some implementations of the fifteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and $Y1=Q1*Z1$. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and $Y2=Q2*Z2$.

With reference to the fifteenth aspect, in some implementations of the fifteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and $Y1=Q1*Z1$. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and $Y3=Q2*Z2$.

With reference to the fifteenth aspect, in some implementations of the fifteenth aspect, the transceiver unit is further configured to receive sixth indication information. The sixth indication information indicates at least one of the following: values of Q1, Q2, X1, and X2.

With reference to the fifteenth aspect, in some implementations of the fifteenth aspect, the sixth indication information further indicates a value of at least one of Z1 and Z2.

With reference to the fifteenth aspect, in some implementations of the fifteenth aspect, the transceiver unit is further configured to send seventh indication information. The seventh indication information indicates at least one of the following: a quantity Q of ports, a quantity Z of frequency domain basis vectors, and a quantity X of angle-delay pair coefficients. The port includes at least one of the first ports and the second ports. Q, Z, and X are all positive integers.

With reference to the fifteenth aspect, in some implementations of the fifteenth aspect, the transceiver unit is further configured to send eighth indication information. The eighth indication information indicates a quantity of bits in a bitmap. The quantity of bits in the bitmap indicates a maximum quantity of bits occupied by an angle-delay pair coefficient bitmap corresponding to at least one precoding submatrix included in a precoding matrix.

With reference to the fifteenth aspect, in some implementations of the fifteenth aspect, the quantity Q of ports is a maximum average quantity or a maximum total quantity of ports selected from a plurality of port groups, and the plurality of port groups include the first port group and the second port group. When Q is the maximum average quantity, $Q1+Q2\leq2Q$; or when Q is the maximum total quantity, $Q1+Q2\leq Q$. The quantity Z of frequency domain basis vectors is a maximum average quantity or a maximum total quantity of frequency domain basis vectors corresponding to the plurality of port groups. When Z is the maximum average quantity, $Z1+Z2\leq2Z$; or when Z is the maximum total quantity, $Z1+Z2\leq Z$. The quantity X of angle-delay pairs is a maximum average quantity or a maximum total quantity of angle-delay pair coefficients corresponding to the plurality of port groups. When X is the maximum average quantity, $X1+X2\leq2X$; or when X is the maximum total quantity, $X1+X2\leq X$.

With reference to the fifteenth aspect, in some implementations of the fifteenth aspect, the fifth indication information includes sixth information indicating the X1 angle-delay pair coefficients and the X2 angle-delay pair coefficients. The sixth information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

With reference to the fifteenth aspect, in some implementations of the fifteenth aspect, the fifth indication information includes seventh information indicating the X1 angle-delay pair coefficients and the X2 angle-delay pair coefficients. The seventh information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a difference of an amplitude coefficient in each polarization direction of each port group relative to the second reference amplitude coefficient.

According to a sixteenth aspect, a communication apparatus is provided. The apparatus is a second apparatus. The second apparatus may be a network device, or may be a part (for example, a chip or a chip system) configured in the network device. This is not limited in this application. The apparatus includes a transceiver unit. The transceiver unit is configured to send seventh indication information. The seventh indication information indicates at least one of the following: a quantity Q of ports, a quantity Z of frequency domain basis vectors, and a quantity X of angle-delay pair coefficients. The quantity Q of ports, the quantity Z of frequency domain basis vectors, and the quantity X of angle-delay pair coefficients correspond to at least two port groups. The seventh indication information and precoded reference signals sent through the port groups are used to determine fifth indication information. The port groups include a first port group and a second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. Q, Z, X, P1, P2, Q1, Q2, X1 and X2 are all positive integers, $Q1\leq P1$, and $Q2\leq P2$.

With reference to the sixteenth aspect, in some implementations of the sixteenth aspect, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors, and the X2 angle-delay pair coefficients are used to determine the second precoding submatrix. Z1 is a positive integer.

With reference to the sixteenth aspect, in some implementations of the sixteenth aspect, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers.

With reference to the sixteenth aspect, in some implementations of the sixteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y2 angle-delay pair coefficients, and X2 is less than or equal to Y2. The Y2 angle-delay pair coefficients correspond to the Q2 second ports and the Z1 frequency domain basis vectors, and Y2=Q2*Z1.

With reference to the sixteenth aspect, in some implementations of the sixteenth aspect, the X1 angle-delay pair coefficients are angle-delay pair coefficients in Y1 angle-delay pair coefficients, and X1 is less than or equal to Y1. The Y1 angle-delay pair coefficients correspond to the Q1 first ports and the Z1 frequency domain basis vectors, and Y1=Q1*Z1. The X2 angle-delay pair coefficients are angle-delay pair coefficients in Y3 angle-delay pair coefficients, and X2 is less than or equal to Y3. The Y3 angle-delay pair coefficients correspond to the Q2 second ports and the Z2 frequency domain basis vectors, and Y3=Q2*Z2.

With reference to the sixteenth aspect, in some implementations of the sixteenth aspect, the quantity Q of ports is a maximum average quantity or a maximum total quantity of ports selected from a plurality of port groups, and the plurality of port groups include the first port group and the second port group. When Q is the maximum average quantity, Q1+Q2≤2Q; or when Q is the maximum total quantity, Q1+Q2≤Q. The quantity Z of frequency domain basis vectors is a maximum average quantity or a maximum total quantity of frequency domain basis vectors corresponding to the plurality of port groups. When Z is the maximum average quantity, Z1+Z2≤2Z; or when Z is the maximum total quantity, Z1+Z2≤Z. The quantity X of angle-delay pair coefficients is a maximum average quantity or a maximum total quantity of angle-delay pair coefficients corresponding to the plurality of port groups. When X is the maximum average quantity, X1+X2≤2X; or when X is the maximum total quantity, X1+X2≤X.

According to a seventeenth aspect, a communication apparatus is provided. The apparatus includes a processor. The processor is coupled to a memory, and may be configured to execute instructions in the memory, to implement the method according to any one of the first aspect, the second aspect, the fifth aspect, the sixth aspect, or the possible implementations of any one of the first aspect, the second aspect, the fifth aspect, or the sixth aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first apparatus. The first apparatus is, for example, a terminal device or a chip configured in the terminal device. When the first apparatus is the chip configured in the terminal device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver is a transceiver circuit. Optionally, the input/output interface is an input/output circuit.

Optionally, the transceiver includes a transmitter and/or a receiver.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

According to an eighteenth aspect, a communication apparatus is provided. The apparatus includes a processor. The processor is coupled to a memory, and may be configured to execute instructions in the memory, to implement the method according to any one of the third aspect, the fourth aspect, the seventh aspect, the eighth aspect, or the possible implementations of any one of the third aspect, the fourth aspect, the seventh aspect, the eighth aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a second apparatus. The second apparatus is, for example, a network device or a chip configured in the network device. When the apparatus is the chip configured in the network device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver is a transceiver circuit. Optionally, the input/output interface is an input/output circuit.

Optionally, the transceiver includes a transmitter and/or a receiver.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

According to a nineteenth aspect, a communication apparatus is provided. The apparatus includes a logic circuit. The logic circuit is coupled to an input/output interface, and is configured to communicate data through the input/output interface, to perform the method according to any one of the first aspect to the eighth aspect or the possible implementations of the first aspect to the eighth aspect.

According to a twentieth aspect, a computer-readable storage medium is provided. The computer-readable storage medium stores a computer program (which may also be referred to as code or instructions). When the computer program is run on a computer, the computer is enabled to perform the method according to any one of the first aspect to the eighth aspect or the possible implementations of the first aspect to the eighth aspect.

According to a twenty-first aspect, a computer program product is provided. The computer program product includes a computer program (which may also be referred to as code or instructions). When the computer program is run on a computer, the computer is enabled to perform the method according to any one of the first aspect to the eighth aspect or the possible implementations of the first aspect to the eighth aspect.

For specific implementations of the ninth aspect to the twenty-first aspect and beneficial effects brought by different implementations, refer to descriptions of the specific implementations and beneficial effects of the first aspect to the eighth aspect. Details are not described herein again.

## BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a schematic flowchart of a channel state information feedback method according to an embodiment of this application;
FIG. 4 is a diagram of a 2-stage differential method for indicating a linear combination coefficient according to an embodiment of this application;
FIG. 5 is a diagram of a 3-stage differential method for indicating a linear combination coefficient according to an embodiment of this application;
FIG. 6 is a schematic flowchart of another channel state information feedback method according to an embodiment of this application;
FIG. 7 is a schematic flowchart of still another channel state information feedback method according to an embodiment of this application;
FIG. 8 is a diagram of a 2-stage differential method for indicating an angle-delay pair coefficient according to an embodiment of this application;
FIG. 9 is a diagram of a 3-stage differential method for indicating an angle-delay pair coefficient according to an embodiment of this application;
FIG. 10 is a schematic flowchart of still another channel state information feedback method according to an embodiment of this application;
FIG. 11 is a diagram of a communication apparatus according to an embodiment of this application;
FIG. 12 is a diagram of a structure of a communication apparatus according to an embodiment of this application;
FIG. 13 is a diagram of a structure of a first apparatus according to an embodiment of this application;
FIG. 14 is a diagram of a structure of a second apparatus according to an embodiment of this application; and
FIG. 15 is a diagram of a structure of another communication apparatus according to an embodiment of this application.

## DESCRIPTION OF EMBODIMENTS

The following describes technical solutions of this application with reference to the accompanying drawings.

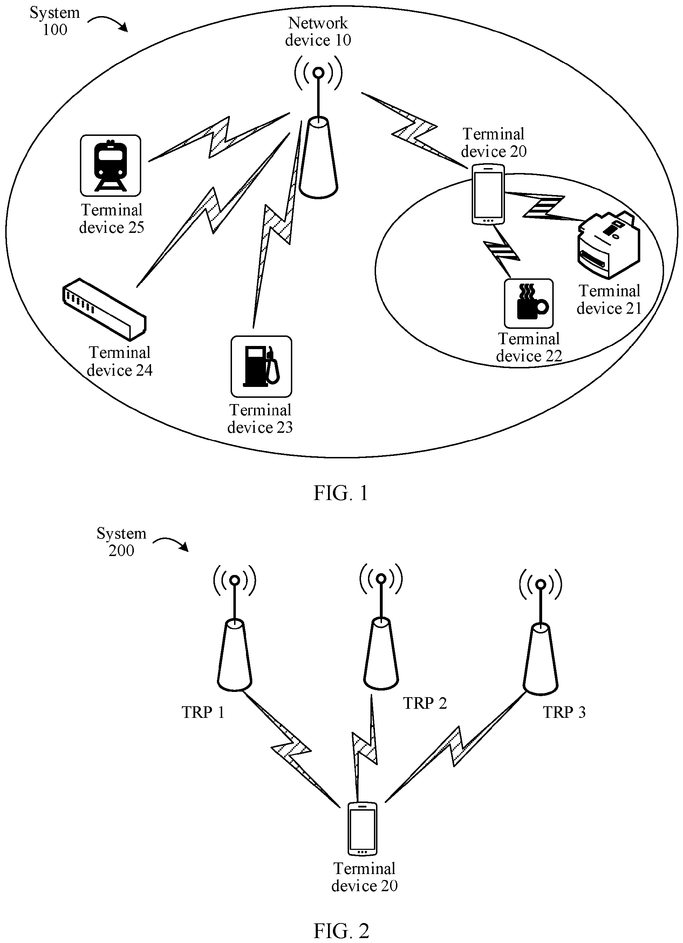

FIG. 1 shows a network architecture according to an embodiment of this application.

A communication system 100 shown in FIG. 1 includes a network device 10 and at least one terminal device, for example, a terminal device 20, a terminal device 21, a terminal device 22, a terminal device 23, a terminal device 24, and a terminal device 25. In the communication system, terminal devices 20 to 25 (six terminal devices) may send uplink data/signals/information to the network device 10, and the network device 10 may send downlink data/signals/information to any one of the terminal devices 20 to 25. In addition, the terminal device 20, the terminal device 21, and the terminal device 22 may also form a communication system. The network device 10 may communicate data/a signal/information with any one of the terminal device 20, the terminal device 23, the terminal device 24, and the terminal device 25. The terminal device 20 may further communicate data/a signal/information with the terminal device 21 or the terminal device 22. A plurality of antennas may be configured for each communication device, for example, the network device or the terminal device. For each communication device in the communication system 100, the plurality of configured antennas may include at least one transmit antenna configured to send a signal and at least one receive antenna configured to receive a signal. Therefore, the communication devices in the communication system 100, for example, the network device and the terminal device, may communicate with each other by using a multi-antenna technology.

FIG. 2 is a diagram of another network architecture according to an embodiment of this application.

A communication system 200 shown in FIG. 2 includes at least one network device and at least one terminal device, for example, includes a transmission reception point (transmission reception point, TRP) 1, a TRP 2, a TRP 3, and a terminal device 20. The TRP 1, the TRP 2, and the TRP 3 simultaneously serve the terminal device 20. Any two of the TRP 1, the TRP 2, and the TRP 3 may exchange data/signals/information. Such communication manner is a multi-station coordination manner. There are a plurality of multi-station coordination manners, for example, coherent joint transmission (coherent joint transmission, CJT) and non-coherent joint transmission (non-coherent joint transmission, NCJT).

In the CJT coordination manner, a plurality of TRPs simultaneously serve one terminal device. Transmission is transparent to the terminal device. From a perspective of the terminal device, the plurality of TRPs may be understood as one coordinating set, and the coordinating set may be equivalent to one network device. In the communication system, the terminal device needs to feed back relative channel information between the TRPs in the coordinating set, to enable coherent joint transmission.

Functions of the foregoing devices may be implemented by one independent device, or may be implemented by several devices together. FIG. 1 and FIG. 2 are merely examples, and do not constitute any limitation on the protection scope of this application. A communication method provided in embodiments of this application may further relate to a device or a transmission node that is not shown in FIG. 1. Certainly, the communication method provided in embodiments of this application may alternatively include only a part of the devices or transmission nodes shown in FIG. 1. This is not limited in embodiments of this application.

The foregoing network architectures applicable to embodiments of this application are merely examples, and a network architecture applicable to embodiments of this application is not limited thereto. Any network architecture that can implement functions of the foregoing devices is applicable to embodiments of this application.

The terminal device in embodiments of this application may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application and that need to be used together with other devices such as the smartphones, for example, various smart bands or smart jewelry used for monitoring physical signs.

The network device in embodiments of this application may be any communication device that has a wireless transceiver function and that is configured to communicate with the terminal device. The network device includes but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (home evolved NodeB, HeNB or home NodeB, HNB), a baseband unit (baseband unit, BBU), an access point (access point, AP) in a wireless fidelity (wireless fidelity, Wi-Fi) system, a wireless relay node, a transmission point (transmission point, TP), a transmission reception point (transmission reception point, TRP), and the like; may be a gNB or a transmission point (TRP or TP) in 5G such as a new radio (new radio, NR) system, or one or one group (including a plurality of antenna panels) of antenna panels of a base station in the 5G system; or may be a network node included in the gNB or the transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a long term evolution-advanced (LTE-advanced, LTE-A) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, a future evolved communication system, or vehicle-to-everything (vehicle-to-X, V2X). The V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V), an internet of vehicles, machine type communication (machine type communication, MTC), an internet of things (internet of things, IoT), long term evolution-machine (long term evolution-machine, LTE-M), machine-to-machine (machine to machine, M2M), and the like.

For ease of understanding embodiments of this application, the following first briefly describes terms in embodiments of this application.

1. Precoding technology: When a channel state is known, the network device may process a to-be-sent signal by using a precoding matrix that matches a channel resource, so that a precoded to-be-sent signal adapts to a channel, to reduce complexity of eliminating inter-channel impact by a receiving device. Therefore, after the to-be-sent signal is precoded, received signal quality (for example, a signal to interference plus noise ratio (signal to interference plus noise ratio, SINR)) is improved. Therefore, by using the precoding technology, a sending device and a plurality of receiving devices may perform transmission on a same time-frequency resource, in other words, multi-user multiple-input multiple-output (multi-user multiple-input multiple-output, MU-MIMO) is implemented. It should be noted that related descriptions of the precoding technology are merely an example for ease of understanding, and not intended to limit the protection scope of embodiments of this application. In a specific implementation process, the sending device may alternatively perform precoding in another manner. For example, when channel information (for example, but not limited to, a channel matrix) cannot be obtained, precoding is performed by using a preset precoding matrix or in a preset weighted processing manner. For brevity, specific content thereof is not described in this specification.

2. Precoding matrix indicator (precoding matrix indicator, PMI): The precoding matrix indicator may indicate a precoding matrix or directly indicate a channel matrix. The precoding matrix may be, for example, a precoding matrix determined by the terminal device based on a channel matrix of each subband. The channel matrix may be determined by the terminal device through channel estimation, in another manner, or based on channel reciprocity. In a multi-station coordination scenario, the precoding matrix may be a precoding matrix determined by the terminal device based on channel matrices of a plurality of transmission nodes in a coordinating set on the subbands. It should be understood that a specific method for determining the precoding matrix by the terminal device is not limited to the foregoing descriptions. For a specific implementation, refer to a conventional technology. For brevity, implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. This is not limited in this application. It should be understood that the foregoing listed manners of determining the precoding matrix are merely examples, and should not constitute any limitation on this application. For the manner of determining the precoding matrix, refer to the conventional technology. For brevity, detailed descriptions of a specific process of determining the precoding matrix are omitted herein.

3. Precoding submatrix: The precoding submatrix in embodiments of this application may be understood as a precoding matrix corresponding to one transmission node or one port group.

4. Spatial domain basis vector: Each spatial domain basis vector corresponds to one transmit beam (beam) of a transmit-end device. Specifically, the spatial domain basis vector may be, for example, but not limited to, a column vector of a two-dimensional discrete Fourier transform (discrete fourier transform, DFT) matrix or a column vector of an oversampled two-dimensional DFT matrix. In other words, the spatial domain basis vector may be a two-dimensional DFT vector. The two-dimensional DFT vector may be usually used to describe a beam obtained by superimposing a beam in a horizontal direction on a beam in a vertical direction. Alternatively, the spatial domain basis vector may be an eigenvector determined based on a spatial statistical characteristic of a channel, for example, may be an eigenvector obtained by performing SVD on a spatial statistical covariance matrix of the channel, that is, a column vector of a unitary matrix of the SVD. Certainly, this application is not limited thereto.

In a specific implementation process, a spatial domain basis vector set may be predefined by both a receive-end device and the transmit-end device, for example, predefined according to a protocol. Certainly, this application is not limited thereto.

It should be noted that, in the descriptions of this specification, unless otherwise specified, or if there is no conflict with an actual function or internal logic of the vector in related descriptions, all vectors described in this specification may be understood as vectors in a same form, for example, row vectors or column vectors.

A dimension of the spatial domain basis vector is $N_1 * N_2 \times 1$, that is, the spatial domain basis vector includes $N_1 * N_2$ elements, where $N_1$ and $N_2$ may be respectively quantities of horizontal transmit antenna ports and vertical transmit antenna ports of the transmit-end device in one polarization direction.

5. Frequency domain basis vector: Each frequency domain basis vector may correspond to one frequency domain unit change mode of the channel. Simply speaking, each frequency domain unit may be represented by using an element corresponding to the frequency domain unit in the frequency domain basis vector. To be specific, elements corresponding to the frequency domain units in the frequency domain basis vector may reflect a frequency domain unit change mode.

The frequency domain unit change mode may be used to represent a change rule of the channel on each frequency domain unit of an entire frequency band. A frequency domain unit change mode represents a change rule of the channel on the frequency domain units. For example, if elements of a frequency domain basis vector are equal, the frequency domain basis vector may represent a frequency domain unit change mode in which the channel remains unchanged on the frequency domain units. For example, if adjacent elements of a frequency domain basis vector greatly change, the frequency domain basis vector may represent a frequency domain unit change mode in which the channel changes greatly on the frequency domain units.

Specifically, the frequency domain basis vector may be a column vector of a one-dimensional DFT matrix, a column vector of an oversampled one-dimensional DFT matrix, or an eigenvector (for example, an eigenvector obtained by performing SVD on a frequency-domain statistical covariance matrix of the channel, that is, a column vector of a unitary matrix of the SVD) determined based on a frequency-domain statistical characteristic of the channel.

It should be noted that, for example, a frequency domain basis vector set is a one-dimensional DFT matrix. A quantity of DFT points may be predefined or may be configured by the transmit-end device for the receive-end device. The quantity of points may be a quantity of the frequency domain units. If the quantity of DFT points is configured by the transmit-end device for the receive-end device, the transmit-end device may perform the configuration in an explicit indication manner, or may perform the configuration in an implicit indication manner. For example, if the configuration is performed in the explicit indication manner, the transmit-end device may perform the configuration by using at least one of RRC signaling, MAC signaling, and downlink control information (downlink control information, DCI). For example, if the configuration is performed in the implicit indication manner, specifically, the quantity of DFT points may be implicitly indicated by configuring a quantity of resource elements (resource elements, REs) or a quantity of subbands.

In an example, the frequency domain basis vector may be represented as the following formula:

$$\mathbf{f}_{2,j} = \begin{bmatrix} \omega_A^{0*j} \\ \omega_A^{1*j} \\ \vdots \\ \omega_A^{(A-1)*j} \end{bmatrix}$$

where $f_{2,j}$ is a $j^{th}$ column vector (namely, a $j^{th}$ frequency domain basis vector) in the frequency domain basis vector set, $\omega_A = e^{-2\pi i/A}$, i is an imaginary unit, $0 \leq j \leq A-1$, and j and A are both integers. A may be the quantity of REs or subbands. Certainly, an expression form of the frequency domain basis vector may not be limited thereto.

In a specific implementation process, the frequency domain basis vector set may be predefined by both the receive-end device and the transmit-end device, for example, predefined according to the protocol. Certainly, this application is not limited thereto.

A dimension of the frequency domain basis vector is $N_3 \times 1$. To be specific, the vector includes $N_3$ elements, and $N_3$ may be, for example, a quantity of frequency domain units of a precoding submatrix or a channel submatrix that needs to be fed back.

6. Linear combination coefficient: A precoding submatrix or a channel submatrix that needs to be fed back may be represented in a form of linear combination and based on a spatial domain basis vector and a frequency domain basis vector, and includes but is not limited to the following two manners.

In an implementation, a precoding submatrix in each polarization direction of each transport layer or a channel submatrix in each polarization direction of each receive port may be written into a matrix form whose dimension is $(N_1 * N_2) \times N_3$ or $N_3 \times (N_1 * N_2)$. Each matrix that needs to be fed back may be represented by linear weighting of several space-frequency base matrices whose dimensions are the same. Each weighting coefficient corresponds to one space-frequency base matrix. The weighting coefficient is a linear combination coefficient. Each space-frequency base matrix is constructed based on one spatial domain basis vector and one frequency domain basis vector. Specifically, one of the two vectors may be one of the spatial domain basis vector and the frequency domain basis vector or a transformation thereof, and the other one of the two vectors may be the other one of the spatial domain basis vector and the frequency domain basis vector or a transformation thereof. The foregoing transformation may be, for example, but not limited to, transposition, conjugation, and conjugate transposition. For example, one space-frequency base matrix may be a product of one spatial domain basis vector and a conjugate transpose vector of one frequency domain basis vector, may be a product of the spatial domain basis vector and a transposed vector of the frequency domain basis vector, may be a product of the frequency domain basis vector and a conjugate transpose vector of the spatial domain basis vector, or may be a product of the frequency domain basis vector and a transposed vector of the spatial domain basis vector. Certainly, this application is not limited thereto. In a specific implementation process, the two vectors for constructing the space-frequency base matrix may be set as a row vector and a column vector. In this case, the space-frequency base matrix may be a product of the column vector and the row vector.

In another implementation, a precoding submatrix in each polarization direction of each transport layer or a channel submatrix in each polarization direction of each receive port may be written into a vector matrix form whose dimension is $(N_1 * N_2 * N_3) \times 1$. Each vector that needs to be fed back may be represented by linear weighting of several space-frequency basis vectors whose dimensions are the same. Each weighting coefficient corresponds to one space-frequency basis vector. The weighting coefficient is a linear combination coefficient. Each space-frequency basis vector may be a Kronecker product of two vectors. One of the two vectors is constructed based on a spatial domain basis vector, and the other vector is constructed based on a frequency domain basis vector.

Specifically, one of the two vectors may be the spatial domain basis vector or a transformation thereof, and the other one of the two vectors may be the frequency domain basis vector or a transformation thereof. The foregoing transformation may be, for example, but not limited to, transposition, conjugation, and conjugate transposition. For example, a space-frequency basis vector may be a Kronecker product of a spatial domain basis vector and a frequency domain basis vector, and may be specifically expressed as the following formula: $v = u_1 \otimes u_2$. Alternatively, a space-frequency basis vector may be a Kronecker product of a spatial domain basis vector and a conjugate vector of a frequency domain basis vector, and may be specifically expressed as the following formula: $v = u_1 \otimes \overline{u}_2$. Alternatively, a space-frequency basis vector may be a Kronecker product of a conjugate vector of a spatial domain basis vector and a frequency domain basis vector, and may be specifically expressed as the following formula: $v = \overline{u}_1 \otimes u_2$. Alternatively, a space-frequency basis vector may be a Kronecker product of a frequency domain basis vector and a spatial domain basis vector, and may be specifically expressed as the following formula: $v = u_2 \otimes u_1$. Alternatively, a space-frequency basis vector may be a Kronecker product of a conjugate vector of a frequency domain basis vector and a spatial domain basis vector, and may be specifically expressed as the following formula: $v = \overline{u}_2 \otimes u_1$. Alternatively, a space-frequency basis vector may be a Kronecker product of a frequency domain basis vector and a conjugate vector of a spatial domain basis vector, and may be specifically expressed as the following formula: $v = u_2 \otimes \overline{u}_1$. $v$ is the space-frequency basis vector, $u_1$ is the spatial domain basis vector, $u_2$ is the frequency domain basis vector, $\overline{u}_1$ is the conjugate vector of $u_1$, and $\overline{u}_2$ is the conjugate vector of $u_2$. Certainly, this application is not limited thereto.

In each of the foregoing two implementations, one linear combination coefficient corresponds to one spatial domain basis vector and one frequency domain basis vector.

7. Port: The port is a short name of an antenna port, and may be understood as a transmit antenna that can be identified by the receiving device or as a transmit antenna that can be spatially distinguished. One antenna port may be configured for each virtual antenna, each virtual antenna may be a weighted combination of a plurality of physical antennas, and each antenna port may correspond to one reference signal. Therefore, each antenna port may be referred to as a reference signal port, for example, a channel state information reference signal (channel state information reference signal, CSI-RS) port or a sounding reference signal (sounding reference signal, SRS) port.

8. Port group: The port group described in this application may be a CSI-RS port group. The terminal device receives CSI-RS signals from a plurality of network devices, and the CSI-RS signal of each network device corresponds to one group of CSI-RS ports. The plurality of network devices may send the CSI-RSs on different resources (resources). To be specific, the port groups of the network devices are located on different resources. Alternatively, the plurality of network devices may send the CSI-RSs on a same resource but different CSI-RS port groups. To be specific, the port groups of the network devices are located on the same resource, but ports in different port groups are different from each other.

9. Angle vector: The angle vector may be understood as a precoding vector for performing beamforming on a reference signal. A transmitted reference signal may have specific spatial directivity through beamforming. Therefore, a process of precoding the reference signal based on the angle vector may also be considered as a process of spatial domain (or space domain for short) precoding.

A quantity of ports of a precoded reference signal obtained by precoding a reference signal based on one or more angle vectors is the same as a quantity of the angle vectors. When the quantity of the angle vectors is less than a quantity of transmit antennas, dimensions of antenna ports can be reduced through spatial domain precoding, to reduce pilot overheads.

It is assumed that the transmit antenna is a single-polarized antenna, the quantity of transmit antennas is T, a quantity of frequency domain units is N, $N \geq 1$, and N is an integer. In this case, for a receive antenna, a channel may be a matrix whose dimension is $N \times T$. If spatial domain precoding is performed on a reference signal based on one angle vector, the angle vector may be loaded to the reference signal. Because a dimension of the angle vector is $T \times 1$, for a receive antenna, a dimension of a precoded channel may be $N \times 1$. That is, a received precoded reference signal may be represented as a matrix whose dimension is $N \times 1$.

Because the reference signal to which the angle vector is loaded may be transmitted to the terminal device through a downlink channel, a channel measured by the terminal device based on the received precoded reference signal is equivalent to a channel to which the angle vector is loaded.

Therefore, if the spatial domain precoding is performed on the reference signal based on one angle vector, for each frequency domain unit on each receive antenna, a dimension of a channel estimated based on a precoded reference signal may be $1 \times 1$.

It should be understood that the angle vector is a form that is used to represent an angle and that is provided in this application. The angle vector is named merely for ease of distinguishing from the delay vector described below, and this shall not constitute any limitation on this application. This application does not exclude a possibility of defining another name in a future protocol to represent a same or similar meaning.

It should be further understood that, merely for ease of understanding, the foregoing shows a possible implementation of precoding the reference signal based on the angle vector, but this shall not constitute any limitation on this application. This application does not exclude a possibility of precoding the reference signal based on the angle vector in another manner. A process in which the network device performs the spatial domain precoding on the reference signal is implemented inside the device. This is not limited in this application.

10. Frequency domain unit: The frequency domain unit is a unit of a frequency domain resource, and may represent different frequency domain resource granularities. The frequency domain unit may include, for example, but not limited to, a subband (subband), a resource block (resource block, RB), a resource block group (resource block group, RBG), a precoding resource block group (precoding resource block group, PRG), and the like.

In embodiments of this application, the network device may determine, based on a feedback of the terminal device, a precoding matrix corresponding to each frequency domain unit.

11. Delay vector: The delay vector is a vector that is proposed in this application and that may be used to represent a change rule of a channel in frequency domain. As mentioned above, a multipath delay causes frequency selective fading. It can be learned from Fourier transform that a time delay of a signal in time domain may be equivalent to a phase gradient in frequency domain.

For example, for a signal g(t), the signal may be transformed in frequency domain through Fourier transform:

$$F\big(g(t)\big) = \int_{-\infty}^{+\infty} g(t)e^{j\omega t}dt$$ ; and for a signal g(t-$t_0$), the signal may be transformed in frequency domain through

Fourier transform: $$F\big(g(t - t_0)\big) = \int_{-\infty}^{+\infty} g(t - t_0)e^{j\omega t}dt = e^{j\omega t_0}F\big(g(t)\big)$$ . $\omega$ is a frequency variable, different frequencies correspond to different phase rotations, and $t$ and $t$-$t_0$ represent delays.

A signal of the two delays may be represented as x(t)=g(t)+g(t-$t_0$). Therefore, a function $X(\omega) = g(\omega)(1 + e^{j\omega t_0})$ of

the frequency variable may be obtained. Assuming $g(\omega) \equiv 1$, $X(\omega) = (1 + e^{j\omega t_0})$ may be obtained. Therefore, signals of two different delays cause the frequency selective fading.

Because a phase change of a channel in each frequency domain unit is related to a delay, a change rule of a phase of the channel in each frequency domain unit may be represented by using a delay vector. In other words, the delay vector may be used to represent a delay characteristic of the channel.

Precoding a reference signal based on the delay vector may essentially mean performing phase rotation on each frequency domain unit in frequency domain based on an element in the delay vector, to pre-compensate, by using a precoded reference signal, for a frequency selective characteristic caused by the multipath delay. Therefore, a process of precoding the reference signal based on the delay vector may be considered as a process of frequency domain precoding.

Precoding the reference signal based on different delay vectors is equivalent to performing phase rotation on each frequency domain unit of the channel based on the different delay vectors. In addition, angles of phase rotation on a same frequency domain unit may be different. To distinguish different delays, the network device may precode a reference signal based on each of L delay vectors.

An angle-delay pair may be a combination of one angle vector and one delay vector. Each angle-delay pair may include one angle vector and one delay vector. Each angle-delay pair may be uniquely determined based on one angle vector and one delay vector. It should be understood that the angle-delay pair may be understood as a representation form of a space-frequency basic unit determined based on one angle vector and one delay vector, but the angle-delay pair is not necessarily a unique representation form.

12. Angle-delay pair: The angle-delay pair may be a combination of one angle vector and one delay vector. Each angle-delay pair may include one angle vector and one delay vector. Each angle-delay pair may be uniquely determined based on one angle vector and one delay vector. It should be understood that the angle-delay pair may be understood as a representation form of a space-frequency basic unit determined based on one angle vector and one delay vector, but the angle-delay pair is not necessarily a unique representation form.

13. Angle-delay pair coefficient: The angle-delay pair coefficient in embodiments of this application may be understood as a combination coefficient for linear combination of angle-delay pairs. One angle-delay pair coefficient corresponds to one angle-delay pair, and one port and one frequency domain basis vector uniquely determine one angle-delay pair. Therefore, one angle-delay pair coefficient also corresponds to one port and one frequency domain basis vector.

14. Channel reciprocity: In a time division duplex (time division duplexing, TDD) mode, on uplink and downlink channels, signals are transmitted on a same frequency domain resource and on different time domain resources. In a short period of time (for example, coherence time of channel propagation), it may be considered that the signals on the uplink and downlink channels encounter same channel fading. This is reciprocity between the uplink and downlink channels. Based on the reciprocity between the uplink and downlink channels, the network device may measure the uplink channel based on an uplink reference signal, for example, a sounding reference signal (sounding reference signal, SRS). In addition, the downlink channel may be estimated based on the uplink channel, so that a precoding matrix used for downlink transmission can be determined.

However, in a frequency division duplex (frequency division duplexing, FDD) mode, because a band interval between the uplink and downlink channels is far greater than coherence bandwidth, and the uplink and downlink channels do not have complete reciprocity, a precoding matrix that is used for downlink transmission and that is determined by using the uplink channel may not adapt to the downlink channel. However, the uplink and downlink channels in the FDD mode still have partial reciprocity, for example, angle reciprocity and delay reciprocity. Therefore, an angle and a delay may also be referred to as reciprocity parameters.

When a signal is transmitted through a radio channel, the signal may arrive at a receive antenna through a plurality of paths from a transmit antenna. A multipath delay spread causes frequency selective fading, that is, a change of a frequency domain channel. Delays are transmission time of a radio signal on different transmission paths, are determined by a distance and a speed, and are irrelevant to frequency domain of the radio signal. Therefore, the delays on the uplink and downlink channels in the FDD mode may be considered to be the same, in other words, reciprocal.

In addition, the angle may be an angle of arrival (angle of arrival, AOA) at which the signal arrives at the receive antenna through a radio channel, or may be an angle of departure (angle of departure, AOD) at which the signal is transmitted through the transmit antenna. In embodiments of this application, the angle may be an angle of arrival at which an uplink signal arrives at the network device, or may be an angle of departure at which the network device transmits a downlink signal. Because of reciprocity of transmission paths of the uplink and downlink channels at different frequencies, the angle of arrival of the uplink reference signal and the angle of departure of the downlink reference signal may be considered to be reciprocal.

Therefore, it may be considered that the delays and the angles on the uplink and downlink channels in the FDD mode have reciprocity. In embodiments of this application, each angle may be represented by using one angle vector, and each delay may be represented by using one delay vector. Therefore, in embodiments of this application, one angle vector may represent one angle, and one delay vector may represent one delay.

15. Reference signal (reference signal, RS) and precoded reference signal: The reference signal may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS), a sounding reference signal (sounding reference signal, SRS), or the like. It should be understood that the foregoing listed reference signals are merely examples, and should not constitute any limitation on this application. This application does not exclude a possibility of defining another reference signal in a future protocol to implement a same or similar function.

The precoded reference signal may be a reference signal obtained by precoding a reference signal. In embodiments of this application, the precoding may specifically include beamforming (beamforming) and/or phase rotation. The beamforming may be implemented, for example, by precoding a reference signal based on one or more angle vectors. The phase rotation may be implemented, for example, by precoding a reference signal based on one or more delay vectors.

In embodiments of this application, for ease of differentiation and description, a reference signal obtained through precoding such as beamforming and/or phase rotation is referred to as a precoded reference signal, and a reference signal that is not precoded is referred to as a reference signal for short.

In embodiments of this application, precoding the downlink reference signal based on the one or more angle vectors may also be referred to as loading the one or more angle vectors to the downlink reference signal. Precoding the downlink reference signal based on the one or more delay vectors may also be referred to as loading the one or more delay vectors to the downlink reference signal.

In the FDD system, the network device first sends, to the terminal device, a configuration used for channel measurement. The terminal device measures a channel based on a reference signal delivered by the network device, and feeds back, to the network device, channel state information obtained through measurement. The channel state information is, for example, CSI. The CSI includes a rank indication (rank indication, RI), channel quality information (channel quality information, CQI), and a PMI. The network device may determine, based on the RI, a quantity of streams (or layers) for transmitting data to the terminal device. The network device may determine, based on the CQI, a modulation order for transmitting the data to the terminal device and a bit rate of channel coding. The network device may determine, based on the PMI, a precoding matrix for transmitting the data to the terminal device.

In a current NR standard protocol, a PMI feedback in R15 is classified into two types: a type I (Type I) and a type II (Type II). A beam selection idea is used in a type I codebook, and a primary eigenvector is represented by using a spatial domain basis vector. A linear beam combination idea is used in a type II codebook, and a primary eigenvector (that is, a precoding matrix of a single user) is represented by using a linear combination of several spatial domain basis vectors.

In an R15 Type II codebook, a combination coefficient is calculated for each subband, beam selection is fed back for a wideband, and the combination coefficient is fed for the subband. In addition, the feedback on each subband is relatively independent, and a relationship between the subbands is not fully explored. Based on the R15 type II codebook, in an R16 type II codebook, the relationship between the subbands in frequency domain is explored, and compression on a frequency domain (delay) is improved. To be specific, the primary eigenvector is represented by using a bilinear combination of several spatial domain basis vectors and several frequency domain basis vectors, so that performance of the codebook can be improved while feedback overheads are reduced.

For each transport layer, a codebook structure of R16 type II is $W = W_1 \widetilde{W}_2 W_f^H$. W is $N_3$ to-be-fed-back primary eigenvectors of the transport layer, a dimension is P×1, and P is a quantity of CSI-RS ports on a network device (for example, a base station) side. Considering dual-polarization, P=2$N_1$*$N_2$, where $N_1$ is a quantity of horizontal CSI-RS ports, $N_2$ is a quantity of vertical CSI-RS ports, and $N_3$ is a quantity of frequency domain units. $W_1$ is a spatial domain DFT basis vector set selected by the terminal device based on a channel measurement result, $W_1$ = $\begin{bmatrix} v_0 v_1 \dots v_{L-1} & 0 \\ 0 & v_0 v_1 \dots v_{L-1} \end{bmatrix}$, and $\{v_i\}_{i=0}^{L-1}$ includes L orthogonal DFT basis vectors that correspond to two polarizations and whose dimensions are $N_1$*$N_{2X}$ 1. $W_f$ = [$f_{k0} f_{k1} \dots f_{kM-1}$] is a frequency domain basis vector set selected by the terminal device based on the channel measurement result, $\{f_{k_m}\}_{m=0}^{M-1}$ includes M orthogonal DFT basis vectors whose dimensions are $N_3$×1, and $\widetilde{W}_2$ includes linear combination coefficients corresponding to the spatial domain basis vectors and the frequency domain basis vectors.

In this application, "*" represents a product, and "×" represents a matrix dimension.

Corresponding to the codebook structure of R16 type II, a PMI fed back by the terminal device includes spatial domain basis vector indication information, frequency domain basis vector indication information, a non-zero linear combination coefficient, and a bitmap (bitmap) indicating a location of the non-zero linear combination coefficient. The network device determines the precoding matrix (namely, the primary eigenvector) of the single user based on the PMI fed back by the terminal device.

An R17 enhanced type II port selection codebook uses partial reciprocity (angle and delay reciprocity) of the uplink and downlink channels in the FDD system, and estimates partial prior information based on uplink channel information. The prior information includes information about an angle and a delay of the uplink channel. Then, the angle and the delay that are obtained based on the information about the uplink channel are loaded to a downlink pilot port. In addition, the terminal device is notified to measure and feed back an angle-delay pair coefficient that needs to be obtained by the network device. Finally, the network device may reconstruct a downlink channel or a precoding matrix based on the information that is about the angle and the delay and that is measured by using an uplink pilot and the angle-delay pair coefficient fed back by the terminal device. Compared with the R16 type II codebook, in the R17 enhanced type II port selection codebook, the terminal device does not need to determine the spatial domain basis vectors and the frequency domain basis vectors. Complexity is reduced.

For each transport layer, a codebook structure of the R17 enhanced type II port selection codebook is $W = W_1 \widetilde{W}_2 W_f^H$. Herein, W is a linear combination of a selected port and an angle-delay pair corresponding to the selected port. The network device further determines the precoding matrix (namely, the primary eigenvector) of the single user based on W fed back by the terminal device and with reference to a precoding matrix (namely, the angle-delay pair) loaded by the network device on each port. $W_1$ is a port selection matrix whose dimension is P$\times$2L, and each column has only one non-zero element whose value is 1, indicating that the terminal device can select 2L ports from the P CSI-RS ports, where L is a quantity of ports selected in one polarization direction. $W_f$ is a frequency domain basis vector set whose dimension is $N_f\times$M, including M frequency domain basis vectors whose dimensions are $N_f\times$1, and $N_f$ is a quantity of frequency domain units. Each CSI-RS port may correspond to K angle-delay pairs (where that is, the K angle-delay pairs are loaded on the port), and M columns of $W_f$ indicate that the terminal device selects M of the K loaded angle-delay pairs for reporting. A dimension of $\widetilde{W}_2$ is 2L$\times$M, and is M angle-delay pair coefficients selected for each of the 2L ports selected by the terminal device.

Corresponding to the R17 enhanced type II port selection codebook, a PMI fed back by the terminal device includes a frequency domain basis vector, a non-zero angle-delay pair coefficient, and a bitmap indicating a location of the non-zero angle-delay pair coefficient. The network device restores the precoding matrix (namely, the primary eigenvector) of the single user based on the feedback of the terminal device and a precoding matrix (namely, the angle-delay pair) loaded by the network device on the CSI-RS port.

The codebook structure of R16 type II and the R17 enhanced type II port selection codebook are designed for a non-multi-station coordination scenario. If the foregoing codebook structures are used in a multi-station coordination scenario, the terminal device independently reports, for each transmission node, channel state information of the transmission node. Relative channel information between the transmission nodes cannot be reflected. The codebook structure of R16 type II and the R17 enhanced type II port selection codebook cannot adapt to the multi-station coordination scenario, and performance of enabling joint transmission between a plurality of stations is poor.

Embodiments of this application propose a channel state information feedback method, to feed back relative channel information between a plurality of stations, and enable coherent joint transmission.

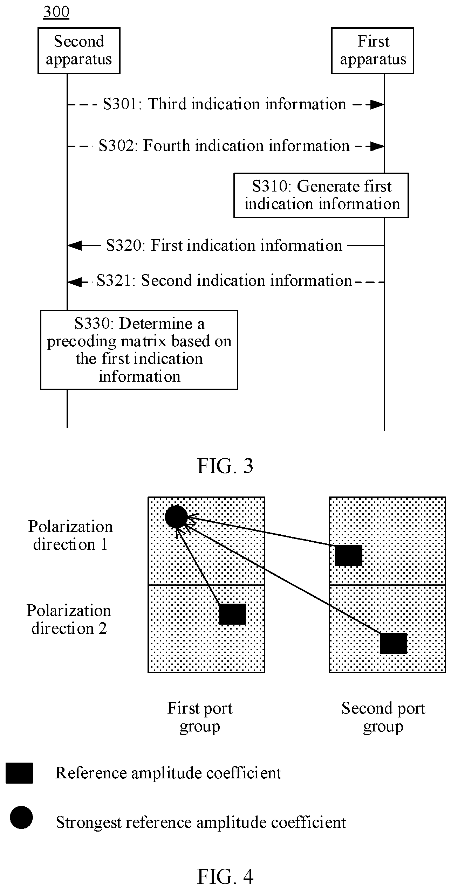

FIG. 3 is a schematic flowchart of a channel state information feedback method according to an embodiment of this application.

A multi-station joint codebook is provided in this embodiment of this application: For each transport layer/each receive port (receive port of a first apparatus), $W_i$ (precoding submatrix) corresponding to one port group (transmit port group of a second apparatus) may be represented by using a linear combination of a plurality of space-frequency basis matrices or space-frequency basis vectors determined based on one group of spatial domain basis vectors and one group of frequency domain basis vectors. A value 1 of i indicates a parameter corresponding to a first port group, a value 2 of i indicates a parameter corresponding to a second port group, and so on.

The first port group and the second port group represent transmit port groups corresponding to different second apparatuses. The second apparatus may be one TRP in a multi-station scenario, and the different second apparatuses are different TRPs in the multi-station scenario.

For example, the multi-station joint codebook is $W_i = W_{i,1} \widetilde{W}_{i,2} W_{i,f}^H$. $W_{i,1}$ is a spatial domain basis vector set selected from a candidate spatial domain basis vector set. Considering dual-polarization,

$$W_{i,1} = \begin{bmatrix} v_{i,0} \, v_{i,1} \, ... \, v_{i,L_i-1} & 0 \\ 0 & v_{i,0} \, v_{i,1} \, ... \, v_{i,L_i-1} \end{bmatrix}$$, and $\{v_{i,n}\}_{n=0}^{L_i-1}$ includes Li orthogonal basis vectors whose

dimensions are $N_1$*$N_2\times$1 and that correspond to one polarization. $W_{i,f} = \begin{bmatrix} f_{i,k_0} f_{i,k_1} ... f_{i,k_{M_i-1}} \end{bmatrix}$ is a frequency

domain basis vector set selected from a candidate frequency domain basis vector set, $\left\{\boldsymbol{f}_{k_m}\right\}_{m=0}^{M_i-1}$ includes Mi orthogonal basis vectors whose dimensions are $N_3 \times 1$, and $N_3$ is a quantity of frequency domain units. $\tilde{W}_{i,2}$ is a linear combination coefficient matrix corresponding to a spatial domain basis vector and a frequency domain basis vector.

It should be understood that the candidate frequency domain basis vector set may be a frequency domain basis vector set preconfigured on the first apparatus and/or the second apparatus, and the candidate spatial domain basis vector set may be a spatial domain basis vector set preconfigured on the first apparatus and/or the second apparatus.

It should be noted that the term "indication" mentioned in the descriptions of embodiments of this application may include a direct indication and an indirect indication. When a piece of indication information indicates A, the indication information may directly indicate A or indirectly indicate A, but it does not indicate that the indication information definitely carries A.

Information indicated by the indication information is referred to as to-be-indicated information. In this case, in a specific implementation process, there are a plurality of manners of indicating the to-be-indicated information, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, indication overheads can be reduced to an extent by using a pre-agreement (for example, a protocol specification).

The indication information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. For example, the configuration information may include, but is not limited to, one or a combination of at least two of radio resource control signaling, MAC layer signaling, and physical layer signaling. The radio resource control signaling includes, for example, RRC signaling. The MAC layer signaling includes, for example, a MAC control element (control element, CE). The physical layer signaling includes, for example, DCI.

The method 300 shown in FIG. 3 includes the following steps.

Step S310: The first apparatus generates first indication information. The first indication information indicates a precoding matrix. The precoding matrix includes a first precoding submatrix and a second precoding submatrix. The first precoding submatrix corresponds to a first port group, and the second precoding submatrix corresponds to a second port group.

It should be understood that the generated first indication information may be specific to each transport layer, or may be specific to each receive port of the first apparatus (where the receive port in this application may be considered as a receive port of the first apparatus). The port group in this application may be considered as a transmit port group of the second apparatus.

For example, the generated first indication information is specific to each transport layer, that is, a precoding matrix of the transport layer is fed back. The first apparatus receives reference signals sent by at least two TRPs (where one TRP corresponds to one port group), and splices channels used by the at least two TRPs to send the reference signals, to obtain a spliced multi-station channel $H = [\boldsymbol{H}_{1,k}, ..., \boldsymbol{H}_{1,k}]$ whose dimension is $N_{rx} \times (I^*P)$. $\{\boldsymbol{H}_{i,k}\}_{i=1,...,I;k=0,...,N_3-1}$ is channel information corresponding to an $i^{th}$ port group on the $N_3$ frequency domain units, that is, a channel submatrix whose dimension is $N_{rx} \times P$. Considering dual-polarization, $P=2N_1^*N_2$. $N_1$ is a quantity of horizontal ports of the reference signal, $N_2$ is a quantity of vertical ports of the reference signal, $N_{rx}$ represents a quantity of receive ports of the first apparatus, $\boldsymbol{H}_{1,k}$ represents a channel submatrix corresponding to the first port group, $\boldsymbol{H}_{I,k}$ represents a channel submatrix corresponding to an $I^{th}$ port group, and I represents a quantity of TRPs or a quantity of port groups. It should be understood that, a quantity of channel submatrices included in the multi-station channel **H** may be determined by a quantity of TRPs in multi-station coordination, and "..." in the multi-station channel **H** omits a channel submatrix corresponding to another port group. If the multi-station channel **H** includes three channel submatrices, $H = [\boldsymbol{H}_{1,k}, \boldsymbol{H}_{2,k}, \boldsymbol{H}_{3,k}]$. $\boldsymbol{H}_{1,k}$ represents the channel submatrix corresponding to the first port group, $\boldsymbol{H}_{2,k}$ represents a channel submatrix corresponding to the second port group, and $\boldsymbol{H}_{3,k}$ represents a channel submatrix corresponding to a third port group. If the multi-station channel **H** includes another quantity of channel submatrices, the rest may be deduced by analogy, and details are not described herein.

$N_{rank}$ right eigenvectors whose dimensions are $(I^*P) \times 1$ may be obtained by performing eigenvalue decomposition on the multi-station channel **H,** where $N_{rank}$ is a quantity of transport layers (or a quantity of ranks) that is fed back by the first apparatus. For a process of performing the eigenvalue decomposition on the channel matrix to obtain the right eigenvectors, refer to a conventional technology. Details are not described herein. The first apparatus sorts and rearranges the right eigenvectors obtained through decomposition, to obtain the first indication information that needs to be fed back for each transport layer. For example, if the first indication information indicates two precoding submatrices,

$W = [W_1{}^T, W_2{}^T]$, where T is a matrix or vector transpose symbol. **W** indicated by the first indication information is the precoding matrix, including a plurality of precoding submatrices. $W_1$ is the first precoding submatrix corresponding to the first port group, and $W_2$ is the second precoding submatrix corresponding to the second port group. If the first indication information indicates three precoding submatrices, $W = [W_1{}^T, W_2{}^T, W_3{}^T]$, where $W_3{}^T$ is a third precoding submatrix corresponding to the third port group, and so on. A dimension of the precoding submatrix may be $P*N_3$, where $N_3$ is the quantity of frequency domain units.

For example, the generated first indication information is specific to each receive port, that is, channel information of the receive port is fed back. The first apparatus receives reference signals sent by at least two TRPs (where one TRP corresponds to one port group), and sorts and rearranges information about channels used by the at least two TRPs to send the reference signals, to generate the first indication information specific to each receive port. For example, if the first indication information indicates two precoding submatrices, $W = [W_1{}^T, W_2{}^T]$, where T is a matrix or vector transpose symbol. **W** indicated by the first indication information is the precoding matrix, including a plurality of precoding submatrices. $W_1$ is the first precoding submatrix corresponding to the first port group, and $W_2$ is the second precoding submatrix corresponding to the second port group. If the first indication information indicates three precoding submatrices, $W = [W_1{}^T, W_2{}^T, W_3{}^T]$, where $W_3{}^T$ is a third precoding submatrix corresponding to the third port group, and so on. A dimension of the precoding submatrix may be $P*N_3$, where $N_3$ is the quantity of frequency domain units.

The foregoing process of generating the first indication information specific to each transport layer or each receive port is merely an example, and is an example for more complete understanding of this application. The protection scope of this application is not limited.

In a possible implementation, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M1 frequency domain basis vectors, and the T2 linear combination coefficients are used to determine the second precoding submatrix. L1, M1, T1, L2, and T2 are all positive integers.

For example, the T1 linear combination coefficients are all linear combination coefficients in K1 linear combination coefficients, and the K1 linear combination coefficients correspond to the L1 spatial domain basis vectors and the M1 frequency domain basis vectors: T1=K1=2L1*M1. The T2 linear combination coefficients are all linear combination coefficients in K2 linear combination coefficients, and the K2 linear combination coefficients correspond to the L2 spatial domain basis vectors and the M1 frequency domain basis vectors: T2=K2=2L2*M1.

It should be understood that, in this example, the K1 linear combination coefficients are all linear combination coefficients determined by the L1 spatial domain basis vectors and the M1 frequency domain basis vectors, and the K2 linear combination coefficients are all linear combination coefficients determined by the L2 spatial domain basis vectors and the M1 frequency domain basis vectors.

For example, the T1 linear combination coefficients are a part of K1 linear combination coefficients, and the K1 linear combination coefficients correspond to the L1 spatial domain basis vectors and the M1 frequency domain basis vectors: T1<K1 and K1=2L1*M1. The T2 linear combination coefficients are a part of K2 linear combination coefficients, and the K2 linear combination coefficients correspond to the L2 spatial domain basis vectors and the M1 frequency domain basis vectors: T2<K2 and K2=2L2*M1.

It should be understood that, in this example, a quantity of all linear combination coefficients determined by the L1 spatial domain basis vectors and the M1 frequency domain basis vectors is K1, and the T1 linear combination coefficients are the part of the linear combination coefficients. A quantity of all linear combination coefficients determined by the L2 spatial domain basis vectors and the M1 frequency domain basis vectors is K2, and the T2 linear combination coefficients are the part of the linear combination coefficients.

It should be further understood that, in this implementation, same frequency domain basis vectors, namely, the M1 frequency domain basis vectors, indicate both the first precoding submatrix and the second precoding submatrix. L1 and L2 may be equal or may not be equal, and T1 and T2 may be equal or may not be equal. This is not limited in this application. In another possible implementation, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine the first precoding submatrix. The L2 spatial domain basis vectors, the M2 frequency domain basis vectors, and the T2 linear combination coefficients are used to determine the second precoding submatrix. L1, M1, T1, L2, M2, and T2 are all positive integers.

For example, the T1 linear combination coefficients are all linear combination coefficients in K1 linear combination coefficients, and the K1 linear combination coefficients correspond to the L1 spatial domain basis vectors and the M1 frequency domain basis vectors: T1=K1=2L1*M1. The T2 linear combination coefficients are all linear combination coefficients in K3 linear combination coefficients, and the K3 linear combination coefficients correspond to the L2 spatial domain basis vectors and the M2 frequency domain basis vectors: T2=K3=2L2*M2.

It should be understood that, in this example, the K1 linear combination coefficients are all linear combination coefficients determined by the L1 spatial domain basis vectors and the M1 frequency domain basis vectors, and the K3 linear combination coefficients are all linear combination coefficients determined by the L2 spatial domain basis vectors and the M2 frequency domain basis vectors.

For example, the T1 linear combination coefficients are a part of K1 linear combination coefficients, and the K1 linear combination coefficients correspond to the L1 spatial domain basis vectors and the M1 frequency domain basis vectors: T1<K1 and K1=2L1*M1. The T2 linear combination coefficients are a part of K3 linear combination coefficients, and the K3 linear combination coefficients correspond to the L2 spatial domain basis vectors and the M2 frequency domain basis vectors: T2<K3 and K3=2L2*M2.

It should be understood that, in this example, a quantity of all linear combination coefficients determined by the L1 spatial domain basis vectors and the M1 frequency domain basis vectors is K1, and the T1 linear combination coefficients are the part of the linear combination coefficients. A quantity of all linear combination coefficients determined by the L2 spatial domain basis vectors and the M2 frequency domain basis vectors is K3, and the T2 linear combination coefficients are the part of the linear combination coefficients.

It should be further understood that, in this implementation, L1 and L2 may be equal or may not be equal, T1 and T2 may be equal or may not be equal, and M1 and M2 may be equal or may not be equal. This is not limited in this application.

Optionally, the linear combination coefficient reported by the first apparatus is a non-zero linear combination coefficient.

It should be further understood that the foregoing precoding matrix may include a plurality of precoding submatrices. For example, the precoding matrix includes three or more precoding submatrices. When the precoding matrix includes the plurality of (for example, three or more, where the quantity may be a quantity of TRPs in a coordinating set) precoding submatrices, the first indication information may include information indicating spatial domain basis vectors, frequency domain basis vectors, and linear combination coefficients that are of the plurality of precoding submatrices. In this embodiment of this application, an example in which the precoding matrix includes two precoding submatrices is used for description. However, the protection scope of this application is not limited thereto. If the first indication information includes information indicating the plurality of precoding submatrices, a method for indicating, by the first indication information by indicating spatial domain basis vectors, frequency domain basis vectors (optional), and linear combination coefficients that correspond to the plurality of port groups, precoding submatrices corresponding to a plurality of port groups (where a quantity of the port groups is 3 or greater than 3) is similar to the method for indicating, by the first indication information, the precoding submatrices corresponding to the first port group and the second port group. Details are not described herein again.

The following describes how the first indication information indicates the frequency domain basis vectors, the spatial domain basis vectors, and the linear combination coefficients.

1. Indication of the spatial domain basis vectors

The first information indicates spatial domain basis vectors corresponding to two port groups. For example, the first information indicates the L1 spatial domain basis vectors and the L2 spatial domain basis vectors in the following manners.

Manner 1:

The first information includes information indicating L1-l1 spatial domain basis vectors and L2-l2 spatial domain basis vectors. The first port group has l1 default spatial domain basis vectors, where l1≥1. The second port group has l2 default spatial domain basis vectors, where l2≥1. Default spatial domain basis vectors of different port groups may be the same or may be different. Quantities of the default spatial domain basis vectors of the different port groups may be the same or may be different.

For example, the first information includes indexes indicating the L1-l1 spatial domain basis vectors and indexes indicating the L2-l2 spatial domain basis vectors.

Manner 2:

The first information includes information indicating the L1 spatial domain basis vectors and the L2 spatial domain basis vectors.

For example, the first information includes indexes indicating the L1 spatial domain basis vectors and indexes indicating the L2 spatial domain basis vectors.

A manner in which the first information indicates the spatial domain basis vectors corresponding to the two port groups is not limited in this application.

It should be understood that a manner in which the first information indicates the spatial domain basis vectors corresponding to the plurality of port groups is similar to the manner in which the first information indicates the spatial domain basis vectors corresponding to the two port groups. Details are not described herein again. A manner in which the second information indicates the spatial domain basis vectors corresponding to the different port groups is similar to the manner in which the first information indicates the spatial domain basis vectors corresponding to the different port groups. Details are not described herein again.

Optionally, the spatial domain basis vector may be a DFT basis vector, and a specific indication of the spatial domain basis vector may be consistent with an indication of a spatial domain basis vector having a codebook structure of R16 type II.

For example, for each port group, same spatial domain basis vectors are used for all transport layers/all receive ports, and a quantity of combinations and an oversampling factor are used or the indexes (where examples are provided in the manner 1 and manner 2) are directly reported, to indicate to select the L1 spatial domain basis vectors and the L2 spatial domain basis vectors from the candidate spatial domain basis vector set (corresponding to the manner 2) or select the L1-l1 spatial domain basis vectors and the L2-l2 spatial domain basis vectors from the candidate spatial domain basis vector set (corresponding to the manner 1). For a specific method for indicating the spatial domain basis vectors by using the quantity of combinations and the oversampling factor, refer to the conventional technology. Details are not described herein again.

Alternatively, the spatial domain basis vector may be any basis vector indicated by the first apparatus. For example, the spatial domain basis vector may be an eigenvector determined by the first apparatus based on a spatial statistical characteristic of a channel. The first apparatus may directly report each element of the spatial domain basis vector, or may represent the spatial domain basis vector by using a linear combination of several DFT basis vectors, and report, at a long periodicity, indexes of the selected DFT basis vectors and linear combination coefficients corresponding to the DFT basis vectors. For a specific method, refer to the conventional technology. Details are not described herein again.

2. Indication of the frequency domain basis vectors

The first information indicates frequency domain basis vectors corresponding to two port groups (where that is, the two port groups use a same group of frequency domain basis vectors). For example, the first information indicates the M1 frequency domain basis vectors in the following manners.

Manner 1:

The first information includes information indicating M1-m frequency domain basis vectors, and the first port group and the second port group have same m default frequency domain basis vectors, where $m \geq 1$.

For example, the first information includes indexes indicating the M1-m frequency domain basis vectors.

Manner 2:

The first information includes information indicating the M1 frequency domain basis vectors.

For example, the first information includes indexes indicating the M1 frequency domain basis vectors.

A manner in which the first information indicates the frequency domain basis vectors corresponding to the two port groups is not limited in this application.

It should be understood that a manner in which the first information indicates the frequency domain basis vectors corresponding to the plurality of port groups is similar to the manner in which the first information indicates the frequency domain basis vectors corresponding to the two port groups. Details are not described herein again.

The second information indicates frequency domain basis vectors corresponding to two port groups (where that is, the two port groups use different groups of frequency domain basis vectors). For example, the second information indicates the M1 frequency domain basis vectors and the M2 frequency domain basis vectors in the following manners.

Manner 3:

The second information includes information indicating M1-m1 frequency domain basis vectors and M2-m2 frequency domain basis vectors. The first port group has m1 default frequency domain basis vectors, where $m1 \geq 1$. The second port group has m2 default frequency domain basis vectors, where $m2 \geq 1$. Default frequency domain basis vectors of different port groups may be the same or may be different. Quantities of the default frequency domain basis vectors of the different port groups may be the same or may be different.

For example, the second information includes indexes indicating the M1-m1 frequency domain basis vectors and indexes indicating the M2-m2 frequency domain basis vectors.

Manner 4:

The second information includes information indicating the M1 frequency domain basis vectors and the M2 frequency domain basis vectors.

For example, the second information includes indexes indicating the M1 frequency domain basis vectors and indexes indicating the M2 frequency domain basis vectors.

A manner in which the second information indicates the frequency domain basis vectors corresponding to the two port groups is not limited in this application.

It should be understood that a manner in which the second information indicates the frequency domain basis vectors corresponding to the plurality of port groups is similar to the manner in which the second information indicates the frequency domain basis vectors corresponding to the two port groups. Details are not described herein again.

Optionally, a specific indication of the frequency domain basis vector is consistent with an indication of a frequency domain basis vector corresponding to the codebook structure of R16 type II.

For example, for each port group, same frequency domain basis vectors or different frequency domain basis vectors may be used for all the transport layers/all the receive ports. Indication overheads of the frequency domain basis vectors are related to a value of $N_3$ (quantity of frequency domain units). When the different frequency domain basis vectors are used for all the transport layers/all receive ports, the indication overheads of the frequency domain basis vectors are further related to a quantity of the transport layers/a quantity of the receive ports. The indication overheads of the frequency domain basis vector may be determined with reference to the value of $N_3$, whether frequency domain basis vectors used for different transport layers/receive ports are the same, and the quantity of the transport layers/the quantity of the receive ports. In addition, whether the frequency domain basis vectors are indicated through single-step indication, two-step indication, or a combination of the single-step indication and the two-step indication may be determined based on the indication overheads of the frequency domain basis vectors. This is not limited in this application.

Single-step indication: The first apparatus indicates to select the M1-m frequency domain basis vectors from $N_3$ candidate frequency domain basis vector sets (corresponding to the manner 1), or indicates to select the M1 frequency domain basis vectors from the $N_3$ candidate frequency domain basis vector sets (corresponding to the manner 2). Alternatively, the first apparatus indicates to select the M1-m1 frequency domain basis vectors and the M2-m2 frequency domain basis vectors from $N_3$ candidate frequency domain basis vector sets (corresponding to the manner 3), or indicates to select the M1 frequency domain basis vectors and the M2 frequency domain basis vectors from the $N_3$ candidate frequency domain basis vector sets (corresponding to the manner 4).

Two-step indication: The first apparatus first indicates to select an intermediate frequency domain basis vector set from $N_3$ candidate frequency domain basis vector sets. Then, a frequency domain basis vector of each transport layer/receive port is selected from the intermediate frequency domain basis vector set. For example, the first apparatus indicates to select the M1-m frequency domain basis vectors from the intermediate frequency domain basis vector set (corresponding to the manner 1), or indicates to select the M1 frequency domain basis vectors from the intermediate frequency domain basis vector set (corresponding to the manner 2). Alternatively, the first apparatus indicates to select the M1-m1 frequency domain basis vectors and the M2-m2 frequency domain basis vectors from the intermediate frequency domain basis vector set (corresponding to the manner 3), or indicates to select the M1 frequency domain basis vectors and the M2 frequency domain basis vectors from the intermediate frequency domain basis vector set (corresponding to the manner 4).

Alternatively, the frequency domain basis vector may be any basis vector indicated by the first apparatus. For example, the frequency domain basis vector may be an eigenvector determined by the first apparatus based on a frequency-domain statistical characteristic of the channel. The first apparatus may directly report each element of the frequency domain basis vector, or may represent the frequency domain basis vector by using a linear combination of several DFT basis vectors, and report, at a long periodicity, indexes of the selected DFT basis vectors and linear combination coefficients corresponding to the DFT basis vectors. For a specific method, refer to the conventional technology. Details are not described herein again.

3. Indication of a location of a reported linear combination coefficient

Optionally, the indication of the location of the reported linear combination coefficient is consistent with an indication of a location of a linear combination coefficient corresponding to the codebook structure of R16 type II.

For example, a location of a linear combination coefficient of each port group is separately indicated, and a bitmap (bitmap) indicates the location of the linear combination coefficient. In the bitmap, a bit value at the location corresponding to the linear combination coefficient is 1, a bit value at another location is 0, and vice versa. A quantity of bits occupied by a bitmap of each transport layer/receive port of each port group may be determined by a quantity of spatial domain basis vectors and a quantity of frequency domain basis vectors. For example, the first port group corresponds to the L1 spatial domain basis vectors and the M1 frequency domain basis vectors. In this case, a quantity of bits occupied by the bitmap that indicates the linear combination coefficient corresponding to the first port group may be 2L1*M1.

4. Indication of the linear combination coefficients

Information that is reported by the first apparatus in the first indication information and that indicates the linear combination coefficients is obtained through joint quantization (where the joint quantization may be understood as performing quantization on all linear combination coefficients corresponding to a plurality of stations in a multi-station coordination scenario). The linear combination coefficient may be decomposed into an amplitude coefficient and a phase coefficient. The first apparatus may report the amplitude coefficient through differential quantization, for example, 2-stage differential and 3-stage differential. Details are described below.

A. Indication of the amplitude coefficient

2-stage differential

In a possible implementation, the first indication information includes third information indicating the T1 linear combination coefficients and the T2 linear combination coefficients. The third information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

For example, as shown in FIG. 4, for each transport layer/receive port, joint quantization is performed on coefficients of all the port groups. Two port groups are used as an example for description. One reference amplitude coefficient is determined for each polarization direction of each port group. The reference amplitude coefficient is a strongest amplitude coefficient in amplitude coefficients in one polarization direction of a port group. Four reference amplitude coefficients are included in FIG. 4. To be specific, a reference amplitude coefficient corresponding to a polarization direction 1 of the first port group is a reference amplitude coefficient #1, a reference amplitude coefficient corresponding to a polarization direction 2 of the first port group is a reference amplitude coefficient #2, a reference amplitude coefficient corresponding to the polarization direction 1 of the second port group is a reference amplitude coefficient #3, and a reference amplitude coefficient corresponding to the polarization direction 2 of the second port group is a reference amplitude coefficient #4. The strongest reference amplitude coefficient is the reference amplitude coefficient #1.

The reference differential amplitude coefficient includes a relative value of the reference amplitude coefficient #2 relative to the reference amplitude coefficient #1, a relative value of the reference amplitude coefficient #3 relative to the reference amplitude coefficient #1, and a relative value of the reference amplitude coefficient #4 relative to the reference amplitude coefficient #1. The first differential amplitude coefficient includes relative values of all amplitude coefficients (except the reference amplitude coefficient #1) in the polarization direction 1 of the first port group relative to the reference amplitude coefficient #1, relative values of all amplitude coefficients (except the reference amplitude coefficient #2) in the polarization direction 2 of the first port group relative to the reference amplitude coefficient #2, relative values of all amplitude coefficients (except the reference amplitude coefficient #3) in the polarization direction 1 of the second port group relative to the reference amplitude coefficient #3, and relative values of all amplitude coefficients (except the reference amplitude coefficient #4) in the polarization direction 2 of the second port group relative to the reference amplitude coefficient #4.

If the amplitude coefficient is fed back for the transport layer, the third information indicates a location of a strongest amplitude coefficient (for example, the reference amplitude coefficient #1) in all polarization directions of all port groups corresponding to each transport layer, and specific amplitude of the strongest reference amplitude coefficient at each transport layer may not be reported.

If the amplitude coefficient is fed back for each receive port, the third information indicates a location of a strongest amplitude coefficient (for example, the reference amplitude coefficient #1) in all polarization directions of all port groups corresponding to each receive port, and an absolute value of the strongest amplitude coefficient (for example, the reference amplitude coefficient #1) corresponding to each receive port is reported. Alternatively, a strongest reference amplitude coefficient is determined for all receive ports as a reference. For example, if a strongest reference amplitude coefficient of a receive port #1 in all the receive ports is the largest and is the strongest reference amplitude coefficient #1, a strongest reference amplitude coefficient of another receive port (a receive port other than the receive port #1) may be indicated by using a relative value of the strongest reference amplitude coefficient of the another receive port relative to the strongest reference amplitude coefficient #1. The strongest reference amplitude coefficient #1 may be reported, or may not be reported. If the strongest reference amplitude coefficient #1 is not reported, the receive port corresponding to the strongest reference amplitude coefficient #1 needs to be indicated.

The relative value may be understood as a difference or a ratio. This is not limited in this application.

3-stage differential

In a possible implementation, the first indication information includes fourth information indicating the T1 linear combination coefficients and the T2 linear combination coefficients. The fourth information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

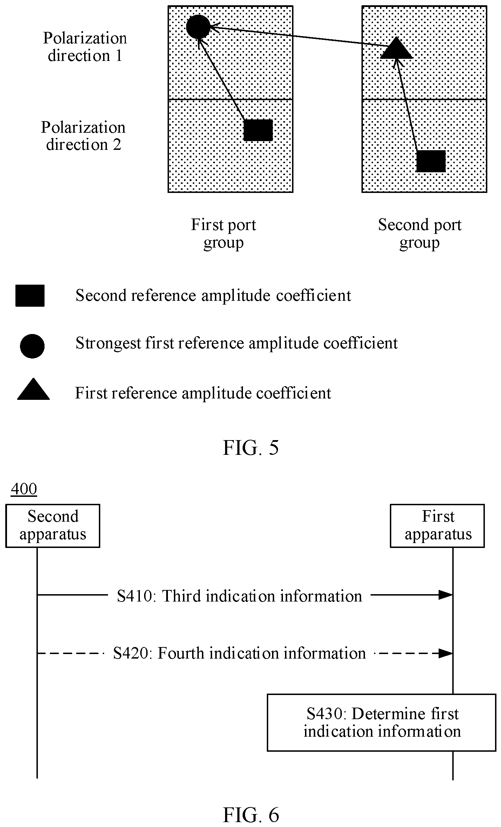

For example, as shown in FIG. 5, for each transport layer/receive port, joint quantization is performed on coefficients of all the port groups. Two port groups are used as an example for description. One second reference amplitude coefficient is determined for each polarization direction of each port group. The second reference amplitude coefficient is a strongest amplitude coefficient (namely, a strongest amplitude coefficient) in amplitude coefficients in one polarization direction of a port group. The first reference amplitude coefficient is a strongest second reference amplitude coefficient in amplitude coefficients in all polarization directions of a port group. Four second reference amplitude coefficients are included in FIG. 5: a second reference amplitude coefficient #1 corresponding to a polarization direction 1 of the first port group, a second reference amplitude coefficient #2 corresponding to a polarization direction 2 of the first port group, a second reference amplitude coefficient #3 corresponding to the polarization direction 1 of the second port group, and a second reference amplitude coefficient #4 corresponding to the polarization direction 2 of the second port group. For the first port group, the second reference amplitude coefficient #1 is greater than the second reference amplitude coefficient #2. Therefore, the second reference amplitude coefficient #1 is a first reference amplitude coefficient #1. For the second port group, the second reference amplitude coefficient #3 is greater than the second reference amplitude coefficient #4. Therefore, the second reference amplitude coefficient #3 is a first reference amplitude coefficient #2. The first reference amplitude coefficient #1 is greater than the first reference amplitude coefficient #2. In other words, the strongest first reference amplitude coefficient (strongest first reference amplitude coefficient) is the first reference amplitude coefficient #1.

The first reference differential amplitude coefficient includes a relative value of the second reference amplitude coefficient #3 relative to the first reference amplitude coefficient #1. The second reference differential amplitude coefficient includes a relative value of the second reference amplitude coefficient #2 relative to the first reference amplitude coefficient #1 and a relative value of the second reference amplitude coefficient #4 relative to the first reference amplitude coefficient #2.

The second differential amplitude coefficient includes relative values of all amplitude coefficients (except the second reference amplitude coefficient #1) in the polarization direction 1 of the first port group relative to the second reference amplitude coefficient #1, relative values of all amplitude coefficients (except the second reference amplitude coefficient #2) in the polarization direction 2 of the first port group relative to the second reference amplitude coefficient #2, relative values of all amplitude coefficients (except the second reference amplitude coefficient #3) in the polarization direction 1 of the second port group relative to the second reference amplitude coefficient #3, and relative values of all amplitude coefficients (except the second reference amplitude coefficient #4) in the polarization direction 2 of the second port group relative to the second reference amplitude coefficient #4.

If the amplitude coefficient is fed back for the transport layer, the fourth information indicates a location of a strongest amplitude coefficient (for example, the first reference amplitude coefficient #1) in all polarization directions of all the port groups of each transport layer, and specific amplitude of the strongest amplitude coefficient at each transport layer may not be reported.

If the amplitude coefficient is fed back for each receive port, the fourth information indicates a location of a strongest amplitude coefficient (for example, the first reference amplitude coefficient #1) in all polarization directions of all the port groups of each receive port, and an absolute value of the strongest amplitude coefficient (for example, the first reference amplitude coefficient #1) corresponding to each receive port is reported. Alternatively, a strongest reference amplitude coefficient is determined for all receive ports as a reference. For example, if a strongest reference amplitude coefficient of a receive port #1 in all the receive ports is the largest and is the strongest first reference amplitude coefficient #1, a strongest first reference amplitude coefficient of another receive port (a receive port other than the receive port #1) may be indicated by using a relative value of the strongest first reference amplitude coefficient of the another receive port relative to the strongest first reference amplitude coefficient #1. The strongest first reference amplitude coefficient #1 may be reported, or may not be reported. If the strongest first reference amplitude coefficient #1 is not reported, the receive port corresponding to the strongest first reference amplitude coefficient #1 needs to be indicated.

B. Indication of the phase coefficient

In a possible implementation, the first apparatus may quantize and report the phase coefficient, for example, quantize and report absolute phase values of all phase coefficients of all the port groups.

In another possible implementation, the first apparatus may quantize and report relative values of all phase coefficients of all the port groups relative to a strongest phase coefficient. A phase of the strongest phase coefficient may not be reported, that is, a location of the strongest phase coefficient is indicated when the amplitude coefficient is quantized and reported.

Step S320: The first apparatus sends the first indication information to the second apparatus. Correspondingly, the second apparatus receives the first indication information.

It should be understood that the first apparatus may be a terminal device, or may be a part configured in the terminal device, for example, a chip or a chip system. This is not limited in this application. The second apparatus may be a network device, for example, a TRP in the multi-station coordination scenario, or the second apparatus may be a part configured in the network device, for example, a chip or a chip system. This is not limited in this application.

Optionally, the method 300 further includes the following steps.

Step S321: The first apparatus sends second indication information to the second apparatus. The second indication information indicates at least one of the following: values of L1, L2, M1, T1, and T2. Correspondingly, the second apparatus receives the second indication information.

It should be understood that when the second indication information does not indicate a value of M2, the first port group and the second port group share a same group of frequency domain basis vectors: the M1 frequency domain basis vectors.

Optionally, the second indication information further indicates the value of M2.

It should be understood that when the second indication information indicates the value of M2, the first port group generates the first precoding submatrix by using the M1 frequency domain basis vectors, and the second port group generates the second precoding submatrix by using the M2 frequency domain basis vectors.

For example, if the second indication information indicates the value of L1, the second apparatus may truncate and interpret, based on the value of L1, the LI+L2 spatial domain basis vectors indicated by the first indication information. The first apparatus and the second apparatus may agree on a sequence of the spatial domain basis vectors corresponding to the first port group and the spatial domain basis vectors corresponding to the second port group. Assuming that it is agreed that the spatial domain basis vectors corresponding to the first port group are in front of the spatial domain basis vectors corresponding to the second port group, the second apparatus may determine, based on the value of L1, that the first L1 spatial domain basis vectors in the LI+L2 spatial domain basis vectors indicated by the first apparatus are the spatial domain basis vectors corresponding to the first port group, and the remaining L2 spatial domain basis vectors are the spatial domain basis vectors corresponding to the second port group. For example, if the second indication information indicates the value of L2, the second apparatus may truncate and interpret, based on the value of L2, the LI+L2 spatial domain basis vectors indicated by the first indication information. The first apparatus and the second apparatus may agree on a sequence of the spatial domain basis vectors corresponding to the first port group and the spatial domain basis vectors corresponding to the second port group. Assuming that it is agreed that the spatial domain basis vectors corresponding to the first port group are in front of the spatial domain basis vectors corresponding to the second port group, the second apparatus may determine, based on the value of L2, that the last L2 spatial domain basis vectors in the LI+L2 spatial domain basis vectors indicated by the first apparatus are the spatial domain basis vectors corresponding to the second port group, and the remaining L1 spatial domain basis vectors are the spatial domain basis vectors corresponding to the first port group.

A method for truncating and interpreting, by the second apparatus with reference to a value indicated by the second indication information, specific content carried in the first indication information when the second indication information indicates M1, M2, T1, and T2 is similar to the method for determining, by the second apparatus with reference to the value of L1 and/or the value of L2 that are/is indicated by the second indication information, the spatial domain basis vectors corresponding to the first port group and the spatial domain basis vectors corresponding to the second port group. Details are not described again.

The first indication information in step S320 and the second indication information in step S321 may be carried in a same message, or may be separately carried in different messages. This is not limited in this application. If the first indication information and the second indication information are carried in the same message, the first indication information and the second indication information may be used as sub-message blocks of the message.

For example, the first indication information and the second indication information may be carried in a message used by the first apparatus to feed back channel state information to the second apparatus. This is not limited in this application.

Step S330: The second apparatus determines the precoding matrix based on the first indication information. The precoding matrix includes the first precoding submatrix and the second precoding submatrix.

In a possible implementation, the second apparatus determines the precoding matrix based on the first indication information and the second indication information. The precoding matrix includes the first precoding submatrix and the second precoding submatrix.

Optionally, before S310, the method 300 further includes the following steps.

Step S301: The second apparatus sends third indication information to the first apparatus. The third indication information indicates at least one of the following: a quantity of spatial domain basis vectors, a quantity of frequency domain basis vectors, and a quantity of linear combination coefficients. Correspondingly, the first apparatus receives the third indication information.

In a possible implementation, the first apparatus may determine, based on a measurement result of the channel, to report at least one of the quantities of spatial domain basis vectors, frequency domain basis vectors, and linear combination coefficients. In another possible implementation, at least one of the quantities of spatial domain basis vectors, frequency domain basis vectors, and linear combination coefficients may be predefined or preconfigured.

In still another possible implementation, the first apparatus may determine, based on the third indication information, to report at least one of the quantities of spatial domain basis vectors, frequency domain basis vectors, and linear combination coefficients.

In the foregoing implementations, the quantities of spatial domain basis vectors corresponding to the different port groups, the quantities of frequency domain basis vectors corresponding to the different port groups, and the quantities of linear combination coefficients corresponding to the different port groups may be reported in the second indication information. Alternatively, the quantities of spatial domain basis vectors corresponding to the different port groups and the quantities of linear combination coefficients corresponding to the different port groups may be reported in the second indication information. The quantity of frequency domain basis vectors may be a default value, for example, a predefined or preconfigured value, or may be indicated by the third indication information. Alternatively, the quantities of linear combination coefficients corresponding to the different port groups may be reported in the second indication information. The quantity of spatial domain basis vectors and the quantity of frequency domain basis vectors may be default values, for example, predefined or preconfigured values, or may be indicated by the third indication information. Assuming that one of the quantities of spatial domain basis vectors, frequency domain basis vectors, and linear combination coefficients is reported in the second indication information, the other two quantities may be default values, for example, predefined or preconfigured values, or may be indicated by the third indication information. Alternatively, assuming that two of the quantities of spatial domain basis vectors, frequency domain basis vectors, and linear combination coefficients are reported in the second indication information, the other quantity may be a default value, for example, a predefined or preconfigured value, or may be indicated by the third indication information. Examples are not listed one by one herein.

The quantity L of spatial domain basis vectors, the quantity M of frequency domain basis vectors, and the quantity T of linear combination coefficients each may be a maximum average quantity corresponding to the plurality of port groups, may be a maximum total quantity corresponding to the plurality of port groups, or may be a quantity corresponding to each port group, where L, M, and T are all positive integers.

It should be understood that the plurality of port groups may be all port groups corresponding to a coordinating set, may be port groups corresponding to all TRPs in the coordinating set, or may be port groups corresponding to a plurality of precoding submatrices included in the precoding matrix indicated by the first indication information. The plurality of port groups include the first port group and the second port group.

For example, when the quantity L of spatial domain basis vectors is the maximum average quantity of spatial domain basis vectors corresponding to the plurality of port groups, L1+L2$\leq$2L; or when L is the maximum total quantity of spatial domain basis vectors corresponding to the plurality of port groups, L1+L2$\leq$L. If the first indication information indicates n precoding submatrices, when the quantity L of spatial domain basis vectors is a maximum average quantity of spatial domain basis vectors corresponding to n port groups, $\sum_{i=1}^{n} Li \leq nL$; or when the quantity L of spatial domain basis vectors is a maximum total quantity of spatial domain basis vectors corresponding to n port groups, $\sum_{i=1}^{n} Li \leq L$, where Li is a quantity of spatial domain basis vectors corresponding to an i$^{th}$ port group.

When the quantity M of frequency domain basis vectors is the maximum average quantity of frequency domain basis vectors corresponding to the plurality of port groups, M1+M2≤2M; or when M is the maximum total quantity, M1+M2≤M.

If the first indication information indicates n precoding submatrices, when the quantity M of frequency domain basis vectors is a maximum average quantity of frequency domain basis vectors corresponding to n port groups, $\sum_{i=1}^{n} Mi \leq nM$, where 1≤i≤n; or when the quantity M of frequency domain basis vectors is a maximum total quantity of frequency domain basis vectors corresponding to n port groups, $\sum_{i=1}^{n} Mi \leq M$, where Mi is a quantity of frequency domain basis vectors corresponding to an i$^{th}$ port group.

When the quantity T of linear combination coefficients is the maximum average quantity of linear combination coefficients corresponding to the plurality of port groups, T1+T2≤2T; or when T is the maximum total quantity of linear combination coefficients corresponding to the plurality of port groups, T1+T2≤T.

If the first indication information indicates n precoding submatrices, when the quantity T of linear combination coefficients is a maximum average quantity of linear combination coefficients corresponding to n port groups, $\sum_{i=1}^{n} Ti \leq nT$, where 1≤i≤n; or when the quantity T of linear combination coefficients is a maximum total quantity of linear combination coefficients corresponding to n port groups, $\sum_{i=1}^{n} Ti \leq T$, where Ti is a quantity of linear combination coefficients corresponding to an i$^{th}$ port group.

It should be understood that when the plurality of (two or more) port groups use the same group of frequency domain basis vectors, for example, the first port group and the second port group share the same group of frequency domain basis vectors (for example, the M1 frequency domain basis vectors), the quantity M of frequency domain basis vectors may be the value of M1. If the third indication information indicates the quantities of spatial domain basis vectors corresponding to the different port groups, for example, the third indication information indicates the values of L1 and L2, the values of L1 and L2 do not need to be reported in the second indication information. Reporting (for example, reporting in the second indication information) and indication (for example, indication performed by the second apparatus by using the third indication information) of the quantities of frequency domain basis vectors and linear combination coefficients are similar. Examples are not listed one by one herein.

Step S302: The second apparatus sends fourth indication information to the first apparatus. The fourth indication information indicates a quantity of bits in a bitmap. The quantity of bits in the bitmap indicates a maximum quantity of bits occupied by a linear combination coefficient bitmap corresponding to at least one precoding submatrix included in the precoding matrix.

It should be understood that the first apparatus may determine, under constraints of the maximum average quantities or maximum total quantities of spatial domain basis vectors, frequency domain basis vectors, and linear combination coefficients, quantities of spatial domain basis vectors, frequency domain basis vectors, and linear combination coefficients that correspond to each port group. The quantities of spatial domain basis vectors and frequency domain basis vectors that are of each port group may determine a quantity of bits occupied by a linear combination coefficient bitmap corresponding to the port group. Alternatively, the first apparatus may determine, based on the fourth indication information, the maximum quantity of bits occupied by the reported linear combination coefficient bitmap. The maximum quantity of bits may limit the quantities of spatial domain basis vectors and frequency domain basis vectors that are of each port group and that are reported by the first apparatus.

In a possible implementation, the first apparatus may determine, based on the fourth indication information, a maximum quantity of bits occupied by at least one of a first linear combination coefficient bitmap and a second linear combination coefficient bitmap. The first linear combination coefficient bitmap indicates to select the T1 linear combination coefficients from the K1 linear combination coefficients (where K1 and T1 may be equal or may not be equal). The second linear combination coefficient bitmap indicates to select the T2 linear combination coefficients from the K2 (or K3) linear combination coefficients (where K2 and T2 may be equal or may not be equal, and K3 and T2 may be equal or may not be equal). The quantity of bits occupied by the first linear combination coefficient bitmap may be the same as or different from the quantity of bits occupied by the second linear combination coefficient bitmap.

For example, if the second apparatus configures the maximum total quantity L of spatial domain basis vectors, the maximum total quantity M of frequency domain basis vectors, the maximum total quantity T of linear combination coefficients, and a maximum quantity B of bits occupied by the linear combination coefficient bitmap, L1+L2≤L, M1+M2≤M, and T1+T2≤T. Assuming that the quantity of bits occupied by the first linear combination coefficient bitmap is B 1, the quantity of bits occupied by the second linear combination coefficient bitmap is B2, B1=2L1*M1, and B2=2L2*M2, B1+B2≤B.

If the first indication information indicates the n precoding submatrices, and the second apparatus configures the maximum total quantity L of spatial domain basis vectors, the maximum total quantity M of frequency domain basis vectors, the maximum total quantity T of linear combination coefficients, and the maximum quantity B of bits occupied by the linear combination coefficient bitmap, $\sum_{i=1}^{n} \mathrm{Li} \leq \mathrm{L}$, $\sum_{i=1}^{n} \mathrm{Mi} \leq \mathrm{M}$, $\sum_{i=1}^{n} \mathrm{Ti} \leq \mathrm{T}$, and $\sum_{i=1}^{n} \mathrm{Bi} \leq \mathrm{B}$, where Bi is a quantity of bits occupied by a linear combination coefficient bitmap corresponding to the i$^{\text{th}}$ port group.

Alternatively, if the second apparatus configures the maximum average quantity M of frequency domain basis vectors, the maximum total quantity L of spatial domain basis vectors, and the maximum total quantity T of linear combination coefficients, L1+L2≤L, and T1+T2≤T. In this case, a maximum quantity of bits occupied by the first linear combination coefficient bitmap and the second linear combination coefficient bitmap is 2LM, and no additional indication is needed in the fourth indication information.

If the first indication information indicates the n precoding submatrices, and the second apparatus configures the maximum average quantity M of frequency domain basis vectors, the maximum total quantity L of spatial domain basis vectors, and the maximum total quantity T of linear combination coefficients, $\sum_{i=1}^{n} \mathrm{Li} \leq \mathrm{L}$, and $\sum_{i=1}^{n} \mathrm{Ti} \leq \mathrm{T}$. In this case, a maximum quantity of bits occupied by the n linear combination coefficient bitmaps corresponding to the n port groups is 2L*M, and no additional indication is needed in the fourth indication information.

Alternatively, if the second apparatus configures the quantities of spatial domain basis vectors of the port groups as L1 and L2, the quantities of frequency domain basis vectors of the port groups as M1 and M2, and the maximum total quantity T of linear combination coefficients, T1+T2≤T. In this case, a maximum quantity of bits occupied by the first linear combination coefficient bitmap and the second linear combination coefficient bitmap is 2L1*M1+2L2*M2, and no additional indication is needed in the fourth indication information.

If the first indication information indicates the n precoding submatrices, and the second apparatus configures the quantities of spatial domain basis vectors of the port groups as L1, L2, ..., and Ln, the quantities of frequency domain basis vectors of the port groups as M1, M2, ..., and Mn, and the maximum total quantity T of linear combination coefficients, $\sum_{i=1}^{n} \mathrm{Ti} \leq \mathrm{T}$. In this case, a maximum quantity of bits occupied by n linear combination coefficient bitmaps corresponding to the n port groups is $\sum_{i=1}^{n} 2\mathrm{Li} * \mathrm{Mi}$, and no additional indication is needed in the fourth indication information.

Alternatively, there is another case in which the fourth indication information does not need to indicate the maximum quantity of bits occupied by the linear combination coefficient bitmap. Examples are not listed one by one herein.

It should be understood that, when the quantity of linear combination coefficients of the port groups is the maximum total quantity, the quantity may be a total quantity of linear combination coefficients corresponding to all the transport layers/all the receive ports, or may be a sum of a quantity of linear combination coefficients corresponding to each transport layer/each receive port. Alternatively, when the quantity of linear combination coefficients of the port groups is the maximum average quantity, the quantity may be a maximum average quantity of linear combination coefficients corresponding to all transport layers/all receive ports, or may be a maximum average quantity of linear combination coefficients corresponding to each transport layer/each receive port. This may be specifically predefined in a protocol. This is not limited in this application.

For example, in an implementation in which a feedback is provided for each receive port, it may be predefined in the protocol that the quantity of linear combination coefficients of each receive port is T, or the total quantity of linear combination coefficients of all receive ports is T. In an implementation in which a feedback is provided for each transport layer, assuming that there are four transport layers, it may be predefined in the protocol that a total quantity of linear combination coefficients of the four transport layers is 2T, and a quantity of linear combination coefficients of each transport layer does not exceed T.

The third indication information in step S301 and the fourth indication information in step S302 may be carried in a same message, or may be separately carried in different messages. This is not limited in this application. If the third indication information and the fourth indication information are carried in the same message, the third indication information and the fourth indication information may be used as sub-message blocks of the message. If the third indication information and the fourth indication information are carried in the different messages, a sequence of step S301 and step S302 is not limited in this application.

For example, a message that may carry the third indication information and the fourth indication information includes but is not limited to RRC signaling, a media access control control element (media access control control element, MAC CE), or DCI.

Based on the method for jointly feeding back the channel information in FIG. 3, a channel energy difference between the stations in the multi-station coordination scenario can be fully utilized, and feedback overheads of channel information can be jointly allocated, to tilt the feedback overheads to a port group with good channel quality, so that overall feedback precision of the channel information can be improved, and coherent joint transmission is enabled in the multi-station coordination scenario.

FIG. 6 is a schematic flowchart of another channel state information feedback method according to an embodiment of this application. The method 400 shown in FIG. 6 includes the following steps.

Step S410: A second apparatus sends third indication information to a first apparatus. The third indication information indicates at least one of the following: a quantity of spatial domain basis vectors, a quantity of frequency domain basis vectors, and a quantity of linear combination coefficients. The quantity of spatial domain basis vectors, the quantity of frequency domain basis vectors, and the quantity of linear combination coefficients correspond to at least two port groups. Correspondingly, the first apparatus receives the third indication information.

Optionally, the method 400 further includes the following steps.

Step S420: The second apparatus sends fourth indication information to the first apparatus. The fourth indication information indicates a quantity of bits in a bitmap. The quantity of bits in the bitmap indicates a maximum quantity of bits occupied by a linear combination coefficient bitmap corresponding to at least one precoding submatrix included in a precoding matrix.

It should be understood that the first apparatus may determine, under constraints of maximum average quantities or maximum total quantities (which may be preconfigured, predefined, or indicated by the second apparatus) of spatial domain basis vectors, frequency domain basis vectors, and linear combination coefficients, quantities of spatial domain basis vectors, frequency domain basis vectors, and linear combination coefficients that correspond to each port group. The quantities of spatial domain basis vectors and frequency domain basis vectors that are of each port group may determine a quantity of bits occupied by a linear combination coefficient bitmap corresponding to the port group. Alternatively, the first apparatus may determine, based on the fourth indication information, a maximum quantity of bits occupied by the reported linear combination coefficient bitmap. The maximum quantity of bits may limit quantities of spatial domain basis vectors and frequency domain basis vectors that are of each port group and that are reported by the first apparatus.

For example, the first apparatus may determine, based on the fourth indication information, a maximum quantity of bits occupied by at least one of a first linear combination coefficient bitmap and a second linear combination coefficient bitmap. The first linear combination coefficient bitmap indicates to select T1 linear combination coefficients from K1 linear combination coefficients (where K1 and T1 may be equal or may not be equal). The second linear combination coefficient bitmap indicates to select T2 linear combination coefficients from K2 (or K3) linear combination coefficients (where K2 and T2 may be equal or may not be equal, and K3 and T2 may be equal or may not be equal).

The third indication information in step S410 and the fourth indication information in step S420 may be carried in a same message, or may be separately carried in different messages. This is not limited in this application. If the third indication information and the fourth indication information are carried in the same message, the third indication information and the fourth indication information may be used as sub-message blocks of the message. If the third indication information and the fourth indication information are carried in the different messages, a sequence of step S410 and step S420 is not limited in this application.

For example, a message that may carry the third indication information and the fourth indication information includes, but is not limited to, RRC signaling, a MAC CE, or DCI.

Step S430: The first apparatus determines first indication information.

For example, the first apparatus determines the first indication information based on the third indication information.

For example, the first apparatus determines the first indication information based on the third indication information and the fourth indication information.

For example, the first apparatus determines two precoding submatrices.

In a possible implementation, the first indication information includes first information. The first information indicates L1 spatial domain basis vectors, M1 frequency domain basis vectors, T1 linear combination coefficients, L2 spatial domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M1 frequency domain basis vectors, and the T2 linear combination coefficients are used to determine a second precoding submatrix. The first precoding submatrix corresponds to a first port group, and the second precoding submatrix corresponds to a second port group. L1, M1, T1, L2, and T2 are all positive integers.

For example, the T1 linear combination coefficients are all linear combination coefficients in K1 linear combination coefficients, and the K1 linear combination coefficients correspond to the L1 spatial domain basis vectors and the M1 frequency domain basis vectors: $T1=K1=2L1*M1$. The T2 linear combination coefficients are all linear combination coefficients in K2 linear combination coefficients, and the K2 linear combination coefficients correspond to the L2 spatial domain basis vectors and the M1 frequency domain basis vectors: $T2=K2=2L2*M1$.

It should be understood that, in this example, the K1 linear combination coefficients are all linear combination coefficients determined by the L1 spatial domain basis vectors and the M1 frequency domain basis vectors, and the K2 linear combination coefficients are all linear combination coefficients determined by the L2 spatial domain basis vectors and the M1 frequency domain basis vectors.

For example, the T1 linear combination coefficients are a part of K1 linear combination coefficients, and the K1 linear combination coefficients correspond to the L1 spatial domain basis vectors and the M1 frequency domain basis vectors: T1<K1 and K1=2L1*M1. The T2 linear combination coefficients are a part of K2 linear combination coefficients, and the K2 linear combination coefficients correspond to the L2 spatial domain basis vectors and the M1 frequency domain basis vectors: T2<K2 and K2=2L2*M1.

It should be understood that, in this example, a quantity of all linear combination coefficients determined by the L1 spatial domain basis vectors and the M1 frequency domain basis vectors is K1, and the T1 linear combination coefficients are the part of the linear combination coefficients. A quantity of all linear combination coefficients determined by the L2 spatial domain basis vectors and the M1 frequency domain basis vectors is K2, and the T2 linear combination coefficients are the part of the linear combination coefficients.

It should be further understood that, in this implementation, same frequency domain basis vectors, namely, the M1 frequency domain basis vectors, indicate both the first precoding submatrix and the second precoding submatrix. L1 and L2 may be equal or may not be equal, and T1 and T2 may be equal or may not be equal. This is not limited in this application.

In another possible implementation, the first indication information includes second information. The second information indicates L1 spatial domain basis vectors, M1 frequency domain basis vectors, T1 linear combination coefficients, L2 spatial domain basis vectors, M2 frequency domain basis vectors, and T2 linear combination coefficients. One linear combination coefficient corresponds to one spatial domain basis vector and one frequency domain basis vector. The L1 spatial domain basis vectors, the M1 frequency domain basis vectors, and the T1 linear combination coefficients are used to determine a first precoding submatrix. The L2 spatial domain basis vectors, the M2 frequency domain basis vectors, and the T2 linear combination coefficients are used to determine a second precoding submatrix. L1, M1, T1, L2, M2, and T2 are all positive integers.

For example, the T1 linear combination coefficients are all linear combination coefficients in K1 linear combination coefficients, and the K1 linear combination coefficients correspond to the L1 spatial domain basis vectors and the M1 frequency domain basis vectors: T1=K1=2L1*M1. The T2 linear combination coefficients are all linear combination coefficients in K3 linear combination coefficients, and the K3 linear combination coefficients correspond to the L2 spatial domain basis vectors and the M2 frequency domain basis vectors: T2=K3=2L2*M2.

It should be understood that, in this example, the K1 linear combination coefficients are all linear combination coefficients determined by the L1 spatial domain basis vectors and the M1 frequency domain basis vectors, and the K3 linear combination coefficients are all linear combination coefficients determined by the L2 spatial domain basis vectors and the M2 frequency domain basis vectors.

For example, the T1 linear combination coefficients are a part of K1 linear combination coefficients, and the K1 linear combination coefficients correspond to the L1 spatial domain basis vectors and the M1 frequency domain basis vectors: T1<K1 and K1=2L1*M1. The T2 linear combination coefficients are a part of K3 linear combination coefficients, and the K3 linear combination coefficients correspond to the L2 spatial domain basis vectors and the M2 frequency domain basis vectors: T2<K3 and K3=2L2*M2.

It should be understood that, in this example, a quantity of all linear combination coefficients determined by the L1 spatial domain basis vectors and the M1 frequency domain basis vectors is K1, and the T1 linear combination coefficients are the part of the linear combination coefficients. A quantity of all linear combination coefficients determined by the L2 spatial domain basis vectors and the M2 frequency domain basis vectors is K3, and the T2 linear combination coefficients are the part of the linear combination coefficients.

It should be further understood that, in this implementation, L1 and L2 may be equal or may not be equal, T1 and T2 may be equal or may not be equal, and M1 and M2 may be equal or may not be equal. This is not limited in this application.

A quantity L of spatial domain basis vectors, a quantity M of frequency domain basis vectors, and a quantity T of linear combination coefficients, that are indicated by the third indication information, each may be a maximum average quantity corresponding to a plurality of port groups, may be a maximum total quantity corresponding to the plurality of port groups, or may be a quantity corresponding to each port group, where L, M, and T are all positive integers.

It should be understood that the plurality of port groups may be all port groups corresponding to a coordinating set, may be port groups corresponding to all TRPs in the coordinating set, or may be port groups corresponding to a plurality of precoding submatrices included in the precoding matrix indicated by the first indication information. The plurality of port groups include the first port group and the second port group.

For example, when the quantity L of spatial domain basis vectors that is indicated by the third indication information is the maximum average quantity of spatial domain basis vectors corresponding to the plurality of port groups, L1+L2≤2L; or when L is the maximum total quantity of spatial domain basis vectors corresponding to the plurality of port groups, L1+L2≤L.

When the quantity M of frequency domain basis vectors that is indicated by the third indication information is the maximum average quantity of frequency domain basis vectors corresponding to the plurality of port groups, M1+M2≤2M; or when M is the maximum total quantity of frequency domain basis vectors corresponding to the plurality of port groups, M1+M2≤M.

When the quantity T of linear combination coefficients that is indicated by the third indication information is the maximum average quantity of linear combination coefficients corresponding to the plurality of port groups, T1+T2≤2T; or when T is the maximum total quantity of linear combination coefficients corresponding to the plurality of port groups, T1+T2≤T.

It should be understood that when the plurality of (two or more) port groups use a same group of frequency domain basis vectors, for example, the first port group and the second port group share the same group of frequency domain basis vectors (for example, the M1 frequency domain basis vectors), the quantity M of frequency domain basis vectors may be the value of M1.

For implementation details of the method 400 (for example, specific content included in the first information or the second information and conditions that need to be met by the basis vectors and the linear combination coefficients that correspond to the port groups when the first indication information determined by the first apparatus may be used to determine the plurality of precoding submatrices), refer to descriptions of related steps in the method 300. Details are not described again.

In the method 400, the second apparatus may jointly allocate the quantities of spatial domain basis vectors, frequency domain basis vectors, and linear combination coefficients that correspond to each port group, to reduce signaling overheads for allocating an indication.

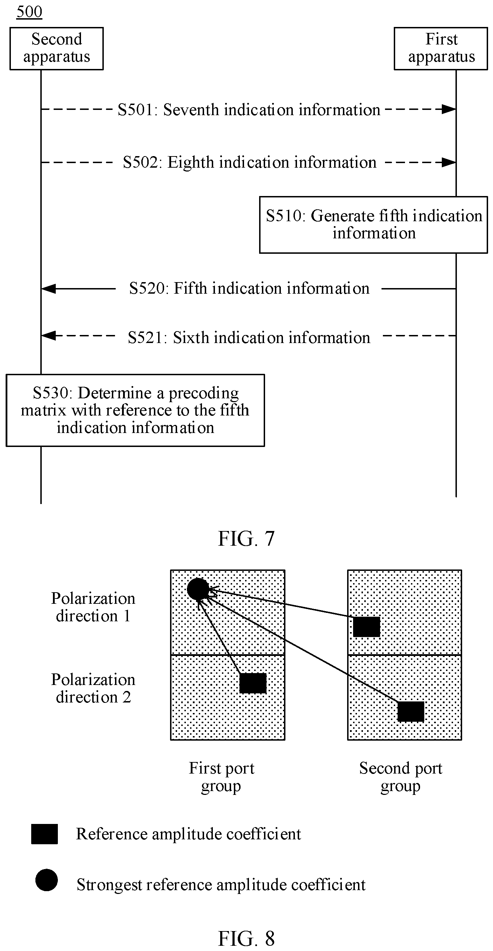

FIG. 7 is a schematic flowchart of still another channel state information feedback method according to an embodiment of this application.

A multi-station joint codebook is provided in this embodiment of this application: For each transport layer/each receive port (receive port of a first apparatus), $W_i$ (precoding submatrix) corresponding to one port group (transmit port group of a second apparatus) may represent a linear combination of a port selected from the port group and an angle-delay pair corresponding to the selected port. A value 1 of i indicates a parameter corresponding to a first port group, a value 2 of i indicates a parameter corresponding to a second port group, and so on.

For example, the multi-station joint codebook is $W_i = W_{i,1} \widetilde{W}_{i,2} W_{i,f}^H$. $W_{i,1}$ may be a port selection matrix whose dimension is $P_i \times Q_i$. Each column may have a non-zero element whose value is 1, indicating that the first apparatus may select $Q_i$ ports from $P_i$ ports of each port group. $P_i$ may be a quantity of all or a part of ports corresponding to one port group. Considering dual-polarization, $Q_i$ may be a total quantity of ports selected in two polarization directions, and $Q_i/2$ ports are selected in each polarization direction. $W_{i,f}$ may be a frequency domain basis vector set whose dimension is $N_f \times Z_i$, including $Z_i$ frequency domain basis vectors whose dimensions are $N_f \times 1$. $N_f$ is a quantity of frequency domain units, and the superscript H represents conjugate transpose. When K angle-delay pairs are loaded on each port, $Z_i$ frequency domain basis vectors are selected from $W_{i,f}$ to indicate several specific angle-delay pairs selected for each of the selected $Q_i$ ports. $\tilde{W}_{i,2}$ is an angle-delay pair coefficient matrix corresponding to the angle-delay pairs selected for each of the $Q_i$ ports selected by the first apparatus.

The method 500 shown in FIG. 7 includes the following steps.

Step S510: The first apparatus generates fifth indication information. The fifth indication information is determined based on received precoded reference signals of port groups. The port groups include the first port group and the second port group. The first port group includes P1 first ports, and the second port group includes P2 second ports. The fifth indication information includes fifth information. The fifth information indicates Q1 first ports in the first port group, Q2 second ports in the second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair. One angle-delay pair includes one angle vector and one delay vector. A precoded reference signal of the first port group or the second port group is obtained by precoding a reference signal based on an angle-delay pair. P1, P2, Q1, Q2, X1, and X2 are all positive integers, Q1≤P1, and Q2≤P2.

If single polarization is considered, P1 is a quantity of ports in one polarization direction of the first port group, P2 is a quantity of ports in the polarization direction of the second port group, Q1 is a quantity of ports selected in the polarization direction of the first port group, and Q2 is a quantity of ports selected in the polarization direction of the second port group. If dual-polarization is considered, P1 is a quantity of ports in two polarization directions of the first port group, P2 is a quantity of ports in the two polarization directions of the second port group, Q1 is a quantity of ports selected in the two polarization directions of the first port group, and Q2 is a quantity of ports selected in the two polarization directions of the second port group. In addition, for each port group, in different polarization directions, quantities of ports selected by the first apparatus may be the same or may be different, and sequence numbers of the ports selected by the first apparatus may be the same or may be different.

It should be understood that, before step S510, the first apparatus receives precoded reference signals from a plurality of port groups, where the plurality of port groups include the first port group and the second port group, and measures a channel based on the received precoded reference signals. In the method 500, an example in which the first apparatus receives the precoded reference signals of the first port group and the second port group is used for description. The protection scope of this application is not limited thereto. The first apparatus may receive the precoded reference signals of the plurality of (for example, three or more, where the quantity may be a quantity of stations for joint transmission) port groups. In this case, the first apparatus feeds back ports, frequency domain basis vectors, and angle-delay pair coefficients that can be used to determine a plurality of precoding submatrices. Specifically, how the first apparatus provides the feedback is similar to the method for feeding back the two precoding submatrices. Details are not described in this application.

For example, assuming that a multi-station scenario includes two TRPs (where one of the TRPs is the second apparatus), different TRPs send precoded reference signals on different port groups, and the first apparatus receives the precoded reference signals. An $i^{th}$ port group corresponding to an $i^{th}$ TRP includes Pi ports. One or more angle-delay pairs determined by the TRP based on an uplink channel are loaded on each port. The first apparatus determines, based on measurement of the precoded reference signals, equivalent channel information $\{\hat{H}_{i,k}\}_{i=1,2;k=0,...,N_f-1}$ corresponding to the two port groups on the $N_f$ frequency domain units, where a dimension is $N_{rx} \times Pi$, and $N_{rx}$ is a quantity of receive ports of the first apparatus.

It should be understood that the generated fifth indication information may be specific to each transport layer, or may be specific to each receive port of the first apparatus (where the receive port in this application may be considered as a receive port of the first apparatus). The port group in this application may be considered as a transmit port group of the second apparatus, and the port in this application may be considered as a transmit port of the second apparatus.

For example, the generated fifth indication information is specific to each transport layer. To be specific, the first apparatus sorts and rearranges angle-delay pair coefficients of all port groups (for example, the first port group and the second port group) corresponding to all the receive ports, to obtain an angle-delay pair coefficient matrix whose dimension is $N_{rx} \times$ (quantity of angle-delay pair coefficients of all the port groups corresponding to all the receive ports), and performs eigenvalue decomposition on the matrix to obtain $N_{rank}$ right characteristic vectors whose dimensions are (quantity of angle-delay pair coefficients of all the port groups corresponding to all the receive ports) $\times 1$, where $N_{rank}$ is a quantity of transport layers for which the first apparatus provides the feedback. Then, the angle-delay pair coefficients corresponding to the port groups of each transport layer are sorted and rearranged as an angle-delay pair coefficient matrix $\tilde{W}_{i,2}$ corresponding to each transport layer.

For example, the generated fifth indication information is specific to each receive port, that is, a feedback is provided for the receive port. To be specific, the first apparatus sorts and rearranges the angle-delay pair coefficients corresponding to each port group (for example, the first port group and the second port group) of each receive port as $\tilde{W}_{i,2}$ corresponding to the receive port.

The foregoing process of generating the fifth indication information for each transport layer or each receive port is merely an example, and does not limit the protection scope of this application.

In a possible implementation, for each port group, when the quantity $Z_i$ of frequency domain basis vectors is configured to 1, corresponding $W_{i,f}$ is a frequency domain basis vector whose elements are all 1, and the fifth indication information does not indicate the frequency domain basis vector corresponding to the port group.

Optionally, the fifth information further indicates $Z_1$ frequency domain basis vectors. The $Q_1$ first ports, the $Z_1$ frequency domain basis vectors, and the $X_1$ angle-delay pair coefficients are used to determine the first precoding submatrix. The $Q_2$ second ports, the $Z_1$ frequency domain basis vectors (or $Z_2$ frequency domain basis vectors whose elements are all 1, that is, $Z_2$ is configured to 1), and the $X_2$ angle-delay pair coefficients are used to determine the second precoding submatrix. $Z_1$ is a positive integer greater than or equal to 2.

For example, the $X_1$ angle-delay pair coefficients are all angle-delay pair coefficients in $Y_1$ angle-delay pair coefficients, and the $Y_1$ angle-delay pair coefficients correspond to the $Z_1$ frequency domain basis vectors and the $Q_1$ first ports: $X_1=Y_1=Z_1*Q_1$. The $X_2$ angle-delay pair coefficients are all angle-delay pair coefficients in $Y_2$ angle-delay pair coefficients, and the $Y_2$ angle-delay pair coefficients correspond to the $Z_1$ frequency domain basis vectors and the $Q_2$ second ports: $X_2=Z_1*Q_2$, or the $X_2$ angle-delay pair coefficients correspond to $Z_2$ frequency domain basis vectors and the $Q_2$ second ports and a value of $Z_2$ is 1: $X_2=Y_2=Z_2*Q_2=Q_2$.

It should be understood that, in this example, the $Y_1$ angle-delay pair coefficients are all angle-delay pair coefficients corresponding to the $Q_1$ first ports and the $Z_1$ frequency domain basis vectors, and the $Y_2$ angle-delay pair coefficients are all angle-delay pair coefficients corresponding to the $Q_2$ second ports and the $Z_1$ frequency domain basis vectors (or the $Z_2$ frequency domain basis vectors, where $Z_2=1$).

For example, the $X_1$ angle-delay pair coefficients are a part of the $Y_1$ angle-delay pair coefficients, and the $Y_1$ angle-delay pair coefficients correspond to the $Q_1$ first ports and the $Z_1$ frequency domain basis vectors, where $X_1<Y_1$ and $Y_1=Q_1*Z_1$. The $X_2$ angle-delay pair coefficients are a part of the $Y_2$ angle-delay pair coefficients, and the $Y_2$ angle-delay

pair coefficients correspond to the Q2 second ports and the Z1 frequency domain basis vectors (or Z2 frequency domain basis vectors, where Z2=1), where X2<Y2 and Y2=Q2*Z1 (or Y2=Q2*Z2=Q2).

It should be understood that, in this example, a quantity of all the angle-delay pair coefficients corresponding to the Q1 first ports and the Z1 frequency domain basis vectors is Y1, and the X1 angle-delay pair coefficients are the part of the Y1 angle-delay pair coefficients. A quantity of all the angle-delay pair coefficients corresponding to the Q2 second ports and the Z1 frequency domain basis vectors (or Z2 frequency domain basis vectors, where Z2=1) is Y2, and the X2 angle-delay pair coefficients are the part of the Y2 angle-delay pair coefficients.

It should be further understood that, in the foregoing example, same frequency domain basis vectors, namely, the Z1 frequency domain basis vectors, are used to determine the first precoding submatrix and the second precoding submatrix, where Z1≥2. Q1 and Q2 may be equal or may not be equal, and X1 and X2 may be equal or may not be equal. This is not limited in this application.

Optionally, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers greater than or equal to 2.

For example, the X1 angle-delay pair coefficients are all angle-delay pair coefficients in Y1 angle-delay pair coefficients, and the Y1 angle-delay pair coefficients correspond to the Z1 frequency domain basis vectors and the Q1 first ports: X1=Y1=Z1*Q1. The X2 angle-delay pair coefficients are all angle-delay pair coefficients in Y3 angle-delay pair coefficients, and the Y3 angle-delay pair coefficients correspond to the Z2 frequency domain basis vectors and the Q2 second ports: X2=Y3=Z2*Q2.

It should be understood that, in this example, the Y1 angle-delay pair coefficients are all angle-delay pair coefficients corresponding to the Q1 first ports and the Z1 frequency domain basis vectors, and the Y3 angle-delay pair coefficients are all angle-delay pair coefficients corresponding to the Q2 second ports and the Z2 frequency domain basis vectors.

For example, the X1 angle-delay pair coefficients are a part of Y1 angle-delay pair coefficients, and the Y1 angle-delay pair coefficients correspond to the Q1 first ports and the Z1 frequency domain basis vectors, where X1<Y1 and Y1=Q1*Z1. The X2 angle-delay pair coefficients are a part of Y3 angle-delay pair coefficients, and the Y3 angle-delay pair coefficients correspond to the Q2 second ports and the Z2 frequency domain basis vectors, where X2<Y3 and Y3=Q2*Z2.

It should be understood that, in this example, a quantity of all the angle-delay pair coefficients corresponding to the Q1 first ports and the Z1 frequency domain basis vectors is Y1, and the X1 angle-delay pair coefficients are the part of the Y1 angle-delay pair coefficients. A quantity of all the angle-delay pair coefficients corresponding to the Q2 second ports and the Z2 frequency domain basis vectors is Y3, and the X2 angle-delay pair coefficients are the part of the Y3 angle-delay pair coefficients.

It should be understood that, in the foregoing example, Q1 and Q2 may be equal or may not be equal, X1 and X2 may be equal or may not be equal, and Z1 and Z2 may be equal or may not be equal. This is not limited in this application.

Optionally, an angle-delay pair coefficient reported by the first apparatus is a non-zero angle-delay pair coefficient.

It should be further understood that when the fifth indication information is determined based on the received precoded reference signals of the port groups, and the port groups include the plurality of port groups (for example, three or more port groups, where the quantity may be a quantity of TRPs in a coordinating set), the fifth indication information includes information about the selected ports, frequency domain basis vectors, and angle-delay pair coefficients that are used to determine the plurality of precoding submatrices. In this embodiment of this application, an example in which the fifth indication information includes the information used to determine the two precoding submatrices (namely, the first precoding submatrix and the second precoding submatrix) is used for description. However, the protection scope of this application is not limited thereto. If the fifth indication information includes information indicating the plurality of precoding submatrices, a method for indicating, by the fifth indication information, information needed to determine the precoding submatrices of the plurality of port groups (for example, information about the ports, frequency domain basis vectors (optional), and angle-delay pair coefficients that correspond to the plurality of port groups) is similar to the method for indicating, by the fifth indication information, the information needed to determine the precoding submatrices corresponding to the first port group and the second port group. Analogy may be performed based on specific content in the foregoing descriptions. Details are not described herein again.

The following describes how the fifth indication information indicates the ports selected from the port groups, the frequency domain basis vectors, and the angle-delay pair coefficients.

1. Indication of the ports in the port groups

The fifth information indicates ports corresponding to two port groups. For example, the fifth information indicates the Q1 first ports and the Q2 second ports in the following manners.

Manner 1:

The fifth information includes information indicating Q1-q1 first ports and Q2-q2 second ports. The first port group has q1 default ports, where q1≥1. The second port group has q2 default ports, where q2≥1. Quantities of default ports in different port groups may be the same or may be different.
For example, the fifth information includes indexes indicating the Q1-q1 first ports and indexes indicating the Q2-q2 second ports.

Manner 2:

The fifth information includes information indicating Q1 first ports and Q2 second ports.
For example, the fifth information includes indexes indicating the Q1 first ports and indexes indicating the Q2 second ports.
A manner in which the fifth information indicates the selected ports corresponding to the two port groups is not limited in this application.
It should be understood that a manner in which the fifth information indicates selected ports corresponding to the plurality of port groups is similar to the manner in which the fifth information indicates the selected ports corresponding to the two port groups. Details are not described herein again.
Optionally, a specific indication of ports selected from each port group is similar to a port indication corresponding to a codebook structure of R17 enhanced type II.
In addition to indicating the selected ports by reporting the indexes of the ports in the foregoing example, the selected ports may also be indicated by reporting a quantity of combinations corresponding to the ports or by using a bitmap. For details, refer to a conventional technology. Details are not described herein.

2. Indication of the frequency domain basis vectors

The fifth information indicates frequency domain basis vectors corresponding to two port groups (including that the two port groups use a same group of frequency domain basis vectors). For example, the first information indicates Z1 frequency domain basis vectors in the following manners.

Manner 1:

The fifth information includes information indicating Z1-z frequency domain basis vectors, and the first port group and the second port group have same z default frequency domain basis vectors, where z≥1.
For example, the fifth information includes indexes indicating the Z1-z frequency domain basis vectors.

Manner 2:

The fifth information includes information indicating the Z1 frequency domain basis vectors.
For example, the fifth information includes indexes indicating the Z1 frequency domain basis vectors.
A manner in which the fifth information indicates the frequency domain basis vectors corresponding to the two port groups is not limited in this application.
It should be understood that a manner in which the fifth information indicates frequency domain basis vectors corresponding to the plurality of port groups is similar to the manner in which the fifth information indicates the frequency domain basis vectors corresponding to the two port groups. Details are not described herein again.
The fifth information indicates frequency domain basis vectors corresponding to two port groups (including that the two port groups use different groups of frequency domain basis vectors). For example, the fifth information indicates the Z1 frequency domain basis vectors and the Z2 frequency domain basis vectors in the following manners.

Manner 3:

The fifth information includes information indicating Z1-z1 frequency domain basis vectors and Z2-z2 frequency domain basis vectors. The first port group has z1 default frequency domain basis vectors, where z1≥1. The second port group has z2 default frequency domain basis vectors, where z2≥1. Default frequency domain basis vectors of different port groups may be the same or may be different. Quantities of the default frequency domain basis vectors of the different port groups may be the same or may be different.

For example, the fifth information includes indexes indicating the Z1-z1 frequency domain basis vectors and indexes indicating the Z2-z2 frequency domain basis vectors.

Manner 4:

The fifth information includes information indicating the Z1 frequency domain basis vectors and the Z2 frequency domain basis vectors.

For example, the fifth information includes indexes indicating the Z1 frequency domain basis vectors and indexes indicating the Z2 frequency domain basis vectors.

A manner in which the fifth information indicates the frequency domain basis vectors corresponding to the two port groups is not limited in this application.

It should be understood that a manner in which the fifth information indicates frequency domain basis vectors corresponding to the plurality of port groups is similar to the manner in which the fifth information indicates the frequency domain basis vectors corresponding to the two port groups. Details are not described herein again.

Optionally, a specific indication of the frequency domain basis vector is similar to an indication of a frequency domain basis vector corresponding to the codebook structure of R17 enhanced type II, for example, a method for indicating the frequency domain basis vector in the method 300. Details are not described herein again.

3. Indication of a location of a reported angle-delay pair coefficient

Optionally, the indication of the location of the angle-delay pair coefficient is consistent with an indication of a location of an angle-delay pair coefficient corresponding to the codebook structure of R17 enhanced type II.

For example, a location of an angle-delay pair coefficient of each port group is separately indicated, and a bitmap (bitmap) indicates the location of the angle-delay pair coefficient. In the bitmap, a bit value at the location corresponding to the angle-delay pair coefficient is 1, a bit value at another location is 0, and vice versa. A quantity of bits occupied by a bitmap of each transport layer/receive port of each port group may be determined by a quantity of selected ports and a quantity of frequency domain basis vectors. For example, a quantity of first ports corresponding to the first port group is Q1, and a quantity of frequency domain basis vectors is Z1. In this case, a quantity of bits occupied by a bitmap that indicates an angle-delay pair coefficient corresponding to the first port group may be $Q_1 * Z_1$.

3. Indication of the angle-delay pair coefficients

The angle-delay pair coefficients reported by the first apparatus in the fifth indication information are obtained through joint quantization (where the joint quantization may be understood as performing quantization on all angle-delay pair coefficients corresponding to a plurality of stations in a multi-station coordination scenario). The angle-delay pair coefficient may be decomposed into an amplitude coefficient and a phase coefficient. The first apparatus may report the amplitude coefficient through differential quantization, for example, 2-stage differential and 3-stage differential. Details are described below.

A. Indication of the amplitude coefficient

2-stage differential

In a possible implementation, the fifth indication information includes sixth information indicating the X1 angle-delay pair coefficients and the X2 angle-delay pair coefficients. The sixth information includes amplitude information. The amplitude information includes information indicating differential amplitude coefficients. The differential amplitude coefficients include a reference differential amplitude coefficient and a first differential amplitude coefficient. The reference differential amplitude coefficient is a relative value of a reference amplitude coefficient in each polarization direction of each port group relative to a strongest reference amplitude coefficient. The reference amplitude coefficient is a strongest amplitude coefficient in amplitude coefficients in one polarization direction of a port group. The first differential amplitude coefficient is a relative value of an amplitude coefficient in each polarization direction of each port group relative to the reference amplitude coefficient.

For example, as shown in FIG. 8, for each transport layer/receive port, joint quantization is performed on coefficients of all the port groups. Two port groups are used as an example for description. One reference amplitude coefficient is determined for each polarization direction of each port group. The reference amplitude coefficient is a strongest amplitude coefficient in amplitude coefficients in one polarization direction of a port group. Four reference amplitude coefficients are included in FIG. 8. To be specific, a reference amplitude coefficient corresponding to a polarization direction 1 of the first port group is a reference amplitude coefficient #1, a reference amplitude coefficient corresponding to a polarization direction 2 of the first port group is a reference amplitude coefficient #2, a reference amplitude coefficient corresponding to the polarization direction 1 of the second port group is a reference amplitude coefficient #3, and a reference amplitude coefficient corresponding to the polarization direction 2 of the second port group is a reference amplitude coefficient #4. The strongest reference amplitude coefficient is the reference amplitude coefficient #1.

The reference differential amplitude coefficient includes a relative value of the reference amplitude coefficient #2 relative to the reference amplitude coefficient #1, a relative value of the reference amplitude coefficient #3 relative to the reference amplitude coefficient #1, and a relative value of the reference amplitude coefficient #4 relative to the reference amplitude coefficient #1. The first differential amplitude coefficient includes relative values of all amplitude coefficients (except the reference amplitude coefficient #1) in the polarization direction 1 of the first port group relative to the reference amplitude coefficient #1, relative values of all amplitude coefficients (except the reference amplitude coefficient #2) in the polarization direction 2 of the first port group relative to the reference amplitude coefficient #2, relative values of all amplitude coefficients (except the reference amplitude coefficient #3) in the polarization direction 1 of the second port group relative to the reference amplitude coefficient #3, and relative values of all amplitude coefficients (except the reference amplitude coefficient #4) in the polarization direction 2 of the second port group relative to the reference amplitude coefficient #4.

If the amplitude coefficient is fed back for the transport layer, the sixth information indicates a location of a strongest amplitude coefficient (for example, the reference amplitude coefficient #1) in all polarization directions of all port groups corresponding to each transport layer, and specific amplitude of the strongest reference amplitude coefficient at each transport layer may not be reported.

If the amplitude coefficient is fed back for each receive port, the sixth information indicates a location of a strongest amplitude coefficient (for example, the reference amplitude coefficient #1) in all polarization directions of all port groups corresponding to each receive port, and an absolute value of a strongest amplitude coefficient (for example, the reference amplitude coefficient #1) corresponding to each receive port is reported. Alternatively, a strongest reference amplitude coefficient is determined for all receive ports as a reference. For example, if a strongest reference amplitude coefficient of a receive port #1 in all the receive ports is the largest and is the strongest reference amplitude coefficient #1, a strongest reference amplitude coefficient of another receive port (a receive port other than the receive port #1) may be indicated by using a relative value of the strongest reference amplitude coefficient of the another receive port relative to the strongest reference amplitude coefficient #1. The strongest reference amplitude coefficient #1 may be reported, or may not be reported. If the strongest reference amplitude coefficient #1 is not reported, the receive port corresponding to the strongest reference amplitude coefficient #1 needs to be indicated.

The relative value may be understood as a difference or a ratio. This is not limited in this application.

3-stage differential

In a possible implementation, the fifth indication information includes seventh information indicating the X1 angle-delay pair coefficients and the X2 angle-delay pair coefficients. The seventh information includes amplitude information. The amplitude information includes information indicating differential amplitude coefficients. The differential amplitude coefficients include a first reference differential amplitude coefficient, a second reference differential amplitude coefficient, and a second differential amplitude coefficient. The first reference differential amplitude coefficient is a relative value of a first reference amplitude coefficient in all polarization directions of each port group relative to a strongest first reference amplitude coefficient. The first reference amplitude coefficient is a strongest amplitude coefficient in amplitude coefficients in all polarization directions of a port group. The second reference differential amplitude coefficient is a relative value of a second reference amplitude coefficient in each polarization direction of each port group relative to the first reference amplitude coefficient. The second reference amplitude coefficient is a strongest amplitude coefficient in amplitude coefficients in one polarization direction of a port group. The second differential amplitude coefficient is a relative value of an amplitude coefficient in each polarization direction of each port group relative to the second reference amplitude coefficient.

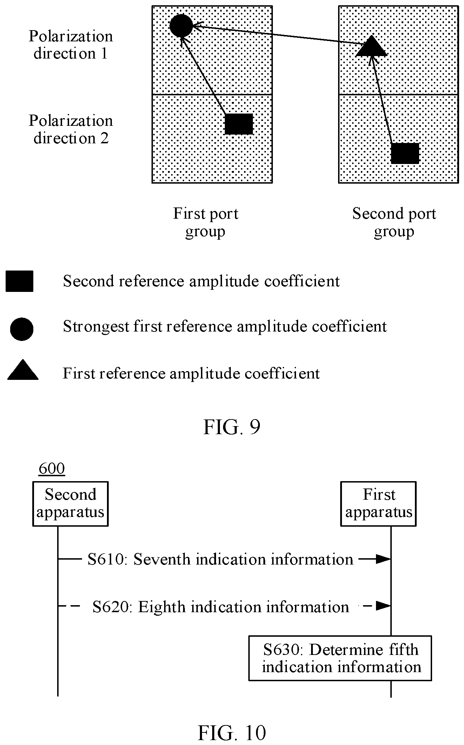

For example, as shown in FIG. 9, for each transport layer/receive port, joint quantization is performed on coefficients of all the port groups. Two port groups are used as an example for description. One second reference amplitude coefficient is determined for each polarization direction of each port group. The second reference amplitude coefficient is a strongest amplitude coefficient (namely, a strongest amplitude coefficient) in amplitude coefficients in one polarization direction of a port group. The first reference amplitude coefficient is a strongest second reference amplitude coefficient in amplitude coefficients in all polarization directions of a port group. Four second reference amplitude coefficients are included in FIG. 9: a second reference amplitude coefficient #1 corresponding to a polarization direction 1 of the first port group, a second reference amplitude coefficient #2 corresponding to a polarization direction 2 of the first port group, a second reference amplitude coefficient #3 corresponding to the polarization direction 1 of the second port group, and a second reference amplitude coefficient #4 corresponding to the polarization direction 2 of the second port group. For the first port group, the second reference amplitude coefficient #1 is greater than the second reference amplitude coefficient #2. Therefore, the second reference amplitude coefficient #1 is a first reference amplitude coefficient #1. For the second port group, the second reference amplitude coefficient #3 is greater than the second reference amplitude coefficient #4. Therefore, the second reference amplitude coefficient #3 is a first reference amplitude coefficient #2. The first reference amplitude coefficient #1 is greater than the first reference amplitude coefficient #2. In other words, the strongest first reference amplitude coefficient (strongest first reference amplitude coefficient) is the first reference amplitude coefficient #1.

The first reference differential amplitude coefficient includes a relative value of the second reference amplitude coefficient #3 relative to the first reference amplitude coefficient #1. The second reference differential amplitude coefficient includes a relative value of the second reference amplitude coefficient #2 relative to the first reference amplitude coefficient #1 and a relative value of the second reference amplitude coefficient #4 relative to the first reference amplitude coefficient #2.

The second differential amplitude coefficient includes relative values of all amplitude coefficients (except the second reference amplitude coefficient #1) in the polarization direction 1 of the first port group relative to the second reference amplitude coefficient #1, relative values of all amplitude coefficients (except the second reference amplitude coefficient #2) in the polarization direction 2 of the first port group relative to the second reference amplitude coefficient #2, relative values of all amplitude coefficients (except the second reference amplitude coefficient #3) in the polarization direction 1 of the second port group relative to the second reference amplitude coefficient #3, and relative values of all amplitude coefficients (except the second reference amplitude coefficient #4) in the polarization direction 2 of the second port group relative to the second reference amplitude coefficient #4.

If the amplitude coefficient is fed back for the transport layer, the seventh information indicates a location of a strongest amplitude coefficient (for example, the first reference amplitude coefficient #1) in all polarization directions of all port groups of each transport layer, and specific amplitude of the strongest amplitude coefficient at each transport layer may not be reported.

If the amplitude coefficient is fed back for each receive port, the seventh information indicates a location of a strongest amplitude coefficient (for example, the first reference amplitude coefficient #1) in all polarization directions of all port groups of each receive port, and an absolute value of the strongest amplitude coefficient (for example, the first reference amplitude coefficient #1) corresponding to each receive port is reported. Alternatively, a strongest reference amplitude coefficient is determined for all receive ports as a reference. For example, if a strongest reference amplitude coefficient of a receive port #1 in all the receive ports is the largest and is the strongest first reference amplitude coefficient #1, a strongest first reference amplitude coefficient of another receive port (a receive port other than the receive port #1) may be indicated by using a relative value of the strongest first reference amplitude coefficient of the another receive port relative to the strongest first reference amplitude coefficient #1. The strongest first reference amplitude coefficient #1 may be reported, or may not be reported. If the strongest first reference amplitude coefficient #1 is not reported, a receive port corresponding to the strongest first reference amplitude coefficient #1 needs to be indicated.

B. Indication of the phase coefficient

In a possible implementation, the first apparatus may quantize and report the phase coefficient, for example, quantize and report absolute phase values of all phase coefficients of all the port groups.

In another possible implementation, the first apparatus may quantize and report relative values of all phase coefficients of all the port groups relative to a strongest phase coefficient. A phase of the strongest phase coefficient may not be reported, that is, a location of the strongest phase coefficient is indicated when the amplitude coefficient is quantized and reported.

Step S520: The first apparatus sends the fifth indication information to the second apparatus. Correspondingly, the second apparatus receives the fifth indication information.

It should be understood that the first apparatus may be a terminal device, or may be a part configured in the terminal device, for example, a chip or a chip system. This is not limited in this application. The second apparatus may be a network device, for example, a TRP in the multi-station coordination scenario, or the second apparatus may be a part configured in the network device, for example, a chip or a chip system. This is not limited in this application.

Optionally, the method 500 further includes the following steps.

Step S521: The first apparatus sends sixth indication information to the second apparatus. The sixth indication information indicates at least one of the following: values of Q1, Q2, X1, and X2. Correspondingly, the second apparatus receives the sixth indication information.

Optionally, the sixth indication information further indicates a value of at least one of Z1 and Z2.

It should be understood that when the sixth indication information indicates the value of Z1 or Z2, the first port group and the second port group may share a same group of frequency domain basis vectors, or the first port group may use the Z1 frequency domain basis vectors, and the quantity Z2 of frequency domain basis vectors used by the second port group may be configured to 1, that is, $\mathbf{W}_{i,f}$ corresponding to the second port group may be a frequency domain basis vector whose elements are all 1 (a case in which the sixth indication information indicates Z1). A case in which the sixth indication information indicates Z2 is similar to the case in which the sixth indication information indicates Z1. Details are not described herein again.

It should be further understood that when the sixth indication information indicates the values of Z1 and Z2, the first port group generates the first precoding submatrix by using the Z1 frequency domain basis vectors, and the second port group generates the second precoding submatrix by using the Z2 frequency domain basis vectors.

For example, if the sixth indication information indicates the value of Q1, the second apparatus may truncate and interpret, based on the value of Q1, the Q1+Q2 ports indicated by the fifth indication information, and the first apparatus and the second apparatus may agree on a sequence of ports corresponding to the first port group and ports corresponding to the second port group. Assuming that it is agreed that the ports corresponding to the first port group are in front of the ports corresponding to the second port group, the second apparatus may determine, based on the value of Q1, that the first Q1 ports in the Q1+Q2 ports indicated by the first apparatus are the ports corresponding to the first port group, and the remaining Q2 ports are the ports corresponding to the second port group. If the sixth indication information indicates the value of Q2, the second apparatus may truncate and interpret, based on the value of Q2, the Q1+Q2 ports indicated by the fifth indication information, and the first apparatus and the second apparatus may agree on a sequence of ports corresponding to the first port group and ports corresponding to the second port group. Assuming that it is agreed that the ports corresponding to the first port group are in front of the ports corresponding to the second port group, the second apparatus may determine, based on the value of Q2, that the last Q2 ports in the Q1+Q2 ports indicated by the first apparatus are the ports corresponding to the second port group, and the remaining Q1 ports are the ports corresponding to the first port group.

A method for truncating and interpreting, by the second apparatus with reference to a value indicated by the sixth indication information, specific content carried in the fifth indication information when the sixth indication information indicates Z1, Z2, X1, and X2 is similar to the method for determining, by the second apparatus with reference to the value of Q1 and/or the value of Q2 that are/is indicated by the sixth indication information, the ports corresponding to the first port group and the ports corresponding to the second port group. Details are not described again.

The fifth indication information in step S520 and the sixth indication information in step S521 may be carried in a same message, or may be separately carried in different messages. This is not limited in this application. If the fifth indication information and the sixth indication information are carried in the same message, the fifth indication information and the sixth indication information may be used as sub-message blocks of the message.

For example, the fifth indication information and the sixth indication information may be carried in a message used by the first apparatus to feed back channel state information to the second apparatus. This is not limited in this application.

Step S530: The second apparatus determines a precoding matrix with reference to the fifth indication information. The precoding matrix includes the first precoding submatrix and the second precoding submatrix.

In a possible implementation, the second apparatus determines the precoding matrix based on the fifth indication information and angle-delay pairs loaded on ports corresponding to the precoded reference signals.

In another possible implementation, the second apparatus determines the precoding matrix based on the fifth indication information, the sixth indication information, and angle-delay pairs loaded on ports corresponding to the precoded reference signals.

For example, the second apparatus determines, with reference to the Q1 first ports, the X1 angle-delay pair coefficients, and angle-delay pairs loaded on the Q1 first ports for sending the precoded reference signal, the first precoding submatrix corresponding to the first port group, and determines, with reference to the Q2 second ports, the X2 angle-delay pair coefficients, and angle-delay pairs loaded on the Q2 second ports for sending the precoded reference signal, the second precoding submatrix corresponding to the second port group.

Optionally, before S510, the method 500 further includes the following steps.

Step S501: The second apparatus sends seventh indication information to the first apparatus. The seventh indication information indicates at least one of the following: a quantity of ports, a quantity of frequency domain basis vectors, and a quantity of angle-delay pair coefficients, and the ports include at least one of the first ports and the second ports. Correspondingly, the first apparatus receives the seventh indication information.

In a possible implementation, the first apparatus may determine, based on a measurement result of a channel, to report at least one of the quantities of ports, frequency domain basis vectors, and angle-delay pair coefficients.

In another possible implementation, at least one of the quantities of ports, frequency domain basis vectors, and angle-delay pair coefficients may be predefined or preconfigured.

In still another possible implementation, the first apparatus may determine, based on the seventh indication information, to report at least one of the quantities of ports, frequency domain basis vectors, and angle-delay pair coefficients.

In the foregoing implementations, the quantities of ports corresponding to the different port groups, the quantities of frequency domain basis vectors corresponding to the different port groups, and the quantities of angle-delay pair coefficients corresponding to the different port groups may be reported in the sixth indication information. Alternatively, the quantities of ports corresponding to the different port groups and the quantities of angle-delay pair coefficients corresponding to the different port groups may be reported in the sixth indication information. The quantity of frequency domain basis vectors may be a default value, for example, a predefined or preconfigured value, or may be indicated by the seventh indication information. Alternatively, the quantities of angle-delay pair coefficients corresponding to the different port groups may be reported in the sixth indication information. The quantity of ports and the quantity of frequency domain basis vectors may be default values, for example, predefined or preconfigured values, or may be indicated by the seventh indication information.

In other words, assuming that one of the quantities of ports, frequency domain basis vectors, and angle-delay pair coefficients is reported in the sixth indication information, the other two quantities may be default values, for example, predefined or preconfigured values, or may be indicated by the seventh indication information. Alternatively, assuming that two of the quantities of ports, frequency domain basis vectors, and angle-delay pair coefficients are reported in the sixth indication information, the other quantity may be a default value, for example, a predefined or preconfigured value, or may be indicated by the seventh indication information. Examples are not listed one by one herein.

The quantity Q of selected ports, the quantity Z of frequency domain basis vectors, and the quantity X of angle-delay pair coefficients each may be a maximum average quantity corresponding to the plurality of port groups, a maximum total quantity corresponding to the plurality of port groups, or a quantity corresponding to each port group, where Q, Z, and X are all positive integers.

It should be understood that the plurality of port groups may be all port groups corresponding to a coordinating set, may be port groups corresponding to all TRPs in the coordinating set, or may be port groups corresponding to a plurality of precoding submatrices determined by the fifth indication information. The plurality of port groups include the first port group and the second port group.

For example, when the quantity Q of ports is the maximum average quantity of ports selected from the plurality of port groups, $Q1+Q2\leq 2Q$; or when Q is the maximum total quantity of ports selected from the plurality of port groups, $Q1+Q2\leq Q$.

If the fifth indication information indicates information about n precoding submatrices, when the quantity Q of ports is a maximum average quantity of ports selected from the n port groups, $\sum_{i=1}^{n} Qi \leq nQ$; or when the quantity Q of ports is a maximum total quantity of ports selected from the n port groups, $\sum_{i=1}^{n} Qi \leq Q$, where Qi is a quantity of ports selected from an $i^{th}$ port group.

When the quantity Z of frequency domain basis vectors is the maximum average quantity of frequency domain basis vectors corresponding to the plurality of port groups, $Z1+Z2\leq 2Z$; or when Z is the maximum total quantity of frequency domain basis vectors corresponding to the plurality of port groups, $Z1+Z2\leq Z$.

If the fifth indication information indicates information about n precoding submatrices, when the quantity Z of frequency domain basis vectors is a maximum average quantity of frequency domain basis vectors corresponding to n port groups, $\sum_{i=1}^{n} Zi \leq nZ$, where $1\leq i\leq n$; or when the quantity Z of frequency domain basis vectors is a maximum total quantity of frequency domain basis vectors corresponding to the n port groups, $\sum_{i=1}^{n} Zi \leq Z$, where Zi is a quantity of frequency domain basis vectors corresponding to an $i^{th}$ port group.

When the quantity X of angle-delay pair coefficients is the maximum average quantity of angle-delay pair coefficients corresponding to the plurality of port groups, $X1+X2\leq 2X$; or when X is the maximum total quantity of angle-delay pair coefficients corresponding to the plurality of port groups, $X1+X2\leq X$.

If the fifth indication information indicates information about n precoding submatrices, when the quantity X of angle-delay pair coefficients is a maximum average quantity of angle-delay pair coefficients corresponding to the n port groups, $\sum_{i=1}^{n} Xi \leq nX$, where $1\leq i\leq n$; or when the quantity X of angle-delay pair coefficients is a maximum total quantity of angle-delay pair coefficients corresponding to the n port groups, $\sum_{i=1}^{n} Xi \leq X$, where Xi is a quantity of angle-delay pair coefficients corresponding to an $i^{th}$ port group.

It should be understood that when the plurality of (two or more) port groups use a same group of frequency domain basis vectors, for example, the first port group and the second port group share the same group of frequency domain basis vectors (for example, the Z1 frequency domain basis vectors), the quantity Z of frequency domain basis vectors may be the value of Z1.

If the seventh indication information indicates the quantities of spatial domain basis vectors corresponding to the different port groups, for example, the seventh indication information indicates the values of Q1 and Q2, the values of Q1 and Q2 do not need to be reported in the sixth indication information. Reporting (for example, reporting in the sixth indication information) and indication (for example, indicating by the second apparatus by using the seventh indication information) of the quantities of frequency domain basis vectors and angle-delay pair coefficients are similar. Examples are not listed one by one herein.

Step S502: The second apparatus sends eighth indication information to the first apparatus. The eighth indication information indicates a quantity of bits in a bitmap, and the quantity of bits in the bitmap indicates a maximum quantity of bits occupied by an angle-delay pair coefficient bitmap corresponding to at least one precoding submatrix included in the precoding matrix. Correspondingly, the first apparatus receives the eighth indication information.

It should be understood that the first apparatus may determine, under constraints of the maximum average quantities or the maximum total quantities of ports, frequency domain basis vectors, and angle-delay pair coefficients, quantities of selected ports, frequency domain basis vectors, and angle-delay pair coefficients that correspond to each port group. The quantities of ports and frequency domain basis vectors of each port group may determine a quantity of bits occupied by an angle-delay pair coefficient bitmap corresponding to the port group. Alternatively, the first apparatus may determine, based on the eighth indication information, the maximum quantity of bits occupied by the reported angle-delay pair coefficient bitmap. The maximum quantity of bits may limit quantities that are of frequency domain basis vectors and ports selected from each port group and that are reported by the first apparatus.

In a possible implementation, the first apparatus may determine, based on the eighth indication information, a maximum quantity of bits occupied by at least one of a first angle-delay pair coefficient bitmap and a second angle-delay pair coefficient bitmap. The first angle-delay pair coefficient bitmap indicates to select the X1 angle-delay pair coefficients from the Y1 angle-delay pair coefficients (where X1 and Y1 may be equal or may not be equal). The second angle-delay pair coefficient bitmap indicates to select the X2 angle-delay pair coefficients from the Y2 (or Y3) angle-delay pair coefficients (where X2 and Y2 may be equal or may not be equal, and X2 and Y3 may be equal or may not be equal). A quantity of bits occupied by the first angle-delay pair coefficient bitmap may be the same as or different from a quantity of bits occupied by the second angle-delay pair coefficient bitmap.

For example, if the second apparatus configures the maximum total quantity Q of selected ports, the maximum total quantity Z of frequency domain basis vectors, the maximum total quantity X of angle-delay pair coefficients, and a maximum quantity B of bits occupied by the angle-delay pair coefficient bitmap, Q1+Q2≤Q, Z1+Z2≤Z, and X1+X2≤X. Assuming that the quantity of bits occupied by the first angle-delay pair coefficient bitmap is B1, the quantity of bits occupied by the second angle-delay pair coefficient bitmap is B2, B1=Z1*Q1, and B2=Z2*Q2, B1+B2≤B.

If the fifth indication information indicates the information about the n precoding submatrices, and the second apparatus configures the maximum total quantity Q of ports, the maximum total quantity Z of frequency domain basis vectors, the maximum total quantity X of angle-delay pairs coefficients, and the maximum quantity B of bits occupied by the angle-delay pair coefficient bitmap, $\sum_{i=1}^{n} Qi \leq Q$, $\sum_{i=1}^{n} Zi \leq Z$, $\sum_{i=1}^{n} Xi \leq X$, and $\sum_{i=1}^{n} Bi \leq B$, where Bi is a quantity of bits occupied by an angle-delay pair coefficient bitmap corresponding to the $i^{th}$ port group.

Alternatively, if the second apparatus configures the maximum average quantity Z of frequency domain basis vectors, the maximum total quantity Q of selected ports, and the maximum total quantity X of angle-delay pair coefficients, Q1+Q2≤Q and X1+X2≤X. In this case, a maximum quantity of bits occupied by the first angle-delay pair coefficient bitmap and the second angle-delay pair coefficient bitmap is Z*Q, and no additional indication is needed in the eighth indication information.

If the fifth indication information indicates the information about the n precoding submatrices, and the second apparatus configures the maximum average quantity Z of frequency domain basis vectors, the maximum total quantity Q of ports, and the maximum total quantity X of angle-delay pair coefficients, $\sum_{i=1}^{n} Qi \leq Q$ and $\sum_{i=1}^{n} Xi \leq X$. In this case, a maximum quantity of bits occupied by n angle-delay pairs coefficient bitmaps corresponding to the n port groups is ZQ, and no additional indication is needed in the eighth indication information.

Alternatively, if the second apparatus configures the quantities of ports selected from the port groups as Q1 and Q2, the quantities of frequency domain basis vectors of the port groups as Z1 and Z2, and the maximum total quantity X of angle-delay pairs coefficients, X1+X2≤X. In this case, a maximum quantity of bits occupied by the first angle-delay pair coefficient bitmap and the second angle-delay pair coefficient bitmap is Z1*Q1+Z2*Q2, and no additional indication is needed in the eighth indication information.

If the fifth indication information indicates the information about the n precoding submatrices, and the second apparatus configures quantities of ports in the port groups as Q1, Q2, ..., and Qn, quantities of frequency domain basis vectors of the port groups as Z1, Z2, ..., and Zn, and the maximum total quantity X of angle-delay pair coefficients,

$$\sum_{i=1}^{n} Xi \leq X$$ . In this case, a maximum quantity of bits occupied by n angle-delay pair coefficient bitmaps corresponding to the n port groups is $\sum_{i=1}^{n} QiZi$, and no additional indication is needed in the eighth indication information.

Alternatively, there is another case in which the eighth indication information does not need to indicate the maximum quantity of bits occupied by the angle-delay pair coefficient bitmap. Examples are not listed one by one herein.

It should be understood that, when the quantity of angle-delay pair coefficients of the port groups is the maximum total quantity, the quantity may be a total quantity of angle-delay pair coefficients corresponding to all the transport layers/all the receive ports, or may be a sum of a quantity of angle-delay pairs coefficients corresponding to each transport layer/each receive port. Alternatively, when the quantity of angle-delay pair coefficients of the port groups is the maximum average quantity, the quantity may be a maximum average quantity of angle-delay pair coefficients corresponding to all transport layers/all receive ports, or may be a maximum average quantity of angle-delay pair coefficients corresponding to each transport layer/each receive port. This may be specifically predefined in a protocol. This is not limited in this application.

For example, in an implementation in which a feedback is provided for each receive port, it may be predefined in the protocol that the quantity of angle-delay pair coefficients of each receive port is X, or the total quantity of angle-delay pair coefficients of all receive ports is X. In an implementation in which a feedback is provided for each transport layer, assuming that there are four transport layers, it may be predefined in the protocol that a total quantity of angle-delay pair coefficients of the four transport layers is 2X, and a quantity of angle-delay pair coefficients of each transport layer does not exceed X.

The seventh indication information in step S501 and the eighth indication information in step S502 may be carried in a same message, or may be separately carried in different messages. This is not limited in this application. If the seventh indication information and the eighth indication information are carried in the same message, the seventh indication information and the eighth indication information may be used as sub-message blocks of the message. If the seventh indication information and the eighth indication information are carried in the different messages, a sequence of step S501 and step S502 is not limited in this application.

For example, a message that may carry the seventh indication information and the eighth indication information includes, but is not limited to, RRC signaling, a MAC CE, or DCI.

Based on the method for jointly feeding back channel information in FIG. 7, a channel energy difference between the stations in the multi-station coordination scenario can be fully utilized, and the quantity of ports selected in each polarization direction, the quantity of frequency domain basis vectors, and the quantity of angle-delay pair coefficients can be jointly allocated. In addition, the first apparatus jointly feeds back the ports selected in each polarization direction, the frequency domain basis vectors, and the angle-delay pair coefficients that correspond to the plurality of port groups, to tilt the feedback overheads to a port group with good channel quality, so that overall feedback precision of the channel information can be improved, and coherent joint transmission is enabled in the multi-station coordination scenario.

FIG. 10 is a schematic flowchart of another feedback method for indicating channel measurement according to an embodiment of this application. The method 600 shown in FIG. 10 includes the following steps.

Step S610: A second apparatus sends seventh indication information to a first apparatus. The seventh indication information indicates at least one of the following: a quantity of ports, a quantity of frequency domain basis vectors, and a quantity of angle-delay pair coefficients. The quantity of ports, the quantity of frequency domain basis vectors, and the quantity of angle-delay pair coefficients correspond to at least two port groups. Correspondingly, the first apparatus receives the seventh indication information.

Optionally, the method 600 further includes the following steps.

Step S620: The second apparatus sends eighth indication information to the first apparatus. The eighth indication information indicates a quantity of bits in a bitmap. The quantity of bits in the bitmap indicates a maximum quantity of bits occupied by an angle-delay pair coefficient bitmap corresponding to at least one precoding submatrix included in a precoding matrix.

It should be understood that the first apparatus may independently determine, under constraints of maximum average quantities or maximum total quantities (which may be preconfigured or predefined, or may be indicated by the second apparatus) of ports, frequency domain basis vectors, and angle-delay pair coefficients, quantities of selected ports, frequency domain basis vectors, and angle-delay pair coefficients that correspond to each port group. The quantities of ports and frequency domain basis vectors of each port group may determine a quantity of bits occupied by an angle-delay pair coefficient bitmap corresponding to the port group.

Alternatively, the first apparatus may determine, based on the eighth indication information, the maximum quantity of bits occupied by the reported angle-delay pair coefficient bitmap. The maximum quantity of bits may limit quantities that are of frequency domain basis vectors and ports selected from each port group and that are reported by the first apparatus.

For example, the first apparatus may determine, based on the eighth indication information, a maximum quantity of bits occupied by at least one of a first angle-delay pair coefficient bitmap and a second angle-delay pair coefficient bitmap. The first angle-delay pair coefficient bitmap indicates to select X1 angle-delay pair coefficients from Y1 angle-delay pair coefficients (where X1 and Y1 may be equal or may not be equal). The second angle-delay pair coefficient bitmap indicates to select X2 angle-delay pair coefficients from Y2 (or Y3) angle-delay pair coefficients (where X2 and Y2 may be equal or may not be equal, and X2 and Y3 may be equal or may not be equal).

The seventh indication information in step S610 and the eighth indication information in step S620 may be carried in a same message, or may be separately carried in different messages. This is not limited in this application. If the seventh indication information and the eighth indication information are carried in the same message, the seventh indication information and the eighth indication information may be used as sub-message blocks of the message. If the seventh indication information and the eighth indication information are carried in the different messages, a sequence of step S610 and step S620 is not limited in this application.

For example, a message that may carry the seventh indication information and the eighth indication information includes, but is not limited to, RRC signaling, a MAC CE, or DCI.

Step S630: The first apparatus determines fifth indication information.

For example, the first apparatus determines the fifth indication information based on the seventh indication information.

For example, the first apparatus determines the fifth indication information based on the seventh indication information and the eighth indication information.

For example, the first apparatus determines information corresponding to two port groups.

In a possible implementation, the fifth indication information includes fifth information. The fifth information indicates Q1 first ports in a first port group, Q2 second ports in a second port group, X1 angle-delay pair coefficients, and X2 angle-delay pair coefficients. The Q1 first ports and the X1 angle-delay pair coefficients are used to determine a first precoding submatrix corresponding to the first port group. The Q2 second ports and the X2 angle-delay pair coefficients are used to determine a second precoding submatrix corresponding to the second port group. One angle-delay pair coefficient corresponds to one angle-delay pair, and one angle-delay pair includes one angle vector and one delay vector. A precoded reference signal of the first port group or the second port group is obtained by precoding a reference signal based on an angle-delay pair. P1, P2, Q1, Q2, X1, and X2 are all positive integers, $Q1 \leq P1$, and $Q2 \leq P2$.

For example, for each port group, when a quantity $Z_i$ of frequency domain basis vectors is configured to 1, corresponding $W_{i,f}$ is a frequency domain basis vector whose elements are all 1, and the fifth indication information does not indicate a frequency domain basis vector corresponding to the port group.

Optionally, the fifth information further indicates Z1 frequency domain basis vectors. The Q1 first ports, the Z1 frequency domain basis vectors, and the X1 angle-delay pair coefficients are used to determine the first precoding submatrix. The Q2 second ports, the Z1 frequency domain basis vectors (or Z2 frequency domain basis vectors whose elements are all 1, that is, Z2 is configured to 1), and the X2 angle-delay pair coefficients are used to determine the second precoding submatrix. Z1 is a positive integer greater than or equal to 2.

For example, the X1 angle-delay pair coefficients are all angle-delay pair coefficients in Y1 angle-delay pair coefficients, and the Y1 angle-delay pair coefficients correspond to the Z1 frequency domain basis vectors and the Q1 first ports: X1=Y1=Z1*Q1. The X2 angle-delay pair coefficients are all angle-delay pair coefficients in Y2 angle-delay pair coefficients, and the Y2 angle-delay pair coefficients correspond to the Z1 frequency domain basis vectors and the Q2 second ports: X2=Y2=Z1*Q2, or the Y2 angle-delay pair coefficients correspond to Z2 frequency domain basis vectors and the Q2 second ports and a value of Z2 is 1: X2=Y2=Z2*Q2=Q2.

It should be understood that, in this example, the Y1 angle-delay pair coefficients are all angle-delay pair coefficients corresponding to the Q1 first ports and the Z1 frequency domain basis vectors, and the Y2 angle-delay pair coefficients are all angle-delay pair coefficients corresponding to the Q2 second ports and the Z1 frequency domain basis vectors (or the Z2 frequency domain basis vectors, where Z2=1).

For example, the X1 angle-delay pair coefficients are a part of the Y1 angle-delay pair coefficients, and the Y1 angle-delay pair coefficients correspond to the Q1 first ports and the Z1 frequency domain basis vectors, where X1<Y1 and Y1=Q1*Z1. The X2 angle-delay pair coefficients are a part of the Y2 angle-delay pair coefficients, and the Y2 angle-delay pair coefficients correspond to the Q2 second ports and the Z1 frequency domain basis vectors (or Z2 frequency domain basis vectors, where Z2=1), where X2<Y2 and Y2=Q2*Z1 (or Y2=Q2*Z2=Q2).

It should be understood that, in this example, a quantity of all the angle-delay pair coefficients corresponding to the Q1 first ports and the Z1 frequency domain basis vectors is Y1, and the X1 angle-delay pair coefficients are the part of the Y1 angle-delay pair coefficients. A quantity of all the angle-delay pair coefficients corresponding to the Q2 second ports and the Z1 frequency domain basis vectors (or Z2 frequency domain basis vectors, where Z2=1) is Y2, and the X2 angle-delay pair coefficients are the part of the Y2 angle-delay pair coefficients.

It should be further understood that, in the foregoing example, same frequency domain basis vectors, namely, the Z1 frequency domain basis vectors, are used to determine the first precoding submatrix and the second precoding submatrix, where $Z1 \geq 2$. Q1 and Q2 may be equal or may not be equal, and X1 and X2 may be equal or may not be equal.

This is not limited in this application.

Optionally, the fifth information further indicates Z1 frequency domain basis vectors and Z2 frequency domain basis vectors. The Q1 first ports, the Z1 frequency domain basis vectors, and the X1 angle-delay pair coefficients are used to determine the first precoding submatrix. The Q2 second ports, the Z2 frequency domain basis vectors, and the X2 angle-delay pair coefficients are used to determine the second precoding submatrix. Z1 and Z2 are both positive integers greater than or equal to 2.

For example, the X1 angle-delay pair coefficients are all angle-delay pair coefficients in Y1 angle-delay pair coefficients, and the Y1 angle-delay pair coefficients correspond to the Z1 frequency domain basis vectors and the Q1 first ports: X1=Y1=Z1*Q1. The X2 angle-delay pair coefficients are all angle-delay pair coefficients in Y3 angle-delay pair coefficients, and the Y3 angle-delay pair coefficients correspond to the Z2 frequency domain basis vectors and the Q2 second ports: X2=Y3=Z2*Q2.

It should be understood that, in this example, the Y1 angle-delay pair coefficients are all angle-delay pair coefficients corresponding to the Q1 first ports and the Z1 frequency domain basis vectors, and the Y3 angle-delay pair coefficients are all angle-delay pair coefficients corresponding to the Q2 second ports and the Z2 frequency domain basis vectors.

For example, the X1 angle-delay pair coefficients are a part of Y1 angle-delay pair coefficients, and the Y1 angle-delay pair coefficients correspond to the Q1 first ports and the Z1 frequency domain basis vectors, where X1<Y1 and Y1=Q1*Z1. The X2 angle-delay pair coefficients are a part of Y3 angle-delay pair coefficients, and the Y3 angle-delay pair coefficients correspond to the Q2 second ports and the Z2 frequency domain basis vectors, where X2<Y3 and Y3=Q2*Z2.

It should be understood that, in this example, a quantity of all the angle-delay pair coefficients corresponding to the Q1 first ports and the Z1 frequency domain basis vectors is Y1, and the X1 angle-delay pair coefficients are the part of the Y1 angle-delay pair coefficients. A quantity of all the angle-delay pair coefficients corresponding to the Q2 second ports and the Z2 frequency domain basis vectors is Y3, and the X2 angle-delay pair coefficients are the part of the Y3 angle-delay pair coefficients.

It should be further understood that, in the foregoing example, Q1 and Q2 may be equal or may not be equal, X1 and X2 may be equal or may not be equal, and Z1 and Z2 may be equal or may not be equal. This is not limited in this application.

The quantity Q of ports, the quantity Z of frequency domain basis vectors, and the quantity X of angle-delay pair coefficients, that are indicated by the seventh indication information, each may be a maximum average quantity corresponding to the plurality of port groups, a maximum total quantity corresponding to the plurality of port groups, or a quantity corresponding to each port group, where Q, Z, and X are all positive integers.

It should be understood that the plurality of port groups may be all port groups corresponding to a coordinating set, may be port groups corresponding to all TRPs in the coordinating set, or may be port groups corresponding to a plurality of precoding submatrices determined by the fifth indication information. The plurality of port groups include the first port group and the second port group.

For example, when the quantity Q of ports that is indicated by the seventh indication information is the maximum average quantity of ports selected from the plurality of port groups, Q1+Q2≤2Q; or when Q is the maximum total quantity of ports selected from the plurality of port groups, Q1+Q2≤Q.

When the quantity Z of frequency domain basis vectors that is indicated by the seventh indication information is the maximum average quantity of frequency domain basis vectors corresponding to the plurality of port groups, Z1+Z2≤2Z; or when Z is the maximum total quantity of frequency domain basis vectors corresponding to the plurality of port groups, Z1+Z2≤Z.

When the quantity X of angle-delay pairs that is indicated by the seventh indication information is the maximum average quantity of angle-delay pair coefficients corresponding to the plurality of port groups, X1+X2≤2X; or when X is the maximum total quantity of angle-delay pair coefficients corresponding to the plurality of port groups, X1+X2≤X.

It should be understood that when the plurality of (two or more) port groups use a same group of frequency domain basis vectors, for example, the first port group and the second port group share the same group of frequency domain basis vectors (for example, the Z1 frequency domain basis vectors), the quantity Z of frequency domain basis vectors may be the value of Z1.

For descriptions of implementation details of the method 600 (for example, specific content included in the fifth information and conditions that need to be met by the ports, the frequency domain basis vectors, and the angle-delay pair coefficients that correspond to the port groups when the fifth indication information determined by the first apparatus may be used to determine the plurality of precoding submatrices), refer to descriptions of related steps in the method 500. Details are not described again.

In the method 600, the second apparatus may jointly allocate the quantities of ports selected in each polarization direction, frequency domain basis vectors, and angle-delay pair coefficients that correspond to each port group, to reduce signaling overheads for allocating an indication.

The dashed-line steps in the foregoing flowcharts are optional steps, and a sequence of the steps is determined based on internal logic of the method. The sequence numbers shown in the foregoing flowcharts are merely examples, and do not limit a sequence of the steps in this application.

It should be further understood that the methods provided in embodiments of this application may be separately used, or may be used in combination. This is not limited in this application. Various implementations provided in embodiments of this application may be separately used, or may be used in combination. This is not limited in this application.

It should be understood that the term "and/or" in this application describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one (piece)" means one or more (pieces), and "at least two (pieces)" and "a plurality of (pieces)" mean two or more (pieces). "At least one (piece) of the following" or a similar expression thereof means any combination of these items, including a singular (piece) or any combination of plural (pieces). For example, at least one (piece) of a, b, or c may represent: a, b, c, a-b, a-c, b-c, or a-b-c, where a, b, and c may be singular or plural.

It should be noted that the execution body shown in FIG. 3/6/7/10 is merely an example, and the execution body may be a chip, a chip system, or a processor that supports the execution body in implementing the method shown in FIG. 3/6/7/10. This is not limited in this application.

The foregoing describes the method embodiments in embodiments of this application with reference to the accompanying drawings. The following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the first apparatus may alternatively be implemented by a part (for example, a chip or a circuit) that can be used in the first apparatus, and methods and operations implemented by the second apparatus may alternatively be implemented by a part (for example, a chip or a circuit) that can be used in the second apparatus.

The foregoing mainly describes the solutions provided in embodiments of this application from a perspective of interaction between network elements. It may be understood that, to implement the foregoing functions, the network elements such as a transmit-end device or a receive-end device include corresponding hardware structures and/or software modules for performing functions. A person skilled in the art should be able to be aware that, in combination with units and algorithm steps of the examples described in embodiments disclosed in this specification, this application can be implemented by hardware or a combination of the hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the transmit-end device or the receive-end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

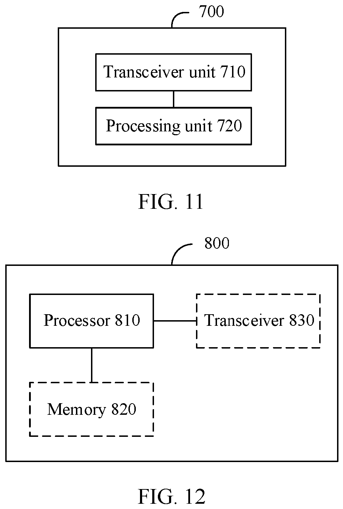

FIG. 11 is a schematic block diagram of a communication apparatus according to an embodiment of this application. The communication apparatus 700 shown in FIG. 11 includes a transceiver unit 710 and a processing unit 720. The transceiver unit 710 may communicate with the outside, and the processing unit 720 is configured to process data. The transceiver unit 710 may also be referred to as a communication interface or a communication unit.

Optionally, the communication apparatus 700 may further include a storage unit. The storage unit may be configured to store instructions and/or data. The processing unit 720 may read the instructions and/or the data in the storage unit.

In a design, the communication apparatus 700 may be configured to perform actions performed by the first apparatus in the foregoing method embodiment (method 300, 400, 500, or 600).

Optionally, the transceiver unit 710 may include a sending unit and a receiving unit. The sending unit is configured to perform a sending operation in the foregoing method embodiment. The receiving unit is configured to perform a receiving operation in the foregoing method embodiment.

It should be noted that the communication apparatus 700 may include the sending unit, but does not include the receiving unit. Alternatively, the communication apparatus 700 may include the receiving unit, but does not include the sending unit. This may be specifically determined based on whether the foregoing solution performed by the communication apparatus 700 includes the sending action and the receiving action.

Optionally, the communication apparatus 700 may be the first apparatus. The transceiver unit 710 is configured to perform a receiving or sending operation of the first apparatus in the foregoing method embodiment. The processing unit 720 is configured to perform an internal processing operation of the first apparatus in the foregoing method embodiment.

Optionally, the communication apparatus 700 may be a device including the first apparatus. Alternatively, the communication apparatus 700 may be a part configured in the first apparatus, for example, a chip in the first apparatus. In this case, the transceiver unit 710 may be an interface circuit, a pin, or the like. Specifically, the interface circuit may include an input circuit and an output circuit, and the processing unit 720 may include a processing circuit.

In a possible implementation, the transceiver unit 710 is configured to perform an operation in step S320. Optionally, the transceiver unit 710 is further configured to perform at least one of operations in steps S301, S302, and S321. The processing unit 720 is configured to perform an operation in step S310.

In another possible implementation, the transceiver unit 710 is configured to perform an operation in step S410. Optionally, the transceiver unit 710 is further configured to perform an operation in step S420. The processing unit 720 is configured to perform an operation in step S430.

In still another possible implementation, the transceiver unit 710 is configured to perform an operation in step S520. Optionally, the transceiver unit 710 is further configured to perform at least one of operations in steps S501, S502, and S521. The processing unit 720 is configured to perform an operation in step S510.

In yet another possible implementation, the transceiver unit 710 is configured to perform an operation in step S610. Optionally, the transceiver unit 710 is further configured to perform an operation in step S620. The processing unit 720 is configured to perform an operation in step S630.

For specific operations and implementations in the foregoing steps performed by the transceiver unit 710 and the processing unit 720, refer to the descriptions of the operations performed by the first apparatus in the foregoing method 300, 400, 500, or 600. Details are not described herein again.

In another design, the communication apparatus 700 shown in FIG. 11 may be configured to perform actions performed by the second apparatus in the foregoing method embodiment (method 300, 400, 500, or 600).

Optionally, the communication apparatus 700 may be the second apparatus. The transceiver unit 710 is configured to perform a receiving or sending operation of the second apparatus in the foregoing method embodiment. The processing unit 720 is configured to perform an internal processing operation of the second apparatus in the foregoing method embodiment.

Optionally, the communication apparatus 700 may be a device including the second apparatus. Alternatively, the communication apparatus 700 may be a part configured in the second apparatus, for example, a chip in the second apparatus. In this case, the transceiver unit 710 may be an interface circuit, a pin, or the like. Specifically, the interface circuit may include an input circuit and an output circuit, and the processing unit 720 may include a processing circuit.

In a possible implementation, the transceiver unit 710 performs an operation in step S320. Optionally, the transceiver unit 710 is further configured to perform at least one of operations in steps S301, S302, and S321. The processing unit 720 is configured to perform an operation in step S330.

In another possible implementation, the transceiver unit 710 is configured to perform an operation in step S410. Optionally, the transceiver unit 710 is further configured to perform an operation in step S420.

In still another possible implementation, the transceiver unit 710 is configured to perform an operation in step S520. Optionally, the transceiver unit 710 is further configured to perform at least one of operations in steps S501, S502, and S521. The processing unit 720 is configured to perform an operation in step S530.

In yet another possible implementation, the transceiver unit 710 is configured to perform an operation in step S610. Optionally, the transceiver unit 710 is further configured to perform an operation in step S620.

For specific operations and implementations in the foregoing steps performed by the transceiver unit 710 and the processing unit 720, refer to the descriptions of the operations performed by the second apparatus in the foregoing method 300, 400, 500, or 600. Details are not described herein again.

As shown in FIG. 12, an embodiment of this application further provides a communication apparatus 800. The communication apparatus 800 includes a processor 810. The processor 810 is coupled to a memory 820. The memory 820 is configured to store a computer program or instructions and/or data. The processor 810 is configured to execute the computer program or the instructions and/or the data stored in the memory 820, so that the method in the foregoing method embodiment is performed.

Optionally, the communication apparatus 800 includes one or more processors 810.

Optionally, as shown in FIG. 12, the communication apparatus 800 may further include the memory 820.

Optionally, the communication apparatus 800 may include one or more memories 820.

Optionally, the memory 820 and the processor 810 may be integrated together, or may be disposed separately.

Optionally, as shown in FIG. 12, the communication apparatus 800 may further include a transceiver 830 and/or a communication interface. The transceiver 830 and/or the communication interface are/is configured to receive and/or send a signal. For example, the processor 810 is configured to control the transceiver 830 and/or the communication interface to receive the signal and/or send the signal.

Optionally, a component for implementing a receiving function in the transceiver 830 may be considered as a receiving module, and a component for implementing a sending function in the transceiver 830 may be considered as a sending module. In other words, the transceiver 830 includes a receiver and a sender. The transceiver may also be sometimes referred to as a transceiver machine, a transceiver module, a transceiver circuit, or the like. The receiver may also be sometimes referred to as a receiving machine, a receiving module, a receiving circuit, or the like. The sender may also be sometimes referred to as a transmitting machine, a transmitter, a transmitting module, a transmitting circuit, or the like.

In a solution, the communication apparatus 800 is configured to perform operations performed by the first apparatus in the foregoing method embodiments. For example, the processor 810 is configured to implement an operation (for example, an operation in step S310, S430, S510, or S630) performed inside the first apparatus in the foregoing method embodiment, and the transceiver 830 is configured to implement a receiving or sending operation (for example, an operation in step S301, S302, S320, S321, S410, S420, S501, S502, S520, S521, S610, or S620) performed by the first apparatus in the foregoing method embodiment.

In another solution, the communication apparatus 800 is configured to perform operations performed by the second apparatus in the foregoing method embodiments. For example, the processor 810 is configured to implement an operation (for example, an operation in step S330 or S530) performed inside the second apparatus in the foregoing method embodiment, and the transceiver 830 is configured to implement a receiving or sending operation (for example, an operation in step S301, S302, S320, S321, S410, S420, S501, S502, S520, S521, S610, or S620) performed by the second apparatus in the foregoing method embodiment.

An embodiment of this application further provides a communication apparatus 900. The communication apparatus 900 may be a first apparatus or may be a chip. The communication apparatus 900 may be configured to perform operations performed by the first apparatus in the foregoing method embodiment (method 300, 400, 500, or 600).

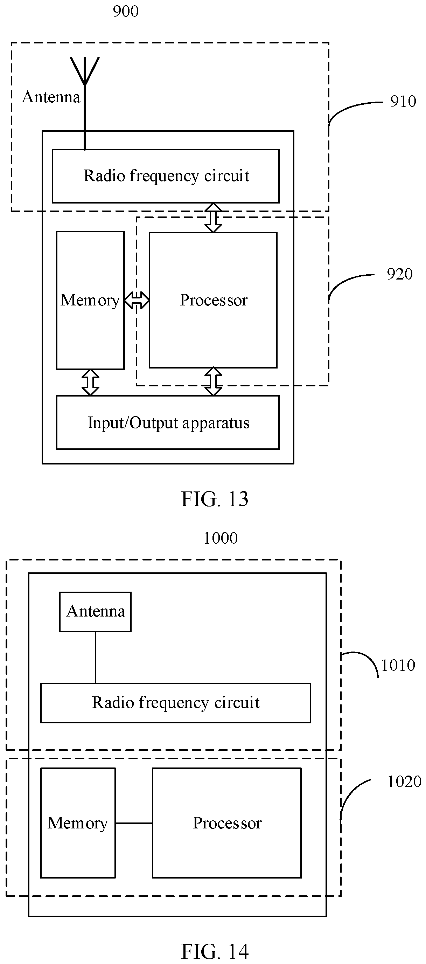

When the communication apparatus 900 is the first apparatus, FIG. 13 is a simplified diagram of a structure of the first apparatus. As shown in FIG. 13, the first apparatus includes a processor, a memory, a radio frequency circuit, an antenna, and an input/output apparatus. The processor is mainly configured to: process a communication protocol and communication data, and control the first apparatus to execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user. It should be noted that some types of first apparatuses may not have the input/output apparatus.

When needing to send data, after performing baseband processing on the to-be-sent data, the processor outputs a baseband signal to the radio frequency circuit; and the radio frequency circuit performs radio frequency processing on the baseband signal and sends the radio frequency signal to the outside in a form of an electromagnetic wave through the antenna. When data is sent to the first apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 13 shows only one memory and one processor. In an actual product of the first apparatus, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the first apparatus, and the processor having a processing function may be considered as a processing unit of the first apparatus.

As shown in FIG. 13, the first apparatus includes a transceiver unit 910 and a processing unit 920. The transceiver unit 910 may also be referred to as a transceiver, a transceiver machine, a transceiver apparatus, a transceiver circuit, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The receiving unit may also be sometimes referred to as a receiving machine, a receiver, a receiving apparatus, a receiving circuit, or the like. The sending unit may also be sometimes referred to as a transmitting machine, a transmitter, a transmitting apparatus, a transmitting circuit, or the like.

For example, in an implementation, the processing unit 920 is configured to perform a processing operation on the first apparatus side in the method 300/400/500/600. For example, the processing unit 920 is configured to perform a processing step in step S310, S430, S510, or S630. The transceiver unit 910 is configured to perform a receiving or sending action on the first apparatus side in the method 300/400/500/600. For example, the transceiver unit 910 is configured to perform a receiving or sending operation in step S301, S302, S320, S321, S410, S420, S501, S502, S520, S521, S610, or S620.

It should be understood that FIG. 13 is merely an example rather than a limitation. The foregoing first apparatus including the transceiver unit and the processing unit may not depend on the structure shown in FIG. 13.

When the communication apparatus 900 is the chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1000. The communication apparatus 1000 may be a second apparatus or may be a chip. The communication apparatus 1000 may be configured to perform operations performed by the second apparatus in the foregoing method embodiments.

When the communication apparatus 1000 is the second apparatus (for example, a satellite base station), FIG. 14 is a simplified diagram of a structure of the second apparatus. The second apparatus includes a part 1010 and a part 1020. The part 1010 includes an antenna and a radio frequency circuit. The antenna is mainly configured to receive and send a radio frequency signal, and the radio frequency circuit is mainly configured to perform conversion between a radio frequency signal and a baseband signal. The part 1020 includes a memory and a processor, and is mainly configured to perform baseband processing, control the second apparatus, and the like. The part 1010 may be usually referred to as a transceiver unit, a transceiver machine, a transceiver circuit, a transceiver, or the like. The part 1020 is usually a control center of the second apparatus, may be usually referred to as a processing unit, and is configured to control the second apparatus to perform a processing operation on the second apparatus side in the foregoing method embodiment.

Optionally, a component that is in the part 1010 and that is configured to implement a receiving function may be considered as a receiving unit, and a component that is in the part 1010 and that is configured to implement a sending function may be considered as a sending unit. In other words, the part 1010 includes the receiving unit and the sending unit. The receiving unit may also be referred to as a receiving machine, a receiver, a receiving circuit, or the like. The sending unit may be referred to as a transmitter machine, a transmitter, a transmitting circuit, or the like.

When needing to send data, after performing baseband processing on the to-be-sent data, the processor outputs a baseband signal to the radio frequency circuit; and the radio frequency circuit performs radio frequency processing on the baseband signal and sends the radio frequency signal to the outside in a form of an electromagnetic wave through the antenna. When data is sent to the second apparatus, the radio frequency circuit receives a radio frequency signal through the antenna, converts the radio frequency signal into a baseband signal, and outputs the baseband signal to the processor. The processor converts the baseband signal into data, and processes the data.

The part 1020 may include one or more boards, and each board may include one or more processors and one or more memories. For ease of description, FIG. 14 shows only one memory and one processor. The processor is configured to read and execute a program in the memory to implement a baseband processing function and control the second apparatus. If there are a plurality of boards, the boards may be interconnected with each other, to enhance a processing capability. In an optional implementation, the plurality of boards may share one or more processors, or the plurality of boards share one or more memories.

For example, in an implementation, the processing unit in the part 1020 is configured to perform a processing operation in step S330 or S530 in the method 300/400/500/600, and the transceiver unit in the part 1010 is configured to perform a receiving or sending operation in step S301, S302, S320, S321, S410, S420, S501, S502, S520, S521, S610, or S620 in the method 300/400/500/600.

It should be understood that FIG. 14 is merely an example rather than a limitation. The foregoing second apparatus including the transceiver unit and the processing unit may not depend on the structure shown in FIG. 14.

When the communication apparatus 1000 is the chip, the chip includes a transceiver unit and a processing unit. The transceiver unit may be an input/output circuit or a communication interface. The processing unit is a processor, a microprocessor, or an integrated circuit integrated on the chip.

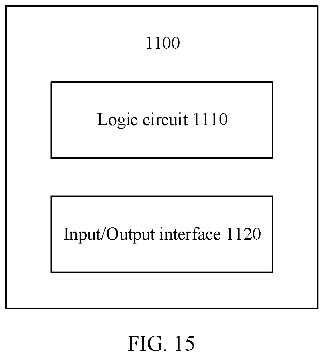

As shown in FIG. 15, an embodiment of this application further provides a communication apparatus 1100. The communication apparatus 1100 includes a logic circuit 1110 and an input/output interface (input/output interface) 1120.

The logic circuit 1110 may be a processing circuit in the communication apparatus 1100. The logic circuit 1110 may be coupled and connected to a storage unit, and invoke instructions in the storage unit, so that the communication apparatus 1100 can implement the method and function in embodiments of this application. The input/output interface 1120 may be an input/output circuit in the communication apparatus 1100, and outputs information processed by the communication apparatus 1100, or inputs to-be-processed data or signaling information into the communication apparatus 1100 for processing.

In a solution, the communication apparatus 1100 is configured to perform operations performed by the first apparatus in the foregoing method embodiments.

For example, the logic circuit 1110 is configured to implement a processing-related operation performed by the first apparatus in the foregoing method embodiment, for example, a processing operation in step S310, S430, S510, or S630 in FIG. 3/6/7/10. For the processing-related operation performed by the first apparatus in the shown embodiment, the input/output interface 1120 is configured to implement a sending-related operation and/or a receiving-related operation performed by the first apparatus in the foregoing method embodiment, for example, a sending-related operation and/or a receiving-related operation in step S301, S302, S320, S321, S410, S420, S501, S502, S520, S521, S610, or S620 in FIG. 3/6/7/10. For specific operations performed by the logic circuit 1110, refer to the foregoing descriptions of the processing unit 720. For operations performed by the input/output interface 1120, refer to the foregoing descriptions of the transceiver unit 710. Details are not described herein again.

In another solution, the communication apparatus 1100 is configured to perform operations performed by the second apparatus in the foregoing method embodiments.

For example, the logic circuit 1110 is configured to implement a processing-related operation performed by the second apparatus in the foregoing method embodiment, for example, a processing-related operation in step S330 or S530 in FIG. 3/6/7/10. The input/output interface 1120 is configured to implement a sending-related operation and/or a receiving-related operation performed by the second apparatus in the foregoing method embodiment, for example, a sending-related operation and/or a receiving-related operation in step S301, S302, S320, S321, S410, S420, S501, S502, S520, S521, S610, or S620 in FIG. 3/6/7/10. For specific operations performed by the logic circuit 1110, refer to the foregoing descriptions of the processing unit 820. For operations performed by the input/output interface 1120, refer to the foregoing descriptions of the transceiver unit 810. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system on a chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing method can be implemented by using a hardware integrated logical circuit in the processor, or by using instructions in a form of software. The steps in the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware assembly. The processor may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but not limited to these memories and any memory of another appropriate type.

According to the method provided in embodiments of this application, this application further provides a computer-readable medium. The computer-readable medium stores program code. When the program code is run on a computer, the computer is enabled to perform the method in the embodiment shown in FIG. 3 to FIG. 6. For example, when a computer program is executed by a computer, the computer is enabled to implement the method performed by the first apparatus or the method performed by the second apparatus in the foregoing method embodiment.

An embodiment of this application further provides a computer program product including instructions. When the instructions are executed by a computer, the computer is enabled to implement the method performed by the first apparatus or the method performed by the second apparatus in the foregoing method embodiment.

For explanations and beneficial effects of related content in any communication apparatus provided above, refer to the foregoing corresponding method embodiment. Details are not described herein again.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disk, SSD)), or the like.

The second apparatus and the first apparatus in the foregoing apparatus embodiments correspond to the second apparatus and the first apparatus in the method embodiments. A corresponding module or unit performs a corresponding step. For example, the communication unit (the transceiver) performs a receiving step or a sending step in the method embodiments, and the processing unit (the processor) may perform a step other than the sending step and the receiving step. For a function of a specific unit, refer to a corresponding method embodiment. There may be one or more processors.

Terms such as "part", "module", and "system" used in this specification are used to indicate computer-related entities, hardware, firmware, combinations of the hardware and software, the software, or software being executed. For example, the part may be, but is not limited to, a process that runs on a processor, a processor, an object, an executable file, an execution thread, a program, and/or a computer. As illustrated by using figures, both a computing device and an application that runs on the computing device may be parts. One or more parts may reside within a process and/or a thread of execution, and a part may be located on one computer and/or distributed between two or more computers. In addition, these parts may be executed from various computer-readable media that store various data structures. For example, the parts may communicate by using a local and/or remote process and based on, for example, a signal having one or more data packets (for example, data from two parts interacting with another part in a local system, a distributed system, and/or across a network such as the Internet interacting with other systems by using the signal).

A person of ordinary skill in the art may be aware that, in combination with units and algorithm steps of the examples described in embodiments disclosed in this specification, this application can be implemented by electronic hardware or a combination of the electronic hardware and computer software. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. The displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel state information feedback method, comprising:

   generating, by a first apparatus, first indication information, wherein the first indication information indicates a precoding matrix, the precoding matrix comprises a first precoding submatrix and a second precoding submatrix, the first precoding submatrix corresponds to a first port group, and the second precoding submatrix corresponds to a second port group; and
   sending, by the first apparatus, the first indication information.

2. The method according to claim 1, wherein the first indication information comprises first information, the first information indicates L1 spatial domain basis vectors, M1 frequency domain basis vectors, T1 linear combination coefficients, L2 spatial domain basis vectors, and T2 linear combination coefficients, one linear combination coefficient corresponds to one spatial domain basis vector and one frequency domain basis vector, the L1 spatial domain basis vectors, the M1 frequency domain basis vectors, and the T1 linear combination coefficients are used to determine the first precoding submatrix, and the L2 spatial domain basis vectors, the M1 frequency domain basis vectors, and the T2 linear combination coefficients are used to determine the second precoding submatrix, wherein L1, M1, T1, L2, and T2 are all positive integers.

3. The method according to claim 1, wherein the first indication information comprises second information, the second information indicates L1 spatial domain basis vectors, M1 frequency domain basis vectors, T1 linear combination coefficients, L2 spatial domain basis vectors, M2 frequency domain basis vectors, and T2 linear combination coefficients, one linear combination coefficient corresponds to one spatial domain basis vector and one frequency domain basis vector, the L1 spatial domain basis vectors, the M1 frequency domain basis vectors, and the T1 linear combination coefficients are used to determine the first precoding submatrix, and the L2 spatial domain basis vectors, the M2 frequency domain basis vectors, and the T2 linear combination coefficients are used to determine the second precoding submatrix, wherein L1, M1, T1, L2, M2, and T2 are all positive integers.

4. The method according to claim 2, wherein the T1 linear combination coefficients are linear combination coefficients in K1 linear combination coefficients, T1 is less than or equal to K1, the K1 linear combination coefficients correspond to the L1 spatial domain basis vectors and the M1 frequency domain basis vectors, and K1=2L1*M1; and
   the T2 linear combination coefficients are linear combination coefficients in K2 linear combination coefficients, T2 is less than or equal to K2, the K2 linear combination coefficients correspond to the L2 spatial domain basis vectors and the M1 frequency domain basis vectors, and

$$K2=2L2*M1$$

5. The method according to claim 3, wherein the T1 linear combination coefficients are linear combination coefficients in K1 linear combination coefficients, T1 is less than or equal to K1, the K1 linear combination coefficients correspond to the L1 spatial domain basis vectors and the M1 frequency domain basis vectors, and K1=2L1*M1; and
the T2 linear combination coefficients are linear combination coefficients in K3 linear combination coefficients, T2 is less than or equal to K3, the K3 linear combination coefficients correspond to the L2 spatial domain basis vectors and the M2 frequency domain basis vectors, and

$$K3=2L2*M2$$

6.  The method according to any one of claims 2 to 5, wherein the method further comprises:
    sending, by the first apparatus, second indication information, wherein the second indication information indicates at least one of the following:
    values of L1, L2, M1, T1, and T2.

7.  The method according to any one of claims 2 to 6, wherein before the sending, by the first apparatus, second indication information, the method further comprises:
    receiving, by the first apparatus, third indication information, wherein the third indication information indicates at least one of the following:

    a quantity L of spatial domain basis vectors;
    a quantity M of frequency domain basis vectors;
    a quantity T of linear combination coefficients; and
    a quantity L1 of the spatial domain basis vectors corresponding to the first port group and a quantity L2 of the spatial domain basis vectors corresponding to the second port group, wherein
    L, M, T, L1, and L2 are all positive integers.

8.  The method according to claim 7, wherein the method further comprises:
    receiving, by the first apparatus, fourth indication information, wherein the fourth indication information indicates a quantity of bits in a bitmap, and the quantity of bits in the bitmap indicates a maximum quantity of bits occupied by a linear combination coefficient bitmap corresponding to at least one precoding submatrix comprised in the precoding matrix.

9.  The method according to claim 7 or 8, wherein L is a maximum average quantity or a maximum total quantity of spatial domain basis vectors corresponding to a plurality of port groups, and the plurality of port groups comprise the first port group and the second port group; and when L is the maximum average quantity, L1+L2≤2L; or when L is the maximum total quantity, L1+L2≤L;

    M is a maximum average quantity or a maximum total quantity of frequency domain basis vectors corresponding to the plurality of port groups; and when M is the maximum average quantity, M1+M2≤2M; or when M is the maximum total quantity, M1+M2≤M; and
    T is a maximum average quantity or a maximum total quantity of linear combination coefficients corresponding to the plurality of port groups; and when T is the maximum average quantity, T1+T2≤2T; or when T is the maximum total quantity, T1+T2≤T.

10. The method according to any one of claims 2 to 9, wherein the first indication information comprises third information indicating the T1 linear combination coefficients and the T2 linear combination coefficients, the third information comprises amplitude information, the amplitude information comprises information indicating differential amplitude coefficients, the differential amplitude coefficients comprise a reference differential amplitude coefficient and a first differential amplitude coefficient, the reference differential amplitude coefficient is a relative value of a reference amplitude coefficient in each polarization direction of each port group relative to a strongest reference amplitude coefficient, the reference amplitude coefficient is a strongest amplitude coefficient in amplitude coefficients in one polarization direction of a port group, and the first differential amplitude coefficient is a relative value of an amplitude coefficient in each polarization direction of each port group relative to the reference amplitude coefficient.

11. The method according to any one of claims 2 to 9, wherein the first indication information comprises fourth information indicating the T1 linear combination coefficients and the T2 linear combination coefficients, the fourth information comprises amplitude information, the amplitude information comprises information indicating differential amplitude coefficients, the differential amplitude coefficients comprise a first reference differential amplitude coefficient, a second reference differential amplitude coefficient, and a second differential amplitude coefficient, the first reference differential amplitude coefficient is a relative value of a first reference amplitude coefficient in all polarization directions of each port group relative to a strongest first reference amplitude coefficient, the first reference amplitude coefficient is a strongest amplitude coefficient in amplitude coefficients in all polarization directions of a port group, the second reference differential amplitude coefficient is a relative value of a second reference amplitude coefficient in each polarization direction of each port group relative to the first reference amplitude coefficient, the second reference amplitude coefficient is a strongest amplitude coefficient in amplitude coefficients in one polarization direction of a port group, and the second differential amplitude coefficient is a relative value of an amplitude coefficient in each polarization direction of each port group relative to the second reference amplitude coefficient.

12. A channel state information feedback method, comprising:

    receiving, by a second apparatus, first indication information, wherein the first indication information indicates a precoding matrix, the precoding matrix comprises a first precoding submatrix and a second precoding submatrix, the first precoding submatrix corresponds to a first port group, and the second precoding submatrix corresponds to a second port group; and
    determining, by the second apparatus, the precoding matrix based on the first indication information.

13. The method according to claim 12, wherein the first indication information comprises first information, the first information indicates L1 spatial domain basis vectors, M1 frequency domain basis vectors, T1 linear combination coefficients, L2 spatial domain basis vectors, and T2 linear combination coefficients, one linear combination coefficient corresponds to one spatial domain basis vector and one frequency domain basis vector, the L1 spatial domain basis vectors, the M1 frequency domain basis vectors, and the T1 linear combination coefficients are used to determine the first precoding submatrix, and the L2 spatial domain basis vectors, the M1 frequency domain basis vectors, and the T2 linear combination coefficients are used to determine the second precoding submatrix, wherein L1, M1, T1, L2, and T2 are all positive integers.

14. The method according to claim 12, wherein the first indication information comprises second information, the second information indicates L1 spatial domain basis vectors, M1 frequency domain basis vectors, T1 linear combination coefficients, L2 spatial domain basis vectors, M2 frequency domain basis vectors, and T2 linear combination coefficients, one linear combination coefficient corresponds to one spatial domain basis vector and one frequency domain basis vector, the L1 spatial domain basis vectors, the M1 frequency domain basis vectors, and the T1 linear combination coefficients are used to determine the first precoding submatrix, and the L2 spatial domain basis vectors, the M2 frequency domain basis vectors, and the T2 linear combination coefficients are used to determine the second precoding submatrix, wherein L1, M1, T1, L2, M2, and T2 are all positive integers.

15. The method according to claim 13, wherein the T1 linear combination coefficients are linear combination coefficients in K1 linear combination coefficients, T1 is less than or equal to K1, the K1 linear combination coefficients correspond to the L1 spatial domain basis vectors and the M1 frequency domain basis vectors, and K1=2L1*M1; and
    the T2 linear combination coefficients are linear combination coefficients in K2 linear combination coefficients, T2 is less than or equal to K2, the K2 linear combination coefficients correspond to the L2 spatial domain basis vectors and the M1 frequency domain basis vectors, and K2=2L2*M1.

16. The method according to claim 14, wherein the T1 linear combination coefficients are linear combination coefficients in K1 linear combination coefficients, T1 is less than or equal to K1, the K1 linear combination coefficients correspond to the L1 spatial domain basis vectors and the M1 frequency domain basis vectors, and K1=2L1*M1; and
    the T2 linear combination coefficients are linear combination coefficients in K3 linear combination coefficients, T2 is less than or equal to K3, the K3 linear combination coefficients correspond to the L2 spatial domain basis vectors and the M2 frequency domain basis vectors, and K3=2L2*M2.

17. The method according to any one of claims 13 to 16, wherein the method further comprises:
receiving, by the second apparatus, second indication information, wherein the second indication information indicates at least one of the following:
values of L1, L2, M1, T1, and T2.

18. The method according to any one of claims 13 to 17, wherein before the receiving, by the second apparatus, second indication information, the method further comprises:
sending, by the second apparatus, third indication information, wherein the third indication information indicates at least one of the following:

> a quantity L of spatial domain basis vectors;
> a quantity M of frequency domain basis vectors;
> a quantity T of linear combination coefficients; and
> a quantity L1 of the spatial domain basis vectors corresponding to the first port group and a quantity L2 of the spatial domain basis vectors corresponding to the second port group, wherein
> L, M, T, L1, and L2 are all positive integers.

**19.** The method according to claim 18, wherein the method further comprises:
sending, by the second apparatus, fourth indication information, wherein the fourth indication information indicates a quantity of bits in a bitmap, and the quantity of bits in the bitmap indicates a maximum quantity of bits occupied by a linear combination coefficient bitmap corresponding to at least one precoding submatrix comprised in the precoding matrix.

**20.** The method according to claim 18 or 19, wherein L is a maximum average quantity or a maximum total quantity of spatial domain basis vectors corresponding to a plurality of port groups, and the plurality of port groups comprise the first port group and the second port group; and when L is the maximum average quantity, $L1+L2 \leq 2L$; or when L is the maximum total quantity, $L1+L2 \leq L$;

> M is a maximum average quantity or a maximum total quantity of frequency domain basis vectors corresponding to the plurality of port groups; and when M is the maximum average quantity, $M1+M2 \leq 2M$; or when M is the maximum total quantity, $M1+M2 \leq M$; and
> T is a maximum average quantity or a maximum total quantity of linear combination coefficients corresponding to the plurality of port groups; and when T is the maximum average quantity, $T1+T2 \leq 2T$; or when T is the maximum total quantity, $T1+T2 \leq T$.

**21.** The method according to any one of claims 13 to 20, wherein the first indication information comprises third information indicating the T1 linear combination coefficients and the T2 linear combination coefficients, the third information comprises amplitude information, the amplitude information comprises information indicating differential amplitude coefficients, the differential amplitude coefficients comprise a reference differential amplitude coefficient and a first differential amplitude coefficient, the reference differential amplitude coefficient is a relative value of a reference amplitude coefficient in each polarization direction of each port group relative to a strongest reference amplitude coefficient, the reference amplitude coefficient is a strongest amplitude coefficient in amplitude coefficients in one polarization direction of a port group, and the first differential amplitude coefficient is a relative value of an amplitude coefficient in each polarization direction of each port group relative to the reference amplitude coefficient.

**22.** The method according to any one of claims 13 to 20, wherein the first indication information comprises fourth information indicating the T1 linear combination coefficients and the T2 linear combination coefficients, the fourth information comprises amplitude information, the amplitude information comprises information indicating differential amplitude coefficients, the differential amplitude coefficients comprise a first reference differential amplitude coefficient, a second reference differential amplitude coefficient, and a second differential amplitude coefficient, the first reference differential amplitude coefficient is a relative value of a first reference amplitude coefficient in all polarization directions of each port group relative to a strongest first reference amplitude coefficient, the first reference amplitude coefficient is a strongest amplitude coefficient in amplitude coefficients in all polarization directions of a port group, the second reference differential amplitude coefficient is a relative value of a second reference amplitude coefficient in each polarization direction of each port group relative to the first reference amplitude coefficient, the second reference amplitude coefficient is a strongest amplitude coefficient in amplitude coefficients in one polarization direction of a port group, and the second differential amplitude coefficient is a relative value of an amplitude coefficient in each polarization direction of each port group relative to the second reference amplitude coefficient.

**23.** A channel state information feedback method, comprising:

> generating, by a first apparatus, fifth indication information, wherein the fifth indication information is determined based on received precoded reference signals of port groups, the port groups comprise a first port group and a second port group, the first port group comprises P1 first ports, and the second port group comprises P2 second ports, wherein
> the fifth indication information comprises fifth information, the fifth information indicates Q1 first ports in the first port group, Q2 second ports in the second port group, X1 angle-delay pair coefficients, and X2 angle-delay pair coefficients, the Q1 first ports and the X1 angle-delay pair coefficients are used to determine a first precoding submatrix corresponding to the first port group, and the Q2 second ports and the X2 angle-delay pair coefficients are used to determine a second precoding submatrix corresponding to the second port group, wherein one angle-delay pair coefficient corresponds to one angle-delay pair, one angle-delay pair comprises one angle vector and one delay vector, a precoded reference signal of the first port group or the second port group is obtained by precoding a reference signal based on an angle-delay pair, P1, P2, Q1, Q2, X1, and X2 are all positive integers, $Q1 \leq P1$, and $Q2 \leq P2$; and

sending, by the first apparatus, the fifth indication information.

24. The method according to claim 23, wherein the fifth information further indicates Z1 frequency domain basis vectors, the Q1 first ports, the Z1 frequency domain basis vectors, and the X1 angle-delay pair coefficients are used to determine the first precoding submatrix, and the Q2 second ports, the Z1 frequency domain basis vectors, and the X2 angle-delay pair coefficients are used to determine the second precoding submatrix, wherein Z1 is a positive integer.

25. The method according to claim 23, wherein the fifth information further indicates Z1 frequency domain basis vectors and Z2 frequency domain basis vectors, the Q1 first ports, the Z1 frequency domain basis vectors, and the X1 angle-delay pair coefficients are used to determine the first precoding submatrix, and the Q2 second ports, the Z2 frequency domain basis vectors, and the X2 angle-delay pair coefficients are used to determine the second precoding submatrix, wherein Z1 and Z2 are both positive integers.

26. The method according to claim 24, wherein the X1 angle-delay pair coefficients are angle-delay pair coefficients in Y1 angle-delay pair coefficients, X1 is less than or equal to Y1, the Y1 angle-delay pair coefficients correspond to the Q1 first ports and the Z1 frequency domain basis vectors, and $Y1 = Q1 * Z1$; and

the X2 angle-delay pair coefficients are angle-delay pair coefficients in Y2 angle-delay pair coefficients, X2 is less than or equal to Y2, the Y2 angle-delay pair coefficients correspond to the Q2 second ports and the Z1 frequency domain basis vectors, and $Y2 = Q2 * Z1$.

27. The method according to claim 25, wherein the X1 angle-delay pair coefficients are angle-delay pair coefficients in Y1 angle-delay pair coefficients, X1 is less than or equal to Y1, the Y1 angle-delay pair coefficients correspond to the Q1 first ports and the Z1 frequency domain basis vectors, and $Y1 = Q1 * Z1$; and

the X2 angle-delay pair coefficients are angle-delay pair coefficients in Y3 angle-delay pair coefficients, X2 is less than or equal to Y3, the Y3 angle-delay pair coefficients correspond to the Q2 second ports and the Z2 frequency domain basis vectors, and $Y3 = Q2 * Z2$.

28. The method according to any one of claims 23 to 27, wherein the method further comprises:
sending, by the first apparatus, sixth indication information, wherein the sixth indication information indicates at least one of the following:
values of Q1, Q2, X1, and X2.

29. The method according to any one of claims 24 to 28, wherein before the sending, by the first apparatus, sixth indication information, the method further comprises:
receiving, by the first apparatus, seventh indication information, wherein the seventh indication information indicates at least one of the following:

a quantity Q of ports, wherein the ports comprise at least one of the first ports and the second ports;
a quantity Z of frequency domain basis vectors;
a quantity X of angle-delay pair coefficients; and
a quantity Q1 of the ports selected from the first port group and a quantity Q2 of the ports selected from the second port group, wherein
Q, Z, X, Q1, and Q2 are all positive integers.

30. The method according to claim 29, wherein the method further comprises:
receiving, by the first apparatus, eighth indication information, wherein the eighth indication information indicates a quantity of bits in a bitmap, and the quantity of bits in the bitmap indicates a maximum quantity of bits occupied by an angle-delay pair coefficient bitmap corresponding to at least one precoding submatrix comprised in a precoding matrix.

31. The method according to claim 29 or 30, wherein Q is a maximum average quantity or a maximum total quantity of ports selected from a plurality of port groups, and the plurality of port groups comprise the first port group and the second port group; and when Q is the maximum average quantity, $Q1+Q2\leq 2Q$; or when Q is the maximum total quantity, $Q1+Q2\leq Q$;

Z is a maximum average quantity or a maximum total quantity of frequency domain basis vectors corresponding to the plurality of port groups; and when Z is the maximum average quantity, $Z1+Z2\leq 2Z$; or when Z is the maximum total quantity, $Z1+Z2\leq Z$; and

X is a maximum average quantity or a maximum total quantity of angle-delay pair coefficients corresponding to the plurality of port groups; and when X is the maximum average quantity, $X1+X2\leq 2X$; or when X is the maximum total quantity, $X1+X2\leq X$.

32. The method according to any one of claims 23 to 31, wherein the fifth indication information comprises sixth information indicating the X1 angle-delay pair coefficients and the X2 angle-delay pair coefficients, the sixth information comprises amplitude information, the amplitude information comprises information indicating differential amplitude coefficients, the differential amplitude coefficients comprise a reference differential amplitude coefficient and a first differential amplitude coefficient, the reference differential amplitude coefficient is a relative value of a reference amplitude coefficient in each polarization direction of each port group relative to a strongest reference amplitude coefficient, the reference amplitude coefficient is a strongest amplitude coefficient in amplitude coefficients in one polarization direction of a port group, and the first differential amplitude coefficient is a difference of an amplitude coefficient in each polarization direction of each port group relative to the reference amplitude coefficient.

33. The method according to any one of claims 23 to 31, wherein the fifth indication information comprises seventh information indicating the X1 angle-delay pair coefficients and the X2 angle-delay pair coefficients, the seventh information comprises amplitude information, the amplitude information comprises information indicating differential amplitude coefficients, the differential amplitude coefficients comprise a first reference differential amplitude coefficient, a second reference differential amplitude coefficient, and a second differential amplitude coefficient, the first reference differential amplitude coefficient is a relative value of a first reference amplitude coefficient in all polarization directions of each port group relative to a strongest first reference amplitude coefficient, the first reference amplitude coefficient is a strongest amplitude coefficient in amplitude coefficients in all polarization directions of a port group, the second reference differential amplitude coefficient is a relative value of a second reference amplitude coefficient in each polarization direction of each port group relative to the first reference amplitude coefficient, the second reference amplitude coefficient is a strongest amplitude coefficient in amplitude coefficients in one polarization direction of a port group, and the second differential amplitude coefficient is a relative value of an amplitude coefficient in each polarization direction of each port group relative to the second reference amplitude coefficient.

34. A channel state information feedback method, comprising:

receiving, by a second apparatus, fifth indication information, wherein the fifth indication information comprises fifth information, and the fifth information indicates Q1 first ports in a first port group, Q2 second ports in a second port group, X1 angle-delay pair coefficients, and X2 angle-delay pair coefficients, wherein one angle-delay pair coefficient corresponds to one angle-delay pair, one angle-delay pair comprises one angle vector and one delay vector, a precoded reference signal of the first port group or the second port group is obtained by precoding a reference signal based on an angle-delay pair, the first port group comprises P1 first ports, the second port group comprises P2 second ports, P1, P2, Q1, Q2, X1, and X2 are all positive integers, $Q1\leq P1$, and $Q2\leq P2$; and

determining, by the second apparatus with reference to the Q1 first ports and the X1 angle-delay pair coefficients, a first precoding submatrix corresponding to the first port group, and determining, with reference to the Q2 second ports and the X2 angle-delay pair coefficients, a second precoding submatrix corresponding to the second port group.

35. The method according to claim 34, wherein the fifth information further indicates Z1 frequency domain basis vectors, the Q1 first ports, the Z1 frequency domain basis vectors, and the X1 angle-delay pair coefficients are used to determine the first precoding submatrix, and the Q2 second ports, the Z1 frequency domain basis vectors, and the X2 angle-delay pair coefficients are used to determine the second precoding submatrix, wherein Z1 is a positive integer.

36. The method according to claim 34, wherein the fifth information further indicates Z1 frequency domain basis vectors and Z2 frequency domain basis vectors, the Q1 first ports, the Z1 frequency domain basis vectors, and the X1 angle-delay pair coefficients are used to determine the first precoding submatrix, and the Q2 second ports, the Z2 frequency domain basis vectors, and the X2 angle-delay pair coefficients are used to determine the second precoding submatrix, wherein Z1 and Z2 are both positive integers.

37. The method according to claim 35, wherein the X1 angle-delay pair coefficients are angle-delay pair coefficients in Y1 angle-delay pair coefficients, X1 is less than or equal to Y1, the Y1 angle-delay pair coefficients correspond to the Q1 first ports and the Z1 frequency domain basis vectors, and $Y1 = Q1 * Z1$; and

the X2 angle-delay pair coefficients are angle-delay pair coefficients in Y2 angle-delay pair coefficients, X2 is less than or equal to Y2, the Y2 angle-delay pair coefficients correspond to the Q2 second ports and the Z1 frequency domain basis vectors, and $Y2 = Q2 * Z2$.

38. The method according to claim 36, wherein the X1 angle-delay pair coefficients are angle-delay pair coefficients in Y1 angle-delay pair coefficients, X1 is less than or equal to Y1, the Y1 angle-delay pair coefficients correspond to the Q1 first ports and the Z1 frequency domain basis vectors, and $Y1 = Q1 * Z1$; and

the X2 angle-delay pair coefficients are angle-delay pair coefficients in Y3 angle-delay pair coefficients, X2 is less than or equal to Y3, the Y3 angle-delay pair coefficients correspond to the Q2 second ports and the Z2 frequency domain basis vectors, and $Y3 = Q2 * Z2$.

39. The method according to any one of claims 34 to 38, wherein the method further comprises:
receiving, by the second apparatus, sixth indication information, wherein the sixth indication information indicates at least one of the following:
values of Q1, Q2, X1, and X2.

40. The method according to any one of claims 34 to 39, wherein before the receiving, by the second apparatus, sixth indication information, the method further comprises:
sending, by the second apparatus, seventh indication information, wherein the seventh indication information indicates at least one of the following:

a quantity Q of ports, wherein the ports comprise at least one of the first ports and the second ports;
a quantity Z of frequency domain basis vectors;
a quantity X of angle-delay pair coefficients; and
a quantity Q1 of the ports selected from the first port group and a quantity Q2 of the ports selected from the second port group, wherein
Q, Z, X, Q1, and Q2 are all positive integers.

41. The method according to claim 40, wherein the method further comprises:
sending, by the second apparatus, eighth indication information, wherein the eighth indication information indicates a quantity of bits in a bitmap, and the quantity of bits in the bitmap indicates a maximum quantity of bits occupied by an angle-delay pair coefficient bitmap corresponding to at least one precoding submatrix comprised in a precoding matrix.

42. The method according to claim 40 or 41, wherein Q is a maximum average quantity or a maximum total quantity of ports selected from a plurality of port groups, and the plurality of port groups comprise the first port group and the second port group; and when Q is the maximum average quantity, $Q1+Q2 \leq 2Q$; or when Q is the maximum total quantity, $Q1+Q2 \leq Q$;

Z is a maximum average quantity or a maximum total quantity of frequency domain basis vectors corresponding to the plurality of port groups; and when Z is the maximum average quantity, $Z1+Z2 \leq 2Z$; or when Z is the maximum total quantity, $Z1+Z2 \leq Z$; and
X is a maximum average quantity or a maximum total quantity of angle-delay pair coefficients corresponding to the plurality of port groups; and when X is the maximum average quantity, $X1+X2 \leq 2X$; or when X is the maximum total quantity, $X1+X2 \leq X$.

43. The method according to any one of claims 34 to 42, wherein the fifth indication information comprises sixth information indicating the X1 angle-delay pair coefficients and the X2 angle-delay pair coefficients, the sixth information comprises amplitude information, the amplitude information comprises information indicating differential amplitude coefficients, the differential amplitude coefficients comprise a reference differential amplitude coefficient and a first differential amplitude coefficient, the reference differential amplitude coefficient is a relative value of a reference amplitude coefficient in each polarization direction of each port group relative to a strongest reference amplitude coefficient, the reference amplitude coefficient is a strongest amplitude coefficient in amplitude coefficients in one polarization direction of a port group, and the first differential amplitude coefficient is a relative value of an amplitude coefficient in each polarization direction of each port group relative to the reference amplitude coefficient.

44. The method according to any one of claims 34 to 42, wherein the fifth indication information comprises seventh information indicating the X1 angle-delay pair coefficients and the X2 angle-delay pair coefficients, the seventh information comprises amplitude information, the amplitude information comprises information indicating differential amplitude coefficients, the differential amplitude coefficients comprise a first reference differential amplitude coefficient, a second reference differential amplitude coefficient, and a second differential amplitude coefficient, the first reference differential amplitude coefficient is a relative value of a first reference amplitude coefficient in all polarization directions of each port group relative to a strongest first reference amplitude coefficient, the first reference amplitude coefficient is a strongest amplitude coefficient in amplitude coefficients in all polarization directions of a port group, the second reference differential amplitude coefficient is a relative value of a second reference amplitude coefficient in each polarization direction of each port group relative to the first reference amplitude coefficient, the second reference amplitude coefficient is a strongest amplitude coefficient in amplitude coefficients in one polarization direction of a port group, and the second differential amplitude coefficient is a difference of an amplitude coefficient in each polarization direction of each port group relative to the second reference amplitude coefficient.

45. A communication apparatus, wherein the apparatus comprises a unit configured to perform each step in the method according to any one of claims 1 to 44.

46. A communication apparatus, wherein the apparatus comprises a processor, the processor is coupled to a memory, and the memory stores instructions; and when the instructions are run by the processor, the processor is enabled to perform the method according to any one of claims 1 to 44.

47. A communication apparatus, wherein the apparatus comprises a logic circuit, wherein the logic circuit is coupled to an input/output interface, and is configured to communicate data through the input/output interface, to perform the method according to any one of claims 1 to 44.

48. A computer-readable storage medium, wherein the computer-readable storage medium is configured to store a computer program, and when the computer program is run on a computer, the computer is enabled to perform the method according to any one of claims 1 to 44.

49. A computer program product, wherein the computer program product comprises computer program code, and when the computer program code is run, the method according to any one of claims 1 to 44 is implemented.

EP 4 478 621 A1

FIG. 1

FIG. 2

74

300

| Second apparatus | | First apparatus |

— — - S301: Third indication information — →

— — · S302: Fourth indication information - →

S310: Generate first indication information

← — S320: First indication information —

← · S321: Second indication information - — -

S330: Determine a precoding matrix based on the first indication information

FIG. 3

Polarization direction 1

Polarization direction 2

First port group

Second port group

■  Reference amplitude coefficient

●  Strongest reference amplitude coefficient

FIG. 4

Polarization
direction 1

Polarization
direction 2

First port
group

Second port
group

■  Second reference amplitude coefficient

●  Strongest first reference amplitude coefficient

▲  First reference amplitude coefficient

FIG. 5

400

| Second apparatus | | First apparatus |

S410: Third indication information

S420: Fourth indication information

S430: Determine first
indication information

FIG. 6

500

| | |
|---|---|
| Second apparatus | First apparatus |

S501: Seventh indication information →

S502: Eighth indication information →

S510: Generate fifth indication information

← S520: Fifth indication information

← S521: Sixth indication information

S530: Determine a precoding matrix with reference to the fifth indication information

FIG. 7

Polarization direction 1

Polarization direction 2

First port group

Second port group

■ Reference amplitude coefficient

● Strongest reference amplitude coefficient

FIG. 8

Polarization
direction 1

Polarization
direction 2

First port
group

Second port
group

■    Second reference amplitude coefficient

●    Strongest first reference amplitude coefficient

▲    First reference amplitude coefficient

FIG. 9

600

| Second apparatus | | First apparatus |
|---|---|---|

S610: Seventh indication information →

S620: Eighth indication information →

S630: Determine fifth
indication information

FIG. 10

700

Transceiver unit 710

Processing unit 720

FIG. 11

800

Processor 810

Transceiver 830

Memory 820

FIG. 12

900

Antenna

Radio frequency circuit

910

Memory

Processor

920

Input/Output apparatus

FIG. 13

1000

Antenna

Radio frequency circuit

1010

Memory

Processor

1020

FIG. 14

1100

Logic circuit 1110

Input/Output interface 1120

FIG. 15

# INTERNATIONAL SEARCH REPORT

| | International application No. |
|---|---|
| | **PCT/CN2023/078647** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT, CNKI, 3GPP, DWPI, VEN: 指示, 预编码, 矩阵, 子矩阵, 端口, 组, 空域, 频域, 线性, 系数, 向量, 幅度, 时延, 延时, 角度, 加权, 信道状态信息, 反馈, 站点,, indication, precoding, matrix, submatrix, port, group, spatial, domain, frequency, linear, coefficient, vector, amplitude, latency, angle, weighting, Channel State Information, feedback, station, CSI, PMI

**C. DOCUMENTS CONSIDERED TO BE RELEVANT**

| Category* | Citation of document, with indication, where appropriate, of the relevant passages | Relevant to claim No. |
|---|---|---|
| Y | CN 110830092 A (HUAWEI TECHNOLOGIES CO., LTD.) 21 February 2020 (2020-02-21) description, paragraphs [0153]-[0520] | 1-22, 45-49 |
| Y | CN 109150256 A (HUAWEI TECHNOLOGIES CO., LTD.) 04 January 2019 (2019-01-04) description, paragraphs [0207]-[0441] | 1-49 |
| Y | CN 111342912 A (HUAWEI TECHNOLOGIES CO., LTD.) 26 June 2020 (2020-06-26) description, paragraphs [0093]-[0591] | 23-49 |
| A | WO 2018024157 A1 (HUAWEI TECHNOLOGIES CO., LTD.) 08 February 2018 (2018-02-08) entire document | 1-49 |
| A | MEDIATEK INC. "CSI enhancement for NCJT" *3GPP TSG RAN WG1 #102-e, R1-2005623*, 28 August 2020 (2020-08-28), entire document | 1-49 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 May 2023** | **24 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| | | INTERNATIONAL SEARCH REPORT | | | International application No. | |
|---|---|---|---|---|---|---|
| | | Information on patent family members | | | **PCT/CN2023/078647** | |

| Patent document cited in search report | | | Publication date (day/month/year) | Patent family member(s) | | | Publication date (day/month/year) |
|---|---|---|---|---|---|---|---|
| CN | 110830092 | A | 21 February 2020 | EP | 3826199 | A1 | 26 May 2021 |
| | | | | US | 2021167835 | A1 | 03 June 2021 |
| | | | | WO | 2020029937 | A1 | 13 February 2020 |
| CN | 109150256 | A | 04 January 2019 | US | 2020119788 | A1 | 16 April 2020 |
| | | | | EP | 3641149 | A1 | 22 April 2020 |
| | | | | CN | 114448477 | A | 06 May 2022 |
| | | | | WO | 2018228599 | A1 | 20 December 2018 |
| CN | 111342912 | A | 26 June 2020 | US | 2023064117 | A1 | 02 March 2023 |
| | | | | WO | 2020125510 | A1 | 25 June 2020 |
| | | | | EP | 3883135 | A1 | 22 September 2021 |
| | | | | US | 2021320694 | A1 | 14 October 2021 |
| | | | | CN | 113489517 | A | 08 October 2021 |
| WO | 2018024157 | A1 | 08 February 2018 | EP | 3484061 | A1 | 15 May 2019 |
| | | | | US | 2019181930 | A1 | 13 June 2019 |
| | | | | CN | 107707285 | A | 16 February 2018 |
| | | | | VN | 63474 | A | 27 May 2019 |

Form PCT/ISA/210 (patent family annex) (July 2022)

**EP 4 478 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210196169